(19) Europäisches Patentamt
European Patent Office
Office européen des brevets

(11) **EP 3 629 501 B1**

(12) **EUROPEAN PATENT SPECIFICATION**

(45) Date of publication and mention
of the grant of the patent:
**02.06.2021 Bulletin 2021/22**

(51) Int Cl.:
***H04J 14/02*** *(2006.01)* ***H04Q 11/00*** *(2006.01)*

(21) Application number: **19189261.1**

(22) Date of filing: **14.10.2011**

(54) **METHOD AND NODE DEVICE FOR ESTABLISHING WAVELENGTH CROSS-CONNECTION**

VERFAHREN UND KNOTENVORRICHTUNG ZUR HERSTELLUNG EINER
WELLENLÄNGENQUERVERBINDUNG

PROCÉDÉ ET DISPOSITIF DE NOEUD PERMETTANT D'ÉTABLIR UNE INTERCONNEXION DE
LONGUEURS D'ONDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.04.2020 Bulletin 2020/14**

(62) Document number(s) of the earlier application(s) in
accordance with Art. 76 EPC:
**16199008.0 / 3 193 470**
**11864770.0 / 2 747 309**

(73) Proprietor: **Huawei Technologies Co., Ltd.**
**Shenzhen, Guangdong 518129 (CN)**

(72) Inventor: **ZI, Xiaobing**
**SHENZHEN, Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(56) References cited:
**WO-A1-00/76105     US-A1- 2009 060 512**

* **SAMBO N ET AL: "A Contention Detection
Scheme for Lightpath Restoration in GMPLS
Networks", IEEE COMMUNICATIONS LETTERS,
IEEE SERVICE CENTER, PISCATAWAY, NJ, US,
vol. 11, no. 10, 1 October 2007 (2007-10-01), pages
820-822, XP011197882, ISSN: 1089-7798, DOI:
10.1109/LCOMM.2007.070647**

## Description

### TECHNICAL FIELD

The present invention relates to a network communications technology, and in particular, to a method, system, and node device for establishing a wavelength cross-connection.

### BACKGROUND

A wavelength connection in a wavelength division multiplexing (WDM) network is borne by an optical fiber link, and each wavelength connection needs to occupy certain spectrum resources of an optical fiber. Usually, available spectrum resources in the optical fiber are divided into fixed spectrum intervals. Each spectrum interval, used as a wavelength channel, usually bears a wavelength connection, and bandwidths of wavelength connections borne in the same optical fiber are the same. As a result, when wavelength connections are used for hybrid transmission of services requiring different bandwidths, spectrum resources of the optical fiber need to be divided into wavelength channels according to a service requiring a maximum bandwidth, but other services requiring small bandwidths do not require wavelength channels of such a large bandwidth. Therefore, spectrum resources of the optical fiber are wasted, and utilization of spectrum resources of the optical fiber is reduced.

To improve utilization of spectrum resources of the WDM network, spectrum intervals may be divided flexibly according to service requirements, that is, spectrum bandwidths occupied by wavelength connections borne in the same optical fiber may be different.

Currently, a manual configuration needs to be performed on nodes by using a network management system to complete establishment of a wavelength cross-connection of a variable spectrum bandwidth. Therefore, the implementation is complex and the reliability is low.

In the document SAMBO N ET AL, "A Contention Detection Scheme for Lightpath Restoration in GMPLS Networks", IEEE COMMUNICATIONS LETTERS, IEEE SERVICE CENTER, PISCATAWAY, NJ, US, (20071001), vol. 11, no. 10, doi:10.1109/LCOMM.2007.070647, ISSN 1089-7798, pages 820 - 822, XP011197882, a wavelength-routed network is described in which light paths can be dynamically established upon distributed resource reservation. It is further disclosed that each node in the network is an all-optical-cross-connect with a control plane. In each node, the control plane maintains a data base with information on the network topology and on the local wavelength availability. A notify-message is generated upon fault detection to update these databases. A label set object contains the set of available wavelength that can be selected for the light-path.

In the document US 2009/060512 A1 a distributed wavelength conversion control for signalling protocols is described. Therein, a wavelength availability information is obtained that comprises a list of available wavelength at the hops or an intersection of at least some of the available wavelength.

In the document WO 00/76105 A1 discloses a communication system that includes plural nodes interconnected with an optical transmission medium capable of carrying plural bands of optical channels. A device at each node is coupled to the medium for dropping one or more bands, adding one or more bands, and passively transmitting other bands such that a pair of nodes can communicate directly using a band common to the respective bands.

### SUMMARY

Embodiments of the present invention provide a method, system, and node device for establishing a wavelength cross-connection, so as to solve the problem of implementation complexity and low reliability of the prior art.

The present invention is defined by the independent claims. Additional features of the invention are presented in the dependent claims. In the following, parts of the description and drawing referring to embodiments, which are not covered by the claims are not presented as embodiments of the invention, but as examples useful for understanding the invention.

The embodiments of the present invention adopt the following technical solutions:

One aspect of the present invention provides a method for establishing a wavelength cross-connection, including:

determining, by a first node, a spectrum bandwidth of a wavelength connection, and obtaining a first available center frequency set of a first link according to the spectrum bandwidth, where the first link is a link between the first node and a neighboring node in a direction from the first node to a second node;

obtaining, by the first node, first available center frequency set information corresponding to the first available center frequency set and spectrum bandwidth information corresponding to the spectrum bandwidth, and sending a request message carrying the first available center frequency set information and the spectrum bandwidth information to the neighboring node in the direction from the first node to the second node; and

receiving, by the first node, a response message, extracting center frequency information carried in the response message, obtaining a center frequency of the wavelength connection, and establishing a wavelength cross-connection based on a spectrum range determined by the center frequency and the spectrum bandwidth;

where the center frequency is an available center frequency obtained by the second node from a second available center frequency set, and the second available center frequency set is an intersection of available center frequency sets of all links that the wavelength connection passes through.

Another aspect of the present invention provides a method for establishing a wavelength cross-connection, including:

receiving, by a second node, a request message, extracting second available center frequency set information and spectrum bandwidth information that are carried in the request message, and obtaining a second available center frequency set and a spectrum bandwidth, determined by a first node, of a wavelength connection, where the second available center frequency set is an intersection of available center frequency sets of all links that the wavelength connection passes through; and

obtaining, by the second node, an available center frequency from the second available center frequency set as a center frequency of the wavelength connection, and establishing a wavelength cross-connection based on a spectrum range determined by the center frequency and the spectrum bandwidth.

Another aspect of the present invention provides a method for establishing a wavelength cross-connection, including:

receiving, by a third node, a request message, extracting third available center frequency set information and spectrum bandwidth information that are carried in the request message, and obtaining a third available center frequency set and a spectrum bandwidth, determined by a first node, of a wavelength connection, where the third available center frequency set is an intersection of available center frequency sets of all links from the first node to the third node that the wavelength connection passes through;

obtaining, by the third node, an available center frequency set of a second link according to the spectrum bandwidth, intersecting the available center frequency set of the second link and the third available center frequency set to obtain a fourth available center frequency set, and obtaining fourth available center frequency set information corresponding to the fourth available center frequency set, where the second link is a link between the third node and a neighboring node in a direction from the first node to a second node;

sending, by the third node, a request message carrying the fourth available center frequency set information and the spectrum bandwidth information to the neighboring node in the direction from the first node to the second node; and

receiving, by the third node, a response message, extracting center frequency information carried in the response message, obtaining a center frequency of the wavelength connection, and establishing a wavelength cross-connection based on a spectrum range determined by the center frequency and the spectrum bandwidth;

where the center frequency is an available center frequency obtained by the second node from a second available center frequency set, and the second available center frequency set is an intersection of available center frequency sets of all links that the wavelength connection passes through.

Another aspect of the present invention provides a method for establishing a wavelength cross-connection, including:

determining, by a first node, a spectrum bandwidth of a wavelength connection, obtaining first free center frequency set information corresponding to a first free center frequency set of a third link and spectrum bandwidth information corresponding to the spectrum bandwidth, and sending a request message carrying the first free center frequency set information and the spectrum bandwidth information to a neighboring node in a direction from the first node to a second node, where the third link is a link between the first node and the neighboring node in the direction from the first node to the second node; and

receiving, by the first node, a response message, extracting center frequency information carried in the response message, obtaining a center frequency of the wavelength connection, and establishing a wavelength cross-connection based on a spectrum range determined by the center frequency and the spectrum bandwidth;

where the center frequency is an available center frequency obtained by the second node from a second free center frequency set according to the spectrum bandwidth, and the second free center frequency set is an intersection of free center frequency sets of all links that the wavelength connection passes through.

Another aspect of the present invention provides a method for establishing a wavelength cross-connection, including:

receiving, by a second node, a request message, extracting second free center frequency set information and spectrum bandwidth information that are carried in the request message, and obtaining a second free center frequency set and a spectrum bandwidth, determined by a first node, of a wavelength connection, where the second free center frequency set is an intersection of free center frequency sets of all links that the wavelength connection passes through; and

obtaining, by the second node, an available center frequency from the second free center frequency set as a center frequency of the wavelength connection according to the spectrum bandwidth, and establishing a wavelength cross-connection based on a spectrum range determined by the center frequency and the spectrum bandwidth.

Another aspect of the present invention provides a method for establishing a wavelength cross-connection, including:

receiving, by a third node, a request message, extracting third free center frequency set information and spectrum bandwidth information that are carried in the request message, and obtaining a third free center frequency set and a spectrum bandwidth, determined by a first node, of a wavelength connection, where the third free center frequency set is an intersection of free center frequency sets of all links from the first node to the third node that the wavelength connection passes through;

intersecting, by the third node, a free center frequency set of a fourth link and the third free center frequency set to obtain a fourth free center frequency set, and obtaining fourth free center frequency set information corresponding to the fourth free center frequency set, where the fourth link is a link between the third node and a neighboring node in a direction from the first node to a second node;

sending, by the third node, a request message carrying the fourth free center frequency set information and the spectrum bandwidth information to the neighboring node in the direction from the first node to the second node; and

receiving, by the third node, a response message, extracting center frequency information carried in the response message, obtaining a center frequency of the wavelength connection, and establishing a wavelength cross-connection based on a spectrum range determined by the center frequency and the spectrum bandwidth;

where the center frequency is an available center frequency obtained by the second node from a second free center frequency set according to the spectrum bandwidth, and the second free center frequency set is an intersection of free center frequency sets of all links that the wavelength connection passes through.

Another aspect of the present invention provides a method for establishing a wavelength cross-connection, including:

determining, by a first node, a spectrum bandwidth of each segment connection on a wavelength connection, and obtaining a fifth available center frequency set of a fifth link according to a spectrum bandwidth of a segment connection of the first node, where the fifth link is a link between the first node and a neighboring node in a direction from the first node to a second node;

obtaining, by the first node, fifth available center frequency set information corresponding to the fifth available center frequency set and spectrum bandwidth information corresponding to the spectrum bandwidth of each segment connection on the wavelength connection, and sending a request message carrying the fifth available center frequency set information and the spectrum bandwidth information to the neighboring node in the direction from the first node to the second node; and

receiving, by the first node, a response message, extracting first center frequency information carried in the response message, obtaining a center frequency of the segment connection of the first node, and establishing a wavelength cross-connection based on a spectrum range determined by the center frequency and spectrum bandwidth of the segment connection of the first node;

where the center frequency is an available center frequency obtained by a fourth node between the first node and the second node from a sixth available center frequency set, and the sixth available center frequency set is an intersection of available center frequency sets of all links of the segment connection of the first node.

Another aspect of the present invention provides a method for establishing a wavelength cross-connection, including:

receiving, by a second node, a request message, extracting ninth available center frequency set information and spectrum bandwidth information that are carried in the request message, and obtaining a ninth available center frequency set and a spectrum bandwidth, determined by a first node, of a segment connection of the second node, where the ninth available center frequency set is an intersection of available center frequency sets of all links that the segment connection of the second node passes through; and

obtaining, by the second node, an available center frequency from the ninth available center frequency set as a center frequency of the segment connection of the second node, and establishing a wavelength cross-connection based on a spectrum range determined by the center frequency and spectrum bandwidth of the segment connection of the second node.

Another aspect of the present invention provides a method for establishing a wavelength cross-connection, including:

receiving, by a fourth node, a request message, extracting sixth available center frequency set information and first spectrum bandwidth information that are carried in the request message, obtaining a sixth available center frequency set, and obtaining spectrum bandwidths, determined by a first node, of a first-node-side segment connection of the fourth node and each segment connection from the fourth node to a second node, where the sixth available center frequency set is an intersection of available center frequency sets of all links that the first-node-side segment connection of the fourth node passes through;

obtaining, by the fourth node, an available center frequency from the sixth available center frequency set as a center frequency of the first-node-side segment connection of the fourth node;

obtaining, by the fourth node, a seventh available center frequency set of a sixth link according to a spectrum bandwidth of a second-node-side segment connection of the fourth node, where the sixth link is a link between the fourth node and a neighboring node in a direction from the first node to the second node;

obtaining seventh available center frequency set information corresponding to the seventh available center frequency set, obtaining second spectrum bandwidth information corresponding to the spectrum bandwidth of each segment connection from the fourth node to the second node, and sending a request message carrying the seventh available center frequency set information and the second spectrum bandwidth information to the neighboring node in the direction from the first node to the second node; and

receiving, by the fourth node, a response message, extracting second center frequency information carried in the response message, obtaining a center frequency of the second-node-side segment connection of the fourth node, determining a first spectrum range based on the center frequency and spectrum bandwidth of the first-node-side segment connection of the fourth node, determining a second spectrum range based on the center frequency and spectrum bandwidth of the second-node-side segment connection of the fourth node, and establishing a wavelength cross-connection between the first spectrum range and the second spectrum range;

where the center frequency of the second-node-side segment connection of the fourth node is an available center frequency in an eighth available center frequency set, and the eighth available center frequency set is an intersection of available center frequency sets of all links that the second-node-side segment connection of the fourth node passes through.

Another aspect of the present invention provides a method for establishing a wavelength cross-connection, including:

receiving, by a third node, a request message, extracting tenth available center frequency set information and spectrum bandwidth information that are carried in the request message, obtaining a ninth available center frequency set, and obtaining spectrum bandwidths, determined by a first node, of a segment connection of the third node and each segment connection from the third node to a second node, where the ninth available center frequency set is an intersection of available center frequency sets of all links from the first node or a fourth node to the third node that the segment connection of the third node passes through;

obtaining, by the third node, an available center frequency set of a seventh link according to the spectrum bandwidth of the segment connection of the third node, intersecting the available center frequency set of the seventh link and the tenth available center frequency set to obtain an eleventh available center frequency set, and obtaining eleventh available center frequency set information corresponding to the eleventh available center frequency set, where the seventh link is a link between the third node and a neighboring node in a direction from the first node to the second node;

sending, by the third node, a request message carrying the eleventh available center frequency set information and the spectrum bandwidth information to the neighboring node in the direction from the first node to the second node; and

receiving, by the third node, a response message, extracting third center frequency information carried in the response message, obtaining a center frequency of the segment connection of the third node, and establishing a wavelength cross-connection based on a spectrum range determined by the center frequency and spectrum bandwidth of the segment connection of the third node;

where the center frequency is an available center frequency obtained by the fourth node between the third node and the second node or by the second node from the eleventh available center frequency set, and the eleventh available center frequency set is an intersection of available center frequency sets of all links of the segment connection of the third node.

Another aspect of the present invention provides a method for establishing a wavelength cross-connection, including:

determining, by a first node, a spectrum bandwidth of each segment connection on a wavelength connection, obtaining fifth free center frequency set information corresponding to a fifth free center frequency set of an eighth link and spectrum bandwidth information corresponding to the spectrum bandwidth of each segment connection on the wavelength connection, and sending a request message carrying the fifth free center frequency set information and the spectrum bandwidth information to a neighboring node in a direction from the first node to a second node, where the eighth link is a link between the first node and the neighboring node in the direction from the first node to the second node; and

receiving, by the first node, a response message, extracting fifth center frequency information carried in the response message, obtaining a center frequency of the segment connection of the first node, and establishing a wavelength cross-connection based on a spectrum range determined by the center frequency and spectrum bandwidth of the segment connection of the first node;

where the center frequency is an available center frequency obtained by a fourth node between the first node and the second node from a sixth free center frequency set according to the spectrum bandwidth of the segment connection of the first node, and the sixth free center frequency set is an intersection of free center frequency sets of all links that the segment connection of the first node passes through.

Another aspect of the present invention provides a method for establishing a wavelength cross-connection, including:

receiving, by a second node, a request message, extracting ninth free center frequency set information and spectrum bandwidth information that are carried in the request message, obtaining a ninth free center frequency set, and obtaining a spectrum bandwidth, determined by a first node, of a segment connection of the second node, where the ninth free center frequency set is an intersection of free center frequency sets of all links that the segment connection of the second node passes through; and

obtaining, by the second node, an available center frequency from the ninth free center frequency set as a center frequency of the segment connection of the second node according to the spectrum bandwidth of the segment connection of the second node, and establishing a wavelength cross-connection based on a spectrum range determined by the center frequency and spectrum bandwidth of the segment connection of the second node.

Another aspect of the present invention provides a method for establishing a wavelength cross-connection, including:

receiving, by a fourth node, a request message, extracting sixth free center frequency set information and third spectrum bandwidth information that are carried in the request message, obtaining a sixth free center frequency set, and obtaining spectrum bandwidths of a first-node-side segment connection of the fourth node and each segment connection from the fourth node to a second node, where the sixth free center frequency set is an intersection of free center frequency sets of all links that the first-node-side segment connection of the fourth node passes through;

obtaining, by the fourth node, an available center frequency from the sixth free center frequency set as a center frequency of the first-node-side segment connection of the fourth node according to the spectrum bandwidth of the first-node-side segment connection of the fourth node;

obtaining, by the fourth node, seventh free center frequency set information corresponding to a seventh free center frequency set of a ninth link, obtaining fourth spectrum bandwidth information corresponding to the spectrum bandwidth of each segment connection from the fourth node to the second node, and sending a request message carrying the seventh free center frequency set information and the fourth spectrum bandwidth information to a neighboring node in a direction from the first node to the second node, where the ninth link is a link between the fourth node and the neighboring node in the direction from the first node to the second node; and

receiving, by the fourth node, a response message, extracting sixth center frequency information carried in the response message, obtaining a center frequency of a second-node-side segment connection of the fourth node, determining a third spectrum range based on the center frequency and spectrum bandwidth of the first-node-side segment connection of the fourth node, determining a fourth spectrum range based on the center frequency and spectrum bandwidth of the second-node-side segment connection of the fourth node, and establishing a wavelength cross-connection between the third spectrum range and the fourth spectrum range;

where the center frequency of the second-node-side segment connection of the fourth node is an available center frequency in an eighth free center frequency set, and the eighth free center frequency set is an intersection of available center frequency sets of all links that the second-node-side segment connection of the fourth node passes through.

Another aspect of the present invention provides a method for establishing a wavelength cross-connection, including:

receiving, by a third node, a request message, extracting tenth free center frequency set information and spectrum bandwidth information that are carried in the request message, obtaining a tenth free center frequency set, and obtaining spectrum bandwidths, determined by a first node, of a segment connection of the third node and each segment connection from the third node to a second node, where the tenth free center frequency set is an intersection of free center frequency sets of all links from the first node or a fourth node to the third node that the segment connection of the third node passes through;

intersecting, by the third node, a free center frequency set of a tenth link and the tenth free center frequency set to obtain an eleventh free center frequency set, and obtaining eleventh free center frequency set information corresponding to the eleventh free center frequency set, where the tenth link is a link between the third node and a neighboring node in a direction from the first node to the second node;

sending, by the third node, a request message to the neighboring node in the direction from the first node to the second node, where the request message carries the eleventh free center frequency set information and the segment connection of the third node and the spectrum bandwidth information; and

receiving, by the third node, a response message, extracting center frequency information carried in the response message, obtaining a center frequency of the segment connection of the third node, and establishing a wavelength cross-connection based on a spectrum range determined by the center frequency and spectrum bandwidth of the segment connection of the third node;

where the center frequency is an available center frequency obtained by the fourth node between the third node and the second node or by the second node from the eleventh free center frequency set according to the spectrum bandwidth of the segment connection of the third node, and the eleventh free center frequency set is an intersection of free center frequency sets of all links that the segment connection of the third node passes through.

One aspect of the present invention provides a node device, including:

a first processing module, configured to determine a spectrum bandwidth of a wavelength connection, obtain a first available center frequency set of a first link according to the spectrum bandwidth, where the first link is a link between the local node and a neighboring node in a direction from the local node to a second node; further configured to obtain first available center frequency set information corresponding to the first available center frequency set and spectrum bandwidth information corresponding to the spectrum bandwidth; and further configured to obtain a center frequency of the wavelength connection, where the center frequency is an available center frequency obtained by the second node from a second available center frequency set, where the second available center frequency set is an intersection of available center frequency sets of all links that the wavelength connection passes through;

a first sending module, configured to send a request message carrying the first available center frequency set information and the spectrum bandwidth information to the neighboring node in the direction from the local node to the second node;

a first receiving module, configured to receive a response message, and extract center frequency information carried in the response message; and

a first cross-connection establishing module, configured to establish a wavelength cross-connection based on a spectrum range determined by the center frequency and the spectrum bandwidth.

Another aspect of the present invention provides a node device, including:

a second receiving module, configured to receive a request message, and extract second available center frequency set information and spectrum bandwidth information that are carried in the request message, where a second available center frequency set is an intersection of available center frequency sets of all links that a wavelength connection passes through;

a second processing module, configured to obtain the second available center frequency set and a spectrum bandwidth, determined by a first node, of the wavelength connection; and further configured to obtain an available center frequency from the second available center frequency set as a center frequency of the wavelength connection; and a second cross-connection establishing module, configured to establish a wavelength cross-connection based on a spectrum range determined by the center frequency and the spectrum bandwidth.

Another aspect of the present invention provides a node device, including:

a third receiving module, configured to receive a request message, and extract third available center frequency set information and spectrum bandwidth information that are carried in the request message; and further configured to receive a response message, and extract center frequency information carried in the response message;

a third processing module, configured to obtain a third available center frequency set and a spectrum bandwidth, determined by a first node, of a wavelength connection, where the third available center frequency set is an intersection of available center frequency sets of all links from the first node to the local node that the wavelength connection passes through; further configured to obtain an available center frequency set of a second link according to the spectrum bandwidth, intersect the available center frequency set of the second link and the third available center frequency set to obtain a fourth available center frequency set, and obtain fourth available center frequency set information corresponding to the fourth available center frequency set, where the second link is a link between the local node and a neighboring node in a direction from the first node to a second node; and further configured to obtain a center frequency of the wavelength connection, where the center frequency is an available center frequency obtained by the second node from a second available center frequency set, where the second available center frequency set is an intersection of available center frequency sets of all links that the wavelength connection passes through;

a third sending module, configured to send a request message carrying the fourth available center frequency set information and the spectrum bandwidth information to the neighboring node in the direction from the first node to the second node; and

a third cross-connection establishing module, configured to establish a wavelength cross-connection based on a spectrum range determined by the center frequency and the spectrum bandwidth.

Another aspect of the present invention provides a node device, including:

a first processing module, configured to determine a spectrum bandwidth of a wavelength connection, and obtain first free center frequency set information corresponding to a first free center frequency set of a third link and spectrum bandwidth information corresponding to the spectrum bandwidth, where the third link is a link between the first node and a neighboring node in a direction from the first node to a second node; and further configured to obtain a center frequency of the wavelength connection, where the center frequency is an available center frequency obtained by the second node from a second free center frequency set according to the spectrum bandwidth, and the second free center frequency set is an intersection of free center frequency sets of all links that the wavelength connection passes through;

a first sending module, configured to send a request message carrying the first free center frequency set information and the spectrum bandwidth information to the neighboring node in the direction from the first node to the second node;

a first receiving module, configured to receive a response message, and extract center frequency information carried in the response message; and

a first cross-connection establishing module, configured to establish a wavelength cross-connection based on a spectrum range determined by the center frequency and the spectrum bandwidth.

Another aspect of the present invention provides a node device, including:

a second receiving module, configured to receive a request message, and extract second free center frequency set information and spectrum bandwidth information that are carried in the request message;

a second processing module, configured to obtain a second free center frequency set and a spectrum bandwidth, determined by a first node, of a wavelength connection, where the second free center frequency set is an intersection of free center frequency sets of all links that the wavelength connection passes through; and further configured to obtain an available center frequency from the second free center frequency set as a center frequency of the wavelength connection according to the spectrum bandwidth; and

a second cross-connection establishing module, configured to establish a wavelength cross-connection based on a spectrum range determined by the center frequency and the spectrum bandwidth.

Another aspect of the present invention provides a node device, including:

a third receiving module, configured to receive a request message, and extract third free center frequency set information and spectrum bandwidth information that are carried in the request message; and further configured to receive a response message, and extract center frequency information carried in the response message;

a third processing module, configured to obtain a third free center frequency set and a spectrum bandwidth, determined by a first node, of a wavelength connection, where the third free center frequency set is an intersection of free center frequency sets of all links from the first node to the local node that the wavelength connection passes through; further configured to intersect a free center frequency set of a fourth link and the third free center frequency set to obtain a fourth free center frequency set, and obtain fourth free center frequency set information corresponding to the fourth free center frequency set, where the fourth link is a link between the local node and a neighboring node in a direction from the first node to a second node; and further configured to obtain a center frequency of the wavelength connection, where the center frequency is an available center frequency obtained by the second node from a second free center frequency set according to the spectrum bandwidth, and the second free center frequency set is an intersection of free center frequency sets of all links that the wavelength connection passes through;

a third sending module, configured to send a request message carrying the fourth free center frequency set information and the spectrum bandwidth information to the neighboring node in the direction from the first node to the second node; and

a third cross-connection establishing module, configured to establish a wavelength cross-connection based on a spectrum range determined by the center frequency and the spectrum bandwidth.

Another aspect of the present invention provides a node device, including:

a first processing module, configured to determine a spectrum bandwidth of each segment connection on a wavelength connection, and obtain a fifth available center frequency set of a fifth link according to a spectrum bandwidth of a segment connection of the first node, where the fifth link is a link between the first node and a neighboring node in a direction from the local node to a second node; and further configured to obtain fifth available center frequency set information corresponding to the fifth available center frequency set and spectrum bandwidth information corresponding to the spectrum bandwidth of each segment connection on the wavelength connection;

a first sending module, configured to send a request message carrying the fifth available center frequency set information and the spectrum bandwidth information to the neighboring node in the direction from the local node to the second node; and further configured to obtain a center frequency of the segment connection of the local node, where the center frequency is an available center frequency obtained by a fourth node between the local node and the second node from a sixth available center frequency set, and the sixth available center frequency set is an intersection of available center frequency sets of all links of the segment connection of the local node;

a first receiving module, configured to receive a response message, and extract first center frequency information carried in the response message; and

a first cross-connection establishing module, configured to establish a wavelength cross-connection based on a spectrum range determined by the center frequency and spectrum bandwidth of the segment connection of the local node.

Another aspect of the present invention provides a node device, including:

a second receiving module, configured to receive a request message, and extract ninth available center frequency set information and spectrum bandwidth information that are carried in the request message;

a second processing module, configured to obtain a ninth available center frequency set and a spectrum bandwidth, determined by a first node, of a segment connection of the local node, where the ninth available center frequency set is an intersection of available center frequency sets of all links that the segment connection of the local node passes through; and further configured to obtain an available center frequency from the ninth available center frequency set as a center frequency of the segment connection of the local node; and

a second cross-connection establishing module, configured to establish a wavelength cross-connection based on a spectrum range determined by the center frequency and spectrum bandwidth of the segment connection of the local node.

Another aspect of the present invention provides a node device, including:

a fourth receiving module, configured to receive a request message, and extract sixth available center frequency set information and first spectrum bandwidth information that are carried in the request message; and further configured to receive a response message, and extract second center frequency information carried in the response message;

a fourth processing module, configured to obtain a sixth available center frequency set, and obtain spectrum bandwidths, determined by a first node, of a first-node-side segment connection of the local node and each segment connection from the local node to a second node, where the sixth available center frequency set is an intersection of available center frequency sets of all links that the first-node-side segment connection of the local node passes through; further configured to obtain an available center frequency from the sixth available center frequency set as a center frequency of the first-node-side segment connection of the local node; further configured to obtain a seventh available center frequency set of a sixth link according to a spectrum bandwidth of a second-node-side segment connection of the local node, where the sixth link is a link between the local node and a neighboring node in a direction from the first node to the second node; obtain seventh available center frequency set information corresponding to the seventh available center frequency set, and obtain second spectrum bandwidth information corresponding to the spectrum bandwidth of each segment connection from the local node to the second node; and further configured to obtain a center frequency of the second-node-side segment connection of the local node, where the center frequency of the second-node-side segment connection of the local node is an available center frequency in an eighth available center frequency set, and the eighth available center frequency set is an intersection of available center frequency sets of all links that the second-node-side segment connection of the fourth node passes through;

a fourth sending module, configured to send a request message carrying the seventh available center frequency set information and the second spectrum bandwidth information to the neighboring node in the direction from the first node to the second node; and

a fourth cross-connection establishing module, configured to determine a first spectrum range based on the center frequency and spectrum bandwidth of the first-node-side segment connection of the local node, determine a second spectrum range based on the center frequency and spectrum bandwidth of the second-node-side segment connection of the local node, and establish a wavelength cross-connection between the first spectrum range and the second spectrum range.

Another aspect of the present invention provides a node device, including:

a third receiving module, configured to receive a request message, and extract tenth available center frequency set information and spectrum bandwidth information that are carried in the request message; and further configured to receive a response message, and extract third center frequency information carried in the response message;

a third processing module, configured to obtain a ninth available center frequency set, and obtain spectrum bandwidths, determined by a first node, of a segment connection of the third node and each segment connection from the local node to a second node, where the ninth available center frequency set is an intersection of available center frequency sets of all links from the first node or a fourth node to the local node that the segment connection of the local node passes through; further configured to obtain an available center frequency set of a seventh link according to the spectrum bandwidth of the segment connection of the local node, intersect the available center frequency set of the seventh link and the tenth available center frequency set to obtain an eleventh available center frequency set, and obtain eleventh available center frequency set information corresponding to the eleventh available center frequency set, where the seventh link is a link between the third node and a neighboring node in a direction from the first node to the second node; and further configured to obtain a center frequency of the segment connection of the local node, where the center frequency is an available center frequency obtained by the fourth node between the local node and the second node or by the second node from the eleventh available center frequency set, and the eleventh available center frequency set is an intersection of available center frequency sets of all links of the segment connection of the third node;

a third sending module, configured to send a request message carrying the eleventh available center frequency set information and the spectrum bandwidth information to the neighboring node in the direction from the first node to the second node; and

a third cross-connection establishing module, configured to establish a wavelength cross-connection based on a spectrum range determined by the center frequency and spectrum bandwidth of the segment connection of the local node.

Another aspect of the present invention provides a node device, including:

a first processing module, configured to determine a spectrum bandwidth of each segment connection on a wavelength connection, and obtain fifth free center frequency set information corresponding to a fifth free center frequency set of an eighth link and spectrum bandwidth information corresponding to the spectrum bandwidth of each segment connection on the wavelength connection, where the eighth link is a link between the local node and a neighboring node in a direction from the local node to a second node; and further configured to obtain a center frequency of a segment connection of the local node, where the center frequency is an available center frequency obtained by a fourth node between the first node and the second node from a sixth free center frequency set according to a spectrum bandwidth of a segment connection of the first node, where the sixth free center frequency set is an intersection of free center frequency sets of all links that the segment connection of the local node passes through;
a first sending module, configured to send a request message carrying the fifth free center frequency set information and the spectrum bandwidth information to the neighboring node in the direction from the local node to the second node;
a first receiving module, configured to receive a response message, and extract fifth center frequency information carried in the response message; and
a first cross-connection establishing module, configured to establish a wavelength cross-connection based on a spectrum range determined by the center frequency and spectrum bandwidth of the segment connection of the local node.

Another aspect of the present invention provides a node device, including:

a second receiving module, configured to receive a request message, and extract ninth free center frequency set information and spectrum bandwidth information that are carried in the request message;
a second processing module, configured to obtain a ninth free center frequency set, and obtain a spectrum bandwidth, determined by a first node, of a segment connection of the local node, where the ninth free center frequency set is an intersection of free center frequency sets of all links that the segment connection of the local node passes through; and further configured to obtain an available center frequency from the ninth free center frequency set as a center frequency of the segment connection of the local node according to the spectrum bandwidth of the segment connection of the local node; and
a second cross-connection establishing module, configured to establish a wavelength cross-connection based on a spectrum range determined by the center frequency and spectrum bandwidth of the segment connection of the local node.

Another aspect of the present invention provides a node device, including:

a fourth receiving module, configured to receive a request message, and extract sixth free center frequency set information and third spectrum bandwidth information that are carried in the request message; and further configured to receive a response message, and extract sixth center frequency information carried in the response message;
a fourth processing module, configured to obtain a sixth free center frequency set, and obtain spectrum bandwidths of a first-node-side segment connection of the local node and each segment connection from the local node to a second node, where the sixth free center frequency set is an intersection of free center frequency sets of all links that the first-node-side segment connection of the local node passes through; further configured to obtain an available center frequency from the sixth free center frequency set as a center frequency of the first-node-side segment connection of the local node according to the spectrum bandwidth of the first-node-side segment connection of the local node; further configured to obtain seventh free center frequency set information corresponding to a seventh free center frequency set of a ninth link, and obtain fourth spectrum bandwidth information corresponding to the spectrum bandwidth of each segment connection from the local node to the second node, where the ninth link is a link between the local node and a neighboring node in a direction from the first node to the second node; and further configured to obtain a center frequency of a second-node-side segment connection of the fourth node, where the center frequency of an second-node-side segment connection of the local node is an available center frequency in the eighth free center frequency set, and the eighth free center frequency set is an intersection of available center frequency sets of all links that the second-node-side segment connection of the local node passes through;
a fourth sending module, configured to send a request message carrying the seventh free center frequency set information and the fourth spectrum bandwidth information to the neighboring node in the direction from the first node to the second node; and
a fourth cross-connection establishing module, configured to determine a third spectrum range based on the center frequency and spectrum bandwidth of the first-node-side segment connection of the local node, determine a fourth spectrum range based on the center frequency and spectrum bandwidth of the second-node-side segment connection of the local node, and establish a wavelength cross-connection between the third spectrum range and the fourth spectrum range.

Another aspect of the present invention provides a node device, including:

a third receiving module, configured to receive a request message, and extract tenth free center frequency set information and spectrum bandwidth information that are carried in the request message; and further configured to receive a response message, and extract center frequency information carried in the response message;

a third processing module, configured to obtain a tenth free center frequency set, and obtain spectrum bandwidths, determined by a first node, of a segment connection of the local node and each segment connection from the local node to a second node, where the tenth free center frequency set is an intersection of free center frequency sets of all links from the first node or a fourth node to the local node that the segment connection of the local node passes through; further configured to intersect a free center frequency set of a tenth link and the tenth free center frequency set to obtain an eleventh free center frequency set, and obtain eleventh free center frequency set information corresponding to the eleventh free center frequency set, where the tenth link is a link between the local node and a neighboring node in a direction from the first node to the second node; and further configured to obtain a center frequency of the segment connection of the local node, where the center frequency is an available center frequency obtained by the fourth node between the local node and the second node or by the second node from the eleventh free center frequency set according to the spectrum bandwidth of the segment connection of the local node, and the eleventh free center frequency set is an intersection of free center frequency sets of all links that the segment connection of the local node passes through;

a third sending module, configured to send a request message to the neighboring node in the direction from the first node to the second node, where the request message carries the eleventh free center frequency set information and the segment connection of the local node and the spectrum bandwidth information; and

a third cross-connection establishing module, configured to establish a wavelength cross-connection based on a spectrum range determined by the center frequency and spectrum bandwidth of the segment connection of the local node.

One aspect of the present invention provides a system for establishing a wavelength cross-connection, including at least a first node and a second node, where:

the first node is configured to determine a spectrum bandwidth of a wavelength connection, and obtain a first available center frequency set of a first link according to the spectrum bandwidth, where the first link is a link between the first node and a neighboring node in a direction from the first node to the second node; further configured to obtain first available center frequency set information corresponding to the first available center frequency set and spectrum bandwidth information corresponding to the spectrum bandwidth, and send a request message carrying the first available center frequency set information and the spectrum bandwidth information to the neighboring node in the direction from the first node to the second node; and further configured to receive a response message, extract center frequency information carried in the response message, obtain a center frequency of the wavelength connection, and establish a wavelength cross-connection based on a spectrum range determined by the center frequency and the spectrum bandwidth; and

the second node is configured to receive a request message, extract second available center frequency set information and spectrum bandwidth information that are carried in the request message, and obtain a second available center frequency set and the spectrum bandwidth, determined by the first node, of the wavelength connection, where the second available center frequency set is an intersection of available center frequency sets of all links that the wavelength connection passes through; further configured to obtain an available center frequency from the second available center frequency set as a center frequency of the wavelength connection, and establish a wavelength cross-connection based on a spectrum range determined by the center frequency and the spectrum bandwidth; and further configured to obtain center frequency information corresponding to the center frequency, and send a response message carrying the center frequency information to a neighboring node in a direction from the second node to the first node.

Another aspect of the present invention provides a system for establishing a wavelength cross-connection, including at least a first node and a second node, where:

the first node is configured to determine a spectrum bandwidth of a wavelength connection, obtain first free center frequency set information corresponding to a first free center frequency set of a third link and spectrum bandwidth information corresponding to the spectrum bandwidth, and send a request message carrying the first free center frequency set information and the spectrum bandwidth information to a neighboring node in a direction from the first node to the second node, where the third link is a link between the first node and the neighboring node in the direction from the first node to the second node; and further configured to receive a response message, extract center frequency information carried in the response message, obtain a center frequency of the wavelength connection, and establish a wavelength cross-connection based on a spectrum range determined by the center frequency and the spectrum bandwidth; and

the second node is configured to receive a request message, extract second free center frequency set information and spectrum bandwidth information that are carried in the request message, and obtain a second free center frequency set and the spectrum bandwidth, determined by the first node, of the wavelength connection, where the second free center frequency set is an intersection of free center frequency sets of all links that the wavelength connection passes through; further configured to obtain an available center frequency from the second free center frequency set as a center frequency of the wavelength connection, and establish a wavelength cross-connection based on a spectrum range determined by the center frequency and the spectrum bandwidth; and further configured to obtain center frequency information corresponding to the center frequency, and send a response message carrying the center frequency information to a neighboring node in a direction from the second node to the first node.

Another aspect of the present invention provides a system for establishing a wavelength cross-connection, including at least a first node, a second node, and a fourth node, where:

the first node is configured to determine a spectrum bandwidth of each segment connection on a wavelength connection, and obtain a fifth available center frequency set of a fifth link according to a spectrum bandwidth of a segment connection of the first node, where the fifth link is a link between the first node and a neighboring node in a direction from the first node to the second node; further configured to obtain fifth available center frequency set information corresponding to the fifth available center frequency set and spectrum bandwidth information corresponding to the spectrum bandwidth of each segment connection on the wavelength connection, and send a request message carrying the fifth available center frequency set information and the spectrum bandwidth information to the neighboring node in the direction from the first node to the second node; and further configured to receive a response message, extract first center frequency information carried in the response message, obtain a center frequency of the segment connection of the first node, and establish a wavelength cross-connection based on a spectrum range determined by the center frequency and spectrum bandwidth of the segment connection of the first node;

the fourth node is configured to receive a request message, extract sixth available center frequency set information and first spectrum bandwidth information that are carried in the request message, obtain a sixth available center frequency set, and obtain spectrum bandwidths, determined by the first node, of a first-node-side segment connection of the fourth node and each segment connection from the fourth node to the second node, where the sixth available center frequency set is an intersection of available center frequency sets of all links that the first-node-side segment connection of the fourth node passes through; further configured to obtain an available center frequency from the sixth available center frequency set as a center frequency of the first-node-side segment connection of the fourth node; further configured to obtain fourth center frequency information corresponding to the center frequency of the first-node-side segment connection; further configured to obtain a seventh available center frequency set of a sixth link according to a spectrum bandwidth of the second-node-side segment connection of the fourth node, where the sixth link is a link between the fourth node and the neighboring node in the direction from the first node to the second node; further configured to obtain seventh available center frequency set information corresponding to the seventh available center frequency set, obtain second spectrum bandwidth information corresponding to the spectrum bandwidth of each segment connection from the fourth node to the second node, and send a request message carrying the seventh available center frequency set information and the second spectrum bandwidth information to the neighboring node in the direction from the first node to the second node; further configured to receive a response message, extract second center frequency information carried in the response message, obtain a center frequency of the second-node-side segment connection of the fourth node, determine a first spectrum range based on the center frequency and spectrum bandwidth of the first-node-side segment connection of the fourth node, determine a second spectrum range based on the center frequency and spectrum bandwidth of the second-node-side segment connection of the fourth node, and establish a wavelength cross-connection between the first spectrum range and the second spectrum range, where the center frequency of the second-node-side segment connection of the fourth node is an available center frequency in an eighth available center frequency set, and the eighth available center frequency set is an intersection of available center frequency sets of all links that the second-node-side segment connection of the fourth node passes through; and further configured to send a response message carrying the fourth center frequency information to a neighboring node in a direction from the second node to the first node; and

the second node is configured to receive a request message, extract ninth available center frequency set information and spectrum bandwidth information that are carried in the request message, and obtain a ninth available center frequency set and a spectrum bandwidth, determined by the first node, of a segment connection of the second node, where the ninth available center frequency set is an intersection of available center frequency sets of all links that the segment connection of the second node passes through; further configured to obtain an available center frequency from the ninth available center frequency set as a center frequency of the segment connection of the second node, and establish a wavelength cross-connection based on a spectrum range determined by the center frequency and spectrum bandwidth of the segment connection of the second node; and further configured to obtain fifth center frequency information corresponding to the center frequency of the segment connection of the second node, and send a response message carrying the fifth center frequency information to the neighboring node in the direction from the second node to the first node.

Another aspect of the present invention provides a system for establishing a wavelength cross-connection, including at least a first node, a second node, and a fourth node, where:

the first node is configured to determine a spectrum bandwidth of each segment connection on a wavelength connection, obtain fifth free center frequency set information corresponding to a fifth free center frequency set of an eighth link and spectrum bandwidth information corresponding to the spectrum bandwidth of each segment connection on the wavelength connection, and send a request message carrying the fifth free center frequency set information and the spectrum bandwidth information to a neighboring node in a direction from the first node to the second node, where the eighth link is a link between the first node and the neighboring node in the direction from the first node to the second node; and further configured to receive a response message, extract fifth center frequency information carried in the response message, obtain a center frequency of a segment connection of the first node, and establish a wavelength cross-connection based on a spectrum range determined by the center frequency and spectrum bandwidth of the segment connection of the first node;

the fourth node is configured to receive a request message, extract sixth free center frequency set information and third spectrum bandwidth information that are carried in the request message, obtain a sixth free center frequency set, obtain spectrum bandwidths of a first-node-side segment connection of the fourth node and each segment connection from the fourth node to the second node, where the sixth free center frequency set is an intersection of free center frequency sets of all links that the first-node-side segment connection of the fourth node passes through; further configured to obtain an available center frequency from the sixth free center frequency set as a center frequency of the first-node-side segment connection of the fourth node according to the spectrum bandwidth of the first-node-side segment connection of the fourth node; further configured to obtain eighth center frequency information corresponding to the center frequency of the first-node-side segment connection of the fourth node; further configured to obtain seventh free center frequency set information corresponding to a seventh free center frequency set of a ninth link, obtain fourth spectrum bandwidth information corresponding to the spectrum bandwidth of each segment connection from the fourth node to the second node, and send a request message carrying the seventh free center frequency set information and the fourth spectrum bandwidth information to the neighboring node in the direction from the first node to the second node, where the ninth link is a link between the fourth node and the neighboring node in the direction from the first node to the second node; further configured to receive a response message, extract sixth center frequency information carried in the response message, obtain a center frequency of the second-node-side segment connection of the fourth node, determine a third spectrum range based on the center frequency and spectrum bandwidth of the first-node-side segment connection of the fourth node, determine a fourth spectrum range based on the center frequency and spectrum bandwidth of the second-node-side segment connection of the fourth node, and establish a wavelength cross-connection between the third spectrum range and the fourth spectrum range, where the center frequency of the second-node-side segment connection of the fourth node is an available center frequency in an eighth free center frequency set, where the eighth free center frequency set is an intersection of available center frequency sets of all links that the second-node-side segment connection of the fourth node passes through; and further configured to send a response message carrying the eighth center frequency information to a neighboring node in a direction from the second node to the first node; and

the second node is configured to receive a request message, extract ninth free center frequency set information and spectrum bandwidth information that are carried in the request message, obtain a ninth free center frequency set, and obtain a spectrum bandwidth, determined by the first node, of a segment connection of the second node, where the ninth free center frequency set is an intersection of free center frequency sets of all links that the segment connection of the second node passes through; further configured to obtain an available center frequency from the ninth free center frequency set as a center frequency of the segment connection of the second node according to the spectrum bandwidth of the segment connection of the second node, and establish a wavelength cross-connection based on a spectrum range determined by the center frequency and spectrum bandwidth of the segment connection of the second node; and further configured to obtain ninth center frequency information corresponding to the center frequency of the segment connection of the second node, and send a response message carrying the ninth center frequency information to the neighboring node in the direction from the second node to the first node.

By using the method, system, and node device for establishing a wavelength cross-connection according to the embodiments of the present invention, a wavelength cross-connection of a variable spectrum bandwidth on a node can be automatically established. The implementation is simple and reliability is high.

## BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1a is a flowchart of a method for establishing a wavelength cross-connection according to an embodiment of the present invention;

FIG. 1b is a flowchart of a method for establishing a wavelength cross-connection according to another embodiment of the present invention;

FIG. 1c is a flowchart of a method for establishing a wavelength cross-connection according to another embodiment of the present invention;

FIG. 1d is a flowchart of a method for establishing a wavelength cross-connection according to another embodiment of the present invention;

FIG. 1e is a flowchart of a method for establishing a wavelength cross-connection according to another embodiment of the present invention;

FIG. 1f is a flowchart of a method for establishing a wavelength cross-connection according to another embodiment of the present invention;

FIG. 1g is a flowchart of a method for establishing a wavelength cross-connection according to another embodiment of the present invention;

FIG. 1h is a flowchart of a method for establishing a wavelength cross-connection according to another embodiment of the present invention;

FIG. 1i is a flowchart of a method for establishing a wavelength cross-connection according to another embodiment of the present invention;

FIG. 1j is a flowchart of a method for establishing a wavelength cross-connection according to another embodiment of the present invention;

FIG. 1k is a flowchart of a method for establishing a wavelength cross-connection according to another embodiment of the present invention;

FIG. 1l is a flowchart of a method for establishing a wavelength cross-connection according to another embodiment of the present invention;

FIG. 1m is a flowchart of a method for establishing a wavelength cross-connection according to another embodiment of the present invention;

FIG. 1n is a flowchart of a method for establishing a wavelength cross-connection according to another embodiment of the present invention;

FIG. 2 is a schematic diagram of spectrum resources in an optical fiber link according to an embodiment of the present invention;

FIG. 3 is a schematic diagram of a WDM network topology according to an embodiment of the present invention;

FIG. 4a is a schematic diagram of spectrum resources of an optical fiber on link A-B in a WDM network according to an embodiment of the present invention;

FIG. 4b is a schematic diagram of spectrum resources of an optical fiber on link B-C in a WDM network according to an embodiment of the present invention;

FIG. 5 is a schematic diagram of another WDM network topology according to an embodiment of the present invention;

FIG. 6a is a schematic diagram of spectrum resources of an optical fiber on link A-D in another WDM network according to an embodiment of the present invention;

FIG. 6b is a schematic diagram of spectrum resources of an optical fiber on link D-E in another WDM network according to an embodiment of the present invention;

FIG. 6c is a schematic diagram of spectrum resources of an optical fiber on link E-C in another WDM network according to an embodiment of the present invention;

FIG. 7a shows an encapsulation format of a traffic parameter object payload according to an embodiment of the present invention;

FIG. 7b shows an encapsulation format of a label request object payload according to an embodiment of the present invention;

FIG. 7c shows an encapsulation format of a label object payload according to an embodiment of the present invention;

FIG. 8 is a structural block diagram of a node device according to an embodiment of the present invention;

FIG. 9 is a structural block diagram of another node device according to an embodiment of the present invention;

FIG. 10 is a structural block diagram of another node device according to an embodiment of the present invention;

FIG. 11 is a structural block diagram of another node device according to an embodiment of the present invention;

FIG. 12 is a schematic diagram of a system for establishing a wavelength cross-connection according to an embodiment of the present invention; and

FIG. 13 is a schematic diagram of another system for establishing a wavelength cross-connection according to an embodiment of the present invention.

## DESCRIPTION OF EMBODIMENTS

Embodiments of the present invention provide a method, system, and node device for establishing a wavelength cross-connection. To help understand the technical solutions of the present invention better, the embodiments of the present invention are hereinafter described in detail with reference to the accompanying drawings.

It should be noted that the described embodiments are merely some exemplary embodiments of the present invention, rather than all embodiments of the present invention. All other embodiments obtained by a person of ordinary skill in the art based on the embodiments of the present invention without creative efforts shall fall within the protection scope of the present invention.

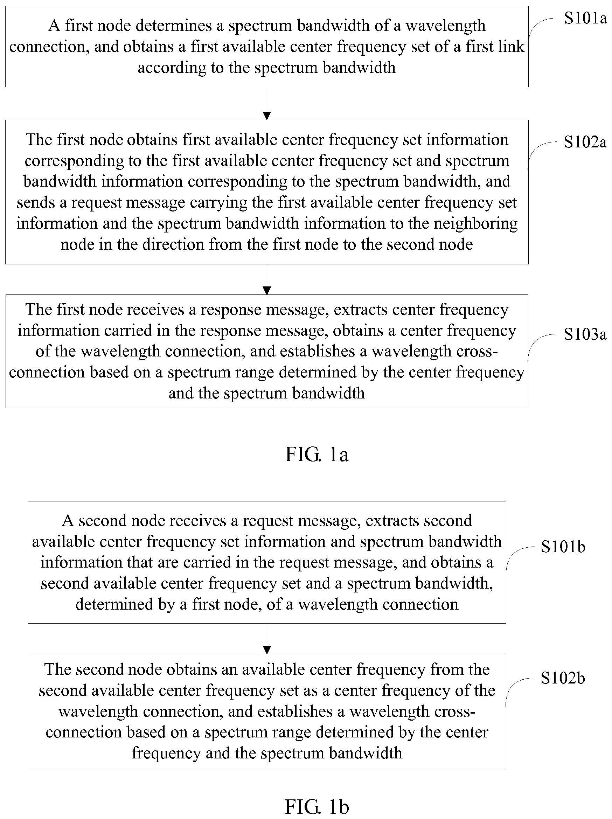

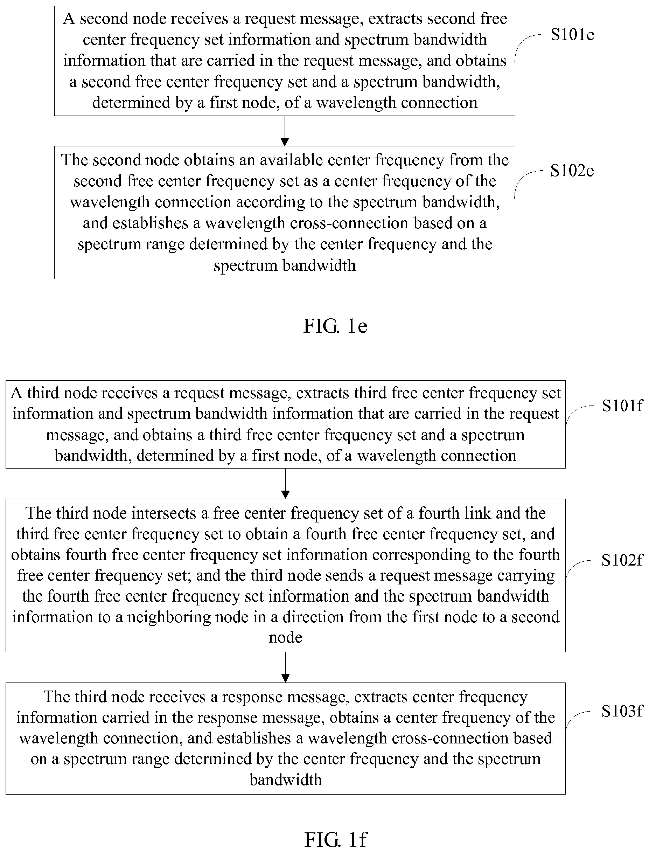

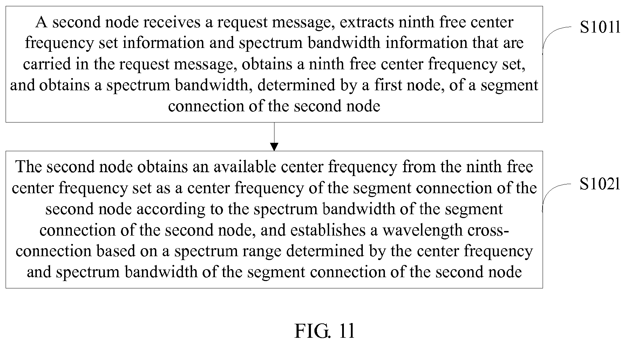

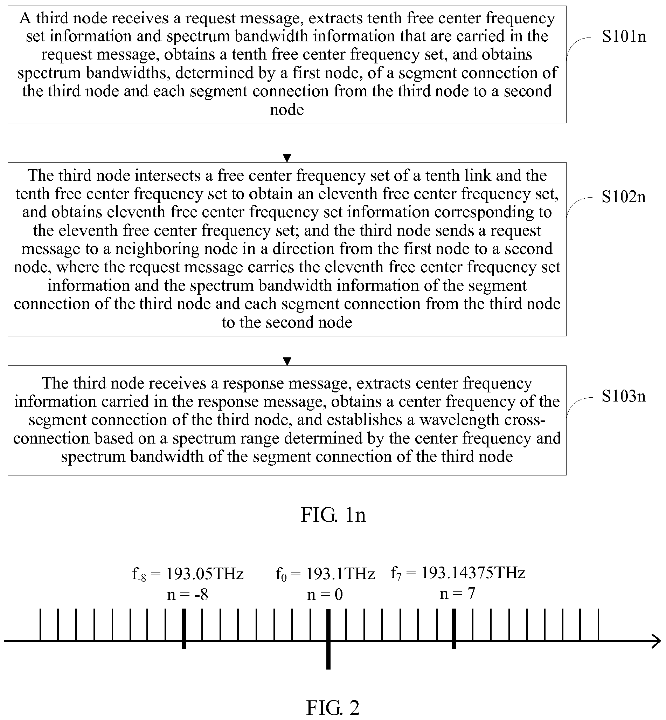

In an embodiment of the present invention, a procedure of a method for establishing a wavelength cross-connection is shown in FIG. 1a, where the method includes the following steps:

Step S101a: A first node determines a spectrum bandwidth of a wavelength connection, and obtains a first available center frequency set of a first link according to the spectrum bandwidth, where the first link is a link between the first node and a neighboring node in a direction from the first node to a second node.

Step S102a: The first node obtains first available center frequency set information corresponding to the first available center frequency set and spectrum bandwidth information corresponding to the spectrum bandwidth, and sends a request message carrying the first available center frequency set information and the spectrum bandwidth information to the neighboring node in the direction from the first node to the second node.

Step S103a: The first node receives a response message, extracts center frequency information carried in the response message, obtains a center frequency of the wavelength connection, and establishes a wavelength cross-connection based on a spectrum range determined by the center frequency and the spectrum bandwidth, where the center frequency is an available center frequency obtained by the second node from a second available center frequency set, and the second available center frequency set is an intersection of available center frequency sets of all links that the wavelength connection passes through.

In another embodiment of the present invention, a procedure of a method for establishing a wavelength cross-connection is shown in FIG. 1b, where the method includes the following steps:

Step S101b: A second node receives a request message, extracts second available center frequency set information and spectrum bandwidth information that are carried in the request message, and obtains a second available center frequency set and a spectrum bandwidth, determined by a first node, of a wavelength connection, where the second available center frequency set is an intersection of available center frequency sets of all links that the wavelength connection passes through.

Step S102b: The second node obtains an available center frequency from the second available center frequency set as a center frequency of the wavelength connection, and establishes a wavelength cross-connection based on a spectrum range determined by the center frequency and the spectrum bandwidth.

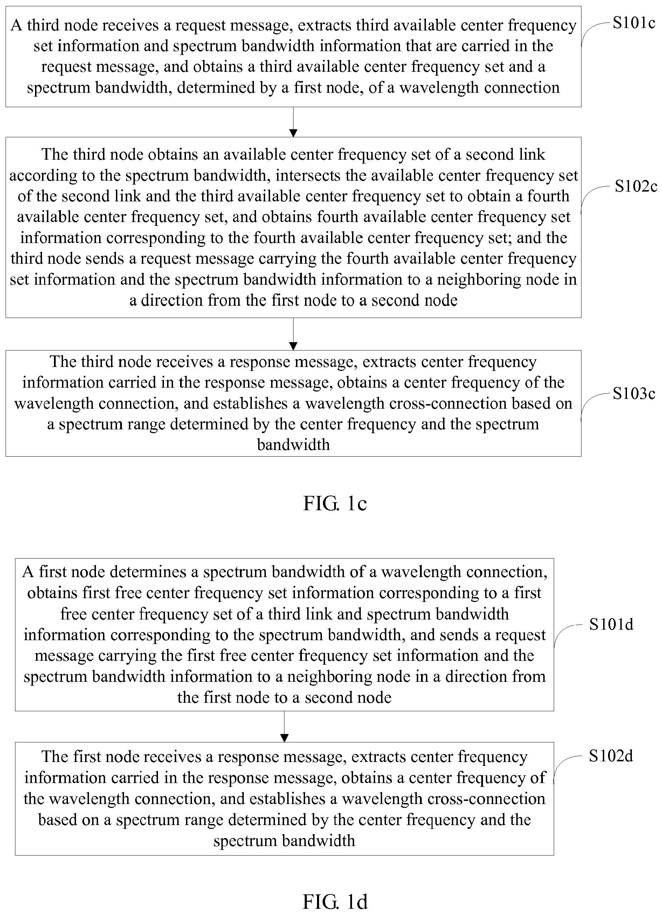

In another embodiment of the present invention, a procedure of a method for establishing a wavelength cross-connection is shown in FIG. 1c, where the method includes the following steps:

Step S101c: A third node receives a request message, extracts third available center frequency set information and spectrum bandwidth information that are carried in the request message, and obtains a third available center frequency set and a spectrum bandwidth, determined by a first node, of a wavelength connection, where the third available center frequency set is an intersection of available center frequency sets of all links from the first node to the third node that the wavelength connection passes through.

Step S102c: The third node obtains an available center frequency set of a second link according to the spectrum bandwidth, intersects the available center frequency set of the second link and the third available center frequency set to obtain a fourth available center frequency set, and obtains fourth available center frequency set information corresponding to the fourth available center frequency set, where the second link is a link between the third node and a neighboring node in a direction from the first node to a second node; and the third node sends a request message carrying the fourth available center frequency set information and the spectrum bandwidth information to the neighboring node in the direction from the first node to the second node.

Step S103c: The third node receives a response message, extracts center frequency information carried in the response message, obtains a center frequency of the wavelength connection, and establishes a wavelength cross-connection based on a spectrum range determined by the center frequency and the spectrum bandwidth, where the center frequency is an available center frequency obtained by the second node from a second available center frequency set, and the second available center frequency set is an intersection of available center frequency sets of all links that the wavelength connection passes through.

In another embodiment of the present invention, a procedure of a method for establishing a wavelength cross-connection is shown in FIG. 1d, where the method includes the following steps:

Step S101d: A first node determines a spectrum bandwidth of a wavelength connection, obtains first free center frequency set information corresponding to a first free center frequency set of a third link and spectrum bandwidth information corresponding to the spectrum bandwidth, and sends a request message carrying the first free center frequency set information and the spectrum bandwidth information to a neighboring node in a direction from the first node to a second node, where the third link is a link between the first node and the neighboring node in the direction from the first node to the second node.
Step S102d: The first node receives a response message, extracts center frequency information carried in the response message, obtains a center frequency of the wavelength connection, and establishes a wavelength cross-connection based on a spectrum range determined by the center frequency and the spectrum bandwidth, where the center frequency is an available center frequency obtained by the second node from a second free center frequency set according to the spectrum bandwidth, and the second free center frequency set is an intersection of free center frequency sets of all links that the wavelength connection passes through.

In another embodiment of the present invention, a procedure of a method for establishing a wavelength cross-connection is shown in FIG. 1e, where the method includes the following steps:

Step S101e: A second node receives a request message, extracts second free center frequency set information and spectrum bandwidth information that are carried in the request message, and obtains a second free center frequency set and a spectrum bandwidth, determined by a first node, of a wavelength connection, where the second free center frequency set is an intersection of free center frequency sets of all links that the wavelength connection passes through.
Step S102e: The second node obtains an available center frequency from the second free center frequency set as a center frequency of the wavelength connection according to the spectrum bandwidth, and establishes a wavelength cross-connection based on a spectrum range determined by the center frequency and the spectrum bandwidth.

In another embodiment of the present invention, a procedure of a method for establishing a wavelength cross-connection is shown in FIG. If, where the method includes the following steps:

Step S101f: A third node receives a request message, extracts third free center frequency set information and spectrum bandwidth information that are carried in the request message, and obtains a third free center frequency set and a spectrum bandwidth, determined by a first node, of a wavelength connection, where the third free center frequency set is an intersection of free center frequency sets of all links from the first node to the third node that the wavelength connection passes through.
Step S102f: The third node intersects a free center frequency set of a fourth link and the third free center frequency set to obtain a fourth free center frequency set, and obtains fourth free center frequency set information corresponding to the fourth free center frequency set, where the fourth link is a link between the third node and a neighboring node in a direction from the first node to a second node; and the third node sends a request message carrying the fourth free center frequency set information and the spectrum bandwidth information to the neighboring node in the direction from the first node to the second node.
Step S103f: The third node receives a response message, extracts center frequency information carried in the response message, obtains a center frequency of the wavelength connection, and establishes a wavelength cross-connection based on a spectrum range determined by the center frequency and the spectrum bandwidth, where the center frequency is an available center frequency obtained by the second node from a second free center frequency set according to the spectrum bandwidth, where the second free center frequency set is an intersection of free center frequency sets of all links that the wavelength connection passes through.

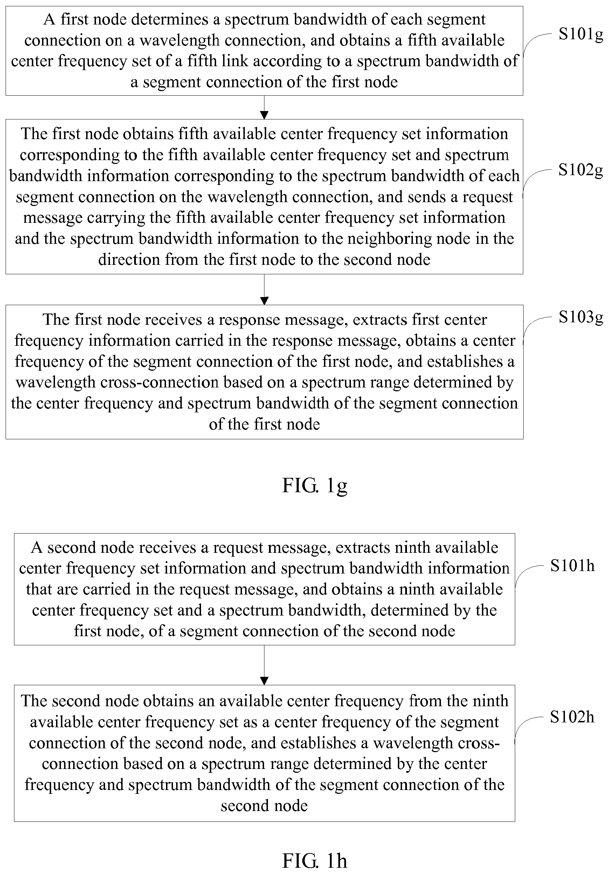

In another embodiment of the present invention, a procedure of a method for establishing a wavelength cross-connection is shown in FIG. 1g, where the method includes the following steps:

Step S101g: A first node determines a spectrum bandwidth of each segment connection on a wavelength connection, and obtains a fifth available center frequency set of a fifth link according to a spectrum bandwidth of a segment connection of the first node, where the fifth link is a link between the first node and a neighboring node in a direction from the first node to a second node.

Step S102g: The first node obtains fifth available center frequency set information corresponding to the fifth available center frequency set and spectrum bandwidth information corresponding to the spectrum bandwidth of each segment connection on the wavelength connection, and sends a request message carrying the fifth available center frequency set information and the spectrum bandwidth information to the neighboring node in the direction from the first node to the second node.

Step S103g: The first node receives a response message, extracts first center frequency information carried in the response message, obtains a center frequency of the segment connection of the first node, and establishes a wavelength cross-connection based on a spectrum range determined by the center frequency and spectrum bandwidth of the segment connection of the first node, where the center frequency is an available center frequency obtained by a fourth node between the first node and the second node from a sixth available center frequency set, and the sixth available center frequency set is an intersection of available center frequency sets of all links of the segment connection of the first node.

In another embodiment of the present invention, a procedure of a method for establishing a wavelength cross-connection is shown in FIG. 1h, where the method includes the following steps:

Step S101h: A second node receives a request message, extracts ninth available center frequency set information and spectrum bandwidth information that are carried in the request message, and obtains a ninth available center frequency set and a spectrum bandwidth, determined by the first node, of a segment connection of the second node, where the ninth available center frequency set is an intersection of available center frequency sets of all links that the segment connection of the second node passes through.

Step S102h: The second node obtains an available center frequency from the ninth available center frequency set as a center frequency of the segment connection of the second node, and establishes a wavelength cross-connection based on a spectrum range determined by the center frequency and spectrum bandwidth of the segment connection of the second node.

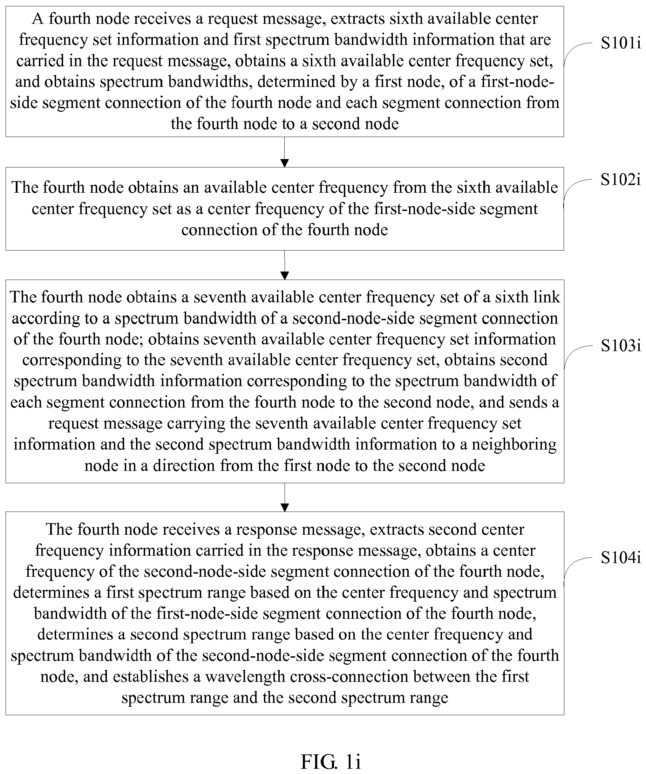

In another embodiment of the present invention, a procedure of a method for establishing a wavelength cross-connection is shown in FIG. 1i, where the method includes the following steps:

Step S101i: A fourth node receives a request message, extracts sixth available center frequency set information and first spectrum bandwidth information that are carried in the request message, obtains a sixth available center frequency set, and obtains spectrum bandwidths, determined by a first node, of a first-node-side segment connection of the fourth node and each segment connection from the fourth node to a second node, where the sixth available center frequency set is an intersection of available center frequency sets of all links that the first-node-side segment connection of the fourth node passes through.

Step S102i: The fourth node obtains an available center frequency from the sixth available center frequency set as a center frequency of the first-node-side segment connection of the fourth node.

Step S103i: The fourth node obtains a seventh available center frequency set of a sixth link according to a spectrum bandwidth of a second-node-side segment connection of the fourth node, where the sixth link is a link between the fourth node and a neighboring node in a direction from the first node to the second node; obtains seventh available center frequency set information corresponding to the seventh available center frequency set, obtains second spectrum bandwidth information corresponding to the spectrum bandwidth of each segment connection from the fourth node to the second node, and sends a request message carrying the seventh available center frequency set information and the second spectrum bandwidth information to the neighboring node in the direction from the first node to the second node.

Step S104i: The fourth node receives a response message, extracts second center frequency information carried in the response message, obtains a center frequency of the second-node-side segment connection of the fourth node, determines a first spectrum range based on the center frequency and spectrum bandwidth of the first-node-side segment connection of the fourth node, determines a second spectrum range based on the center frequency and spectrum bandwidth of the second-node-side segment connection of the fourth node, and establishes a wavelength cross-connection between the first spectrum range and the second spectrum range, where the center frequency of the second-node-side segment connection of the fourth node is an available center frequency in an eighth available center frequency set, and the eighth available center frequency set is an intersection of available center frequency sets of all links that the second-node-side segment connection of the fourth node passes through.

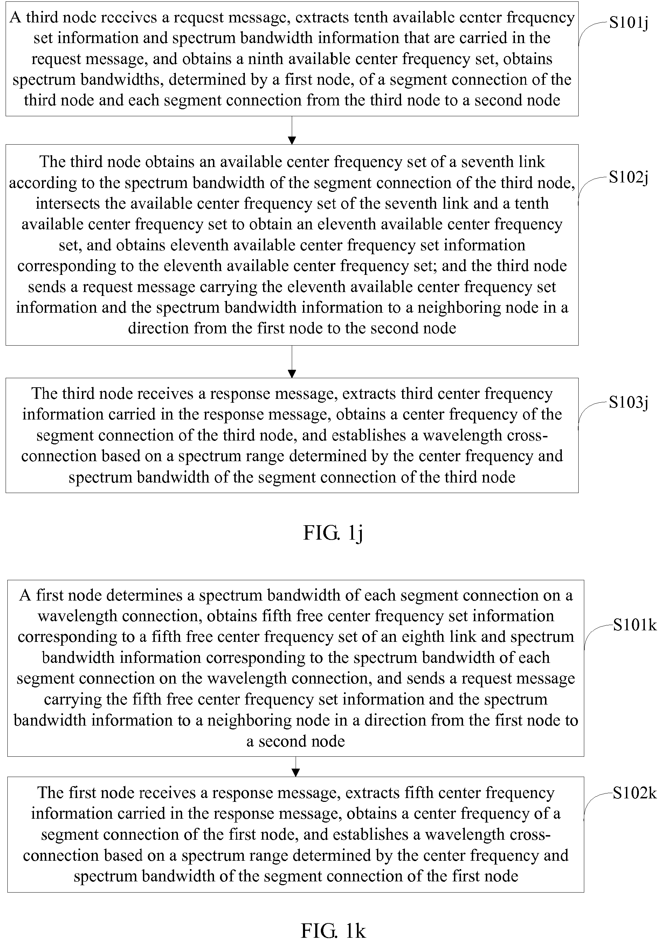

In another embodiment of the present invention, a procedure of a method for establishing a wavelength cross-connection is shown in FIG. 1j, where the method includes the following steps:

Step S101j : A third node receives a request message, extracts tenth available center frequency set information and spectrum bandwidth information that are carried in the request message, obtains a ninth available center frequency set, and obtains spectrum bandwidths, determined by a first node, of a segment connection of the third node and each segment connection from the third node to a second node, where the ninth available center frequency set is an intersection of available center frequency sets of all links from the first node or a fourth node to the third node that the segment connection of the third node passes through.

Step S102j: The third node obtains an available center frequency set of a seventh link according to the spectrum bandwidth of the segment connection of the third node, intersects the available center frequency set of the seventh link and a tenth available center frequency set to obtain an eleventh available center frequency set, and obtains eleventh available center frequency set information corresponding to the eleventh available center frequency set, where the seventh link is a link between the third node and a neighboring node in a direction from the first node to the second node; and the third node sends a request message carrying the eleventh available center frequency set information and the spectrum bandwidth information to the neighboring node in the direction from the first node to the second node.

Step S103j: The third node receives a response message, extracts third center frequency information carried in the response message, obtains a center frequency of the segment connection of the third node, and establishes a wavelength cross-connection based on a spectrum range determined by the center frequency and spectrum bandwidth of the segment connection of the third node, where the center frequency is an available center frequency obtained by a fourth node between the third node and the second node or by the second node from an eleventh available center frequency set, where the eleventh available center frequency set is an intersection of available center frequency sets of all links of the segment connection of the third node.

In another embodiment of the present invention, a procedure of a method for establishing a wavelength cross-connection is shown in FIG. 1k, where the method includes the following steps:

Step S101k: A first node determines a spectrum bandwidth of each segment connection on a wavelength connection, obtains fifth free center frequency set information corresponding to a fifth free center frequency set of an eighth link and spectrum bandwidth information corresponding to the spectrum bandwidth of each segment connection on the wavelength connection, and sends a request message carrying the fifth free center frequency set information and the spectrum bandwidth information to a neighboring node in a direction from the first node to a second node, where the eighth link is a link between the first node and the neighboring node in the direction from the first node to the second node.

Step S102k: The first node receives a response message, extracts fifth center frequency information carried in the response message, obtains a center frequency of a segment connection of the first node, and establishes a wavelength cross-connection based on a spectrum range determined by the center frequency and spectrum bandwidth of the segment connection of the first node, where the center frequency is an available center frequency obtained by a fourth node between the first node and the second node from a sixth free center frequency set according to the spectrum bandwidth of the segment connection of the first node, and the sixth free center frequency set is an intersection of free center frequency sets of all links that the segment connection of the first node passes through.

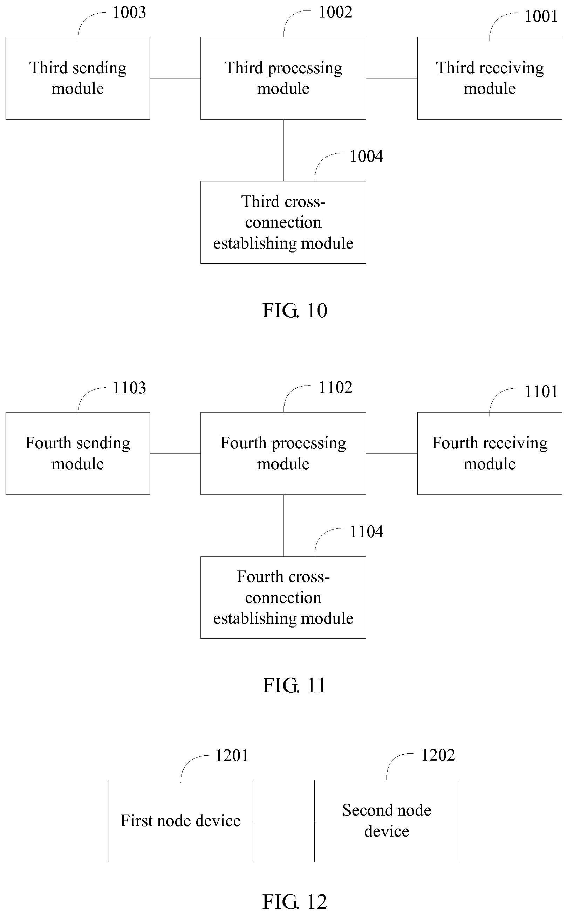

In another embodiment of the present invention, a procedure of a method for establishing a wavelength cross-connection is shown in FIG. 11, where the method includes the following steps:

Step S101l: A second node receives a request message, extracts ninth free center frequency set information and spectrum bandwidth information that are carried in the request message, obtains a ninth free center frequency set, and obtains a spectrum bandwidth, determined by a first node, of a segment connection of the second node, where the ninth free center frequency set is an intersection of free center frequency sets of all links that the segment connection of the second node passes through.

Step S1021: The second node obtains an available center frequency from the ninth free center frequency set as a center frequency of the segment connection of the second node according to the spectrum bandwidth of the segment connection of the second node, and establishes a wavelength cross-connection based on a spectrum range determined by the center frequency and spectrum bandwidth of the segment connection of the second node.

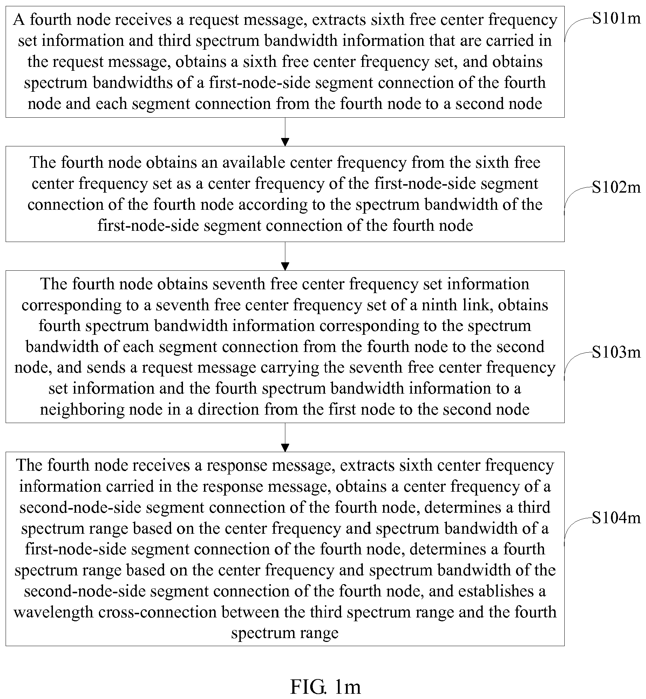

In another embodiment of the present invention, a procedure of a method for establishing a wavelength cross-connection is shown in FIG. 1m, where the method includes the following steps:

Step S101m: A fourth node receives a request message, extracts sixth free center frequency set information and third spectrum bandwidth information that are carried in the request message, obtains a sixth free center frequency set, and obtains spectrum bandwidths of a first-node-side segment connection of the fourth node and each segment connection from the fourth node to a second node, where the sixth free center frequency set is an intersection of free center frequency sets of all links that the first-node-side segment connection of the fourth node passes through.

Step S102m: The fourth node obtains an available center frequency from the sixth free center frequency set as a center frequency of the first-node-side segment connection of the fourth node according to the spectrum bandwidth of the first-node-side segment connection of the fourth node.

Step S103m: The fourth node obtains seventh free center frequency set information corresponding to a seventh free center frequency set of a ninth link, obtains fourth spectrum bandwidth information corresponding to the spectrum bandwidth of each segment connection from the fourth node to the second node, and sends a request message carrying the seventh free center frequency set information and the fourth spectrum bandwidth information to a neighboring node in a direction from the first node to the second node, where the ninth link is a link between the fourth node and the neighboring node in the direction from the first node to the second node.

Step S104m: The fourth node receives a response message, extracts sixth center frequency information carried in the response message, obtains a center frequency of a second-node-side segment connection of the fourth node, determines a third spectrum range based on the center frequency and spectrum bandwidth of a first-node-side segment connection of the fourth node, determines a fourth spectrum range based on the center frequency and spectrum bandwidth of the second-node-side segment connection of the fourth node, and establishes a wavelength cross-connection between the third spectrum range and the fourth spectrum range, where the center frequency of the second-node-side segment connection of the fourth node is an available center frequency in an eighth free center frequency set, and the eighth free center frequency set is an intersection of available center frequency sets of all links that the second-node-side segment connection of the fourth node passes through.

In another embodiment of the present invention, a procedure of a method for establishing a wavelength cross-connection is shown in FIG. In, where the method includes the following steps:

Step S101n: A third node receives a request message, extracts tenth free center frequency set information and spectrum bandwidth information that are carried in the request message, obtains a tenth free center frequency set, and obtains spectrum bandwidths, determined by a first node, of a segment connection of the third node and each segment connection from the third node to a second node, where the tenth free center frequency set is an intersection of free center frequency sets of all links from the first node or a fourth node to the third node that the segment connection of the third node passes through.

Step S102n: The third node intersects a free center frequency set of a tenth link and the tenth free center frequency set to obtain an eleventh free center frequency set, and obtains eleventh free center frequency set information corresponding to the eleventh free center frequency set, where the tenth link is a link between the third node and a neighboring node in a direction from the first node to a second node; and the third node sends a request message to the neighboring node in the direction from the first node to the second node, where the request message carries the eleventh free center frequency set information and the segment connection of the third node and the spectrum bandwidth information.

Step S103n: The third node receives a response message, extracts center frequency information carried in the response message, obtains a center frequency of the segment connection of the third node, and establishes a wavelength cross-connection based on a spectrum range determined by the center frequency and spectrum bandwidth of the segment connection of the third node, where the center frequency is an available center frequency obtained by a fourth node between the third node and the second node or by the second node from an eleventh free center frequency set according to the spectrum bandwidth of the segment connection of the third node, where the eleventh free center frequency set is an intersection of free center frequency sets of all links that the segment connection of the third node passes through.

The following describes in detail a method, system, and node device for establishing a wavelength cross-connection according to embodiments of the present invention with reference to accompanying drawings.

It should be noted that the described embodiments are merely some embodiments of the present invention, rather than all embodiments of the present invention. All other embodiments obtained by a person of ordinary skill in the art without creative efforts based on the embodiments of the present invention also fall within the protection scope of the present invention.

In the following embodiment, spectrum resources in an optical fiber link are divided into center frequencies, where, starting from 194.1 THz, the center frequency increases and decreases in units of 6.25 GHz. Therefore, spectrum resources in the optical fiber link may be divided as shown in FIG. 2, and the center frequency may be calculated according to the following formula:

$$f_n = 193.1 + (n \times 6.25/1000) \text{ (THz)}$$

where n is an integer, for example, when n = 0, a center frequency $f_0$ is 193.1 THz; when n = 7, a center frequency $f_7$ is 193.14375 THz; when n = -8, a center frequency $f_{-8}$ is 193.05 THz.

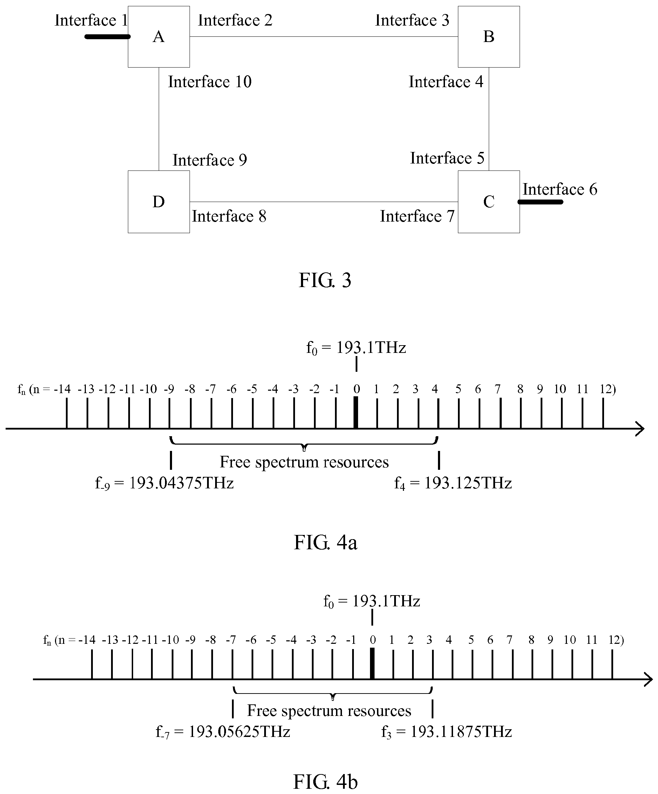

Embodiment 1: The embodiment of the present invention provides a method for establishing a wavelength cross-connection. In the WDM network shown in FIG. 3, connection lines between nodes A, B, C, and D indicate optical fiber links.

A network management system or client notifies node A of establishing a wavelength connection between interface 1 of node A and interface 6 of node C in FIG. 3. The spectrum bandwidth requirement is 50 GHz, and the center frequency is $f_{-8}$ = 193.1 + (-8 × 6.25/1000) = 193.05 THz. Node A calculates or obtains, through the network management system, a route of the wavelength connection: (A, B, C), namely, (interface 1, interface 2, interface 3, interface 4, interface 5, interface 6). Therefore, node A is a source node, node B is an intermediate node, and node C is a sink node. The method specifically includes the following steps:

Step S201: Node A sends a request message carrying center frequency information and spectrum bandwidth information of the wavelength connection to node B.

Node A determines that the center frequency of the wavelength connection is $f_{-8}$ = 193.05 THz, and that the spectrum bandwidth of the wavelength connection is 50 GHz. Node A sends a request message to downstream node B, where the request message carries spectrum bandwidth information and center frequency information. In this embodiment, the spectrum bandwidth is 50 GHz and the center frequency is $f_{-8}$ = 193.05 THz. In addition, the request message may further carry explicit route information (interface 3, interface 4, interface 5, interface 6).

Step S202: Node B receives the request message, extracts the center frequency information and spectrum bandwidth information that are carried in the request message, obtains a center frequency and a spectrum bandwidth of the wavelength bandwidth, and sends a request message carrying the center frequency information and spectrum bandwidth information to node C.

Node B receives the request message sent by node A, extracts the center frequency information and spectrum bandwidth information that are carried in the request message, and obtains the spectrum bandwidth 50 GHz and the center frequency $f_{-8}$.

Node B sends a request message to node C, where the request message carries center frequency information and spectrum bandwidth information. In this embodiment, the spectrum bandwidth is 50 GHz and the center frequency is $f_{-8}$. In addition, the request message may further carry explicit route information (interface 5, interface 6).

Step S203: Node C receives the request message, extracts the center frequency information and spectrum bandwidth information that are carried in the request message, obtains a center frequency and a spectrum bandwidth of the wavelength bandwidth, establishes a wavelength cross-connection based on the center frequency and spectrum bandwidth, and sends a response message carrying the center frequency information to node B.

Node C receives the request message sent by node B, extracts the center frequency information and spectrum bandwidth information that are carried in the request message, and obtains the spectrum bandwidth 50 GHz and the center frequency $f_{-8}$.

Node C sets an operating frequency of interface 6 to the center frequency $f_{-8}$ = 193.05 THz, and determines, according to the center frequency $f_{-8}$ and the spectrum bandwidth 50 GHz, the spectrum range occupied by the wavelength connection:

$$\text{lowest frequency} = \text{center frequency} - \text{spectrum bandwidth}/2;$$

$$\text{highest frequency} = \text{center frequency} + \text{spectrum bandwidth}/2.$$

That is, the spectrum range occupied by the wavelength connection is 193.05625 to 193.10625 THz, and a wavelength cross-connection is established based on the spectrum range of interface 5 and interface 6.

Node C sends a response message to node B, where the response message carries center frequency information, namely, the center frequency $f_{-8}$ in this embodiment.

Step S204: Node B receives the response message, extracts the center frequency information carried in the response message, establishes a wavelength cross-connection based on the center frequency and spectrum bandwidth, and sends a response message carrying the center frequency information to node A.

Node B receives the response message sent by node C, extracts the center frequency information carried in the response message, and obtains the center frequency $f_{-8}$. According to the center frequency $f_{-8}$ and the spectrum bandwidth 50 GHz, it is determined that the spectrum range occupied by the wavelength connection is 193.025 to 193.075 THz, and a wavelength cross-connection is established based on the spectrum range of interface 3 and interface 4.

Node B sends a response message to node A, where the response message carries center frequency information, namely, the center frequency $f_{-8}$ in this embodiment.

Step S205: Node A receives the response message, extracts the center frequency information carried in the response message, and establishes a wavelength cross-connection based on the center frequency and spectrum bandwidth.

Node A receives the response message sent by downstream node B, extracts the center frequency information carried in the response message, and obtains the center frequency $f_{-8}$.

Node A sets the operating frequency of interface 1 to the center frequency $f_{-8}$ = 193.05 THz, determines, according to the center frequency $f_{-8}$ and the spectrum bandwidth 50 GHz, that the spectrum range occupied by the wavelength connection is 193.025 to 193.075 THz, and establishes a wavelength cross-connection based on the spectrum range of interface 1 and interface 2.

In a case in which the spectrum bandwidth and center frequency of the wavelength connection are known, besides the manner in Embodiment 1, each node may further use other steps to establish a cross-connection, for example, the source node establishes a cross-connection directly according to a spectrum range determined by the spectrum bandwidth and center frequency of the wavelength connection, and the request message carrying the spectrum bandwidth information and center frequency information may be sent to the downstream node before or after the cross-connection is established.

The intermediate node receives the request message carrying the spectrum bandwidth information and center frequency information, and establishes a cross-connection according to the spectrum range determined by the spectrum bandwidth and center frequency of the wavelength connection, where the request message carrying the spectrum bandwidth information and center frequency information may be sent to the downstream node before or after the cross-connection is established.

The intermediate node receives the response message carrying the spectrum bandwidth and center frequency, first sends a response message carrying spectrum bandwidth information and center frequency information to an upstream node, and then establishes a cross-connection according to the spectrum range determined by the spectrum bandwidth and center frequency of the wavelength connection.

The sink node receives the request message carrying the spectrum bandwidth information and center frequency information, first sends a response message carrying spectrum bandwidth information and center frequency information to the upstream node, and then establishes a cross-connection according to the spectrum range determined by the spectrum bandwidth and center frequency of the wavelength connection.

Each node may determine, according to configuration attributes, the sequence of message sending or message receiving and cross-connection establishing. The specific execution step is similar to Embodiment 1, and is not further described herein.

In Embodiment 1, the spectrum bandwidth and center frequency of the wavelength connection are known, and are notified to nodes on the wavelength connection through a request message. Furthermore, the center frequency of the wavelength connection may be automatically selected according to spectrum resources of all links that the wavelength connection passes through. The following describes the method in detail through subsequent embodiments.

Embodiment 2: The embodiment of the present invention provides a method for establishing a wavelength cross-connection. In the WDM network shown in FIG. 3, connection lines between nodes A, B, C, and D indicate optical fiber links.

A network management system or client notifies node A of establishing a wavelength connection between interface 1 of node A and interface 6 of node C in FIG. 3. The spectrum bandwidth requirement is 50 GHz, Node A calculates or obtains, through the network management system, a route of the wavelength connection: (A, B, C), namely, (interface 1, interface 2, interface 3, interface 4, interface 5, interface 6). Therefore, node A is a source node, node B is an intermediate node, and node C is a sink node. The method specifically includes the following steps:

Step S301: Node A determines a spectrum bandwidth of a wavelength connection, obtains an available center frequency set of link A-B according to the spectrum bandwidth, and sends a request message to node B, where the request message carries available center frequency set information and spectrum bandwidth information.

Node A determines that the spectrum bandwidth of the wavelength connection is 50 GHz. A link between node A and downstream (namely, in the direction from source node A to sink node C) neighboring node B is link A-B. Node A obtains an available center frequency set of link A-B according to the spectrum bandwidth 50 GHz.

As shown in FIG. 4a, free spectrum resources of link A-B are 193.04375 to 193.125 THz, and the free center frequency set is $\{f_{-9}, f_{-8}, f_{-7}, f_{-6}, f_{-5}, f_{-4}, f_{-3}, f_{-2}, f_{-1}, f_0, f_1, f_{-2}, f_{-3}, f_4\}$.

According to the spectrum bandwidth 50 GHz, the frequency range covered by each center frequency in the free center frequency set is determined:

$$\text{lowest frequency} = \text{center frequency} - \text{spectrum bandwidth}/2;$$

$$\text{highest frequency} = \text{center frequency} + \text{spectrum bandwidth}/2.$$

If center frequencies included in the frequency range covered by a free center frequency are all free center frequencies, it is determined that the free center frequency is an available center frequency.

For example, if the frequency range covered by a center frequency $f_{-7} = 193.05625$ THz is 193.03125 to 193.08125 THz, and includes center frequencies $f_{-11}$, $f_{-10}$, $f_{-9}$, $f_{-8}$, $f_{-7}$, $f_{-6}$, $f_{-5}$, $f_{-4}$, and $f_{-3}$, where $f_{-11}$ and $f_{-10}$ are not free frequencies, the center frequency $f_{-7}$ is not an available center frequency; if the frequency range covered by the center frequency $f_{-3} = 193.08125$ THz is 193.05625 to 193.10625 THz, and includes center frequencies $f_{-7}$, $f_{-6}$, $f_{-5}$, $f_{-4}$, $f_{-3}$, $f_{-2}$, $f_{-1}$, $f_0$, and $f_1$, which are all free center frequencies, the center frequency $f_{-3}$ is an available center frequency. By analog, node A obtains the available center frequency set of link A-B: $\{f_{-5}, f_{-4}, f_{-3}, f_{-2}, f_{-1}, f_0\}$.

Node A obtains the available center frequency set information corresponding to the available center frequency set and spectrum bandwidth information corresponding to the spectrum bandwidth 50 GHz.

Node A sends a request message to downstream (namely, in the direction from source node A to sink node C) neighboring node B, where the request message carries spectrum bandwidth information and available center frequency set information, namely, the spectrum bandwidth 50 GHz and the available center frequency set $\{f_{-5}, f_{-4}, f_{-3}, f_{-2}, f_{-1}, f_0\}$ in this embodiment. In addition, the request message may further carry explicit route information (interface 3, interface 4, interface 5, interface 6).

Step S302: Node B receives the request message, extracts the available center frequency set information and spectrum bandwidth information that are carried in the request message, obtains the available center frequency set of link A-B and the spectrum bandwidth of the wavelength connection; obtains an available center frequency set of link B-C according to the spectrum bandwidth, intersects the available center frequency set of link B-C and the available center frequency set of link A-B to obtain an updated available center frequency set; and sends a request message to node C, where the request message carries updated available center frequency set information and spectrum bandwidth information.

Node B receives the request message sent by node A, extracts the available center frequency set information and spectrum bandwidth information that are carried in the request message, and obtains the available center frequency set $\{f_{-5}, f_{-4}, f_{-3}, f_{-2}, f_{-1}, f_0\}$ of link A-B and the spectrum bandwidth 50 GHz of the wavelength connection.

A link between node B and downstream (namely, in the direction from source node A to sink node C) neighboring node C is link B-C. As shown in FIG. 4b, free spectrum resources of link B-C are 193.05625 to 193.11875 THz, and the free center frequency set is $\{f_{-7}, f_{-6}, f_{-5}, f_{-4}, f_{-3}, f_{-2}, f_{-1}, f_0, f_1, f_2, f_3\}$.

Node B obtains the available center frequency set $\{f_3, f_{-2}, f_{-1}\}$ of link B-C according to the spectrum bandwidth 50 GHz in a manner similar to that in step 301 of this embodiment.

Node B intersects the available center frequency set $\{f_{-5}, f_{-4}, f_{-3}, f_{-2}, f_{-1}, f_0\}$ of link A-B and the available center frequency set $\{f_3, f_{-2}, f_{-1}\}$ of link B-C to obtain an updated available center frequency set $\{f_{-3}, f_{-2}, f_{-1}\}$, and obtains updated available center frequency set information corresponding to the updated available center frequency set.

Node B sends a request message to downstream (namely, in the direction from source node A to sink node C) neighboring node C, where the request message carries the updated available center frequency set information and spectrum bandwidth information, namely, the available center frequency set $\{f_{-3}, f_{-2}, f_{-1}\}$ and the spectrum bandwidth 50 GHz in this embodiment. In addition, the request message may further carry explicit route information (interface 5, interface 6).

Step S303: Node C receives the request message, extracts the available center frequency set information and spectrum bandwidth information that are carried in the request message, obtains an intersection of available center frequency sets of all links that the wavelength connection passes through and the spectrum bandwidth of the wavelength connection; obtains an available center frequency from the available center frequency sets of all links as the center frequency of the wavelength connection, and establishes a wavelength cross-connection based on the center frequency and spectrum bandwidth; and sends a response message to node B, where the response message carries center frequency information.

Node C receives the request message sent by node B, extracts the available center frequency set information and spectrum bandwidth information that are carried in the request message, and obtains the intersection $\{f_3, f_{-2}, f_{-1}\}$ of available center frequency sets of all links (including links A-B and B-C) that the wavelength connection passes through and the spectrum bandwidth 50 GHz of the wavelength connection.

Node C obtains an available center frequency from the intersection of available center frequency sets of all links as the center frequency of the wavelength connection: if only one available center frequency exists in the available center frequency sets, the available center frequency is selected as the center frequency of the wavelength connection; if multiple available center frequencies exist in the available center frequency sets, an available center frequency may be selected as the center frequency of the wavelength connection at random or according to a rule, which is not limited by this embodiment.

In this embodiment, node C selects $f_{-3}$ from the available center frequency set $\{f_3, f_{-2}, f_{-1}\}$ as the center frequency.

Node C sets the operating frequency of interface 6 to the center frequency $f_{-3}$ = 193.1 + (-3 × 6.25/1000) = 193.08125 THz, determines, according to the center frequency $f_{-3}$ and the spectrum bandwidth 50 GHz, that the spectrum range occupied by the wavelength connection is 193.05625 to 193.10625 THz, and establishes a wavelength cross-connection based on the spectrum range of interface 5 and interface 6.

Node C obtains center frequency information corresponding to the center frequency $f_{-3}$ = 193.08125 THz of the wavelength connection.

Node C sends a response message to upstream (namely, in the direction from sink node C to source node A) neighboring node B, where the response message carries center frequency information, namely, the center frequency $f_{-3}$ in this embodiment.

Step S304: Node B receives the response message, extracts the center frequency information carried in the response message, obtains the center frequency of the wavelength connection, and establishes a wavelength cross-connection based on the center frequency and spectrum bandwidth; and sends a response message to node A, where the response message carries center frequency information.

Node B receives the response message sent by node C, extracts the center frequency information carried in the response message, and obtains the center frequency $f_{-3}$ of the wavelength connection. According to the center frequency $f_{-3}$ and the spectrum bandwidth 50 GHz, it is determined that the spectrum range occupied by the wavelength connection is 193.05625 to 193.10625 THz, and a wavelength cross-connection is established based on the spectrum range of interface 3 and interface 4.

Node B sends a response message to upstream (namely, in the direction from sink node C to source node A) neighboring node A, where the response message carries center frequency information, namely, the center frequency $f_{-3}$ in this embodiment.

Step S305: Node A receives the response message, extracts center frequency information carried in the response message, obtains a center frequency of the wavelength connection, and establishes a wavelength cross-connection based on the spectrum range determined by the center frequency and the spectrum bandwidth.

Node A receives the response message sent by node B, extracts the center frequency information carried in the response message, and obtains the center frequency $f_{-3}$.

Node A sets the operating frequency of interface 1 to the center frequency $f_{-3}$ = 193.1 + (-3 × 6.25/1000) = 193.08125 THz. According to the center frequency $f_{-3}$ and the spectrum bandwidth 50 GHz, it is determined that the spectrum range occupied by the wavelength connection is 193.05625 to 193.10625 THz, and a wavelength cross-connection is established based on the spectrum range of interface 1 and interface 2.

In Embodiment 2, available center frequency sets of all links that the wavelength connection passes through are collected through a request message, namely, the intersection of available center frequency sets of all links that the wavelength connection passes through. The sink node (namely, node C in Embodiment 2) of the request message obtains an available center frequency from the intersection as the center frequency of the wavelength connection.

The following method may be further used to determine the center frequency of the wavelength connection: collecting, through a request message, free center frequency sets of all links that the wavelength connection passes through, that is, collecting an intersection of free center frequency sets of all links that the wavelength connection passes through, and selecting, by the sink node of the request message, an available center frequency set from the intersection as the center frequency of the wavelength connection. The following describes the method in detail through Embodiment 3 of the present invention.

Embodiment 3: The embodiment of the present invention provides a method for establishing a wavelength cross-connection. In the WDM network shown in FIG. 3, connection lines between nodes A, B, C, and D indicate optical fiber links.

A network management system or client notifies node A of establishing a wavelength connection between interface 1 of node A and interface 6 of node C in FIG. 3. The spectrum bandwidth requirement is 50 GHz, Node A calculates or obtains, through the network management system, a route of the wavelength connection: (A, B, C), namely, (interface 1, interface 2, interface 3, interface 4, interface 5, interface 6). Therefore, node A is a source node, node B is an intermediate node, and node C is a sink node. The method specifically includes the following steps:

Step S401: Node A determines a spectrum bandwidth of a wavelength connection, and sends a request message to node B, where the request message carries free center frequency set information and spectrum bandwidth information.

Node A determines that the spectrum bandwidth of the wavelength connection is 50 GHz. A link between node A and downstream (namely, in the direction from source node A to sink node C) neighboring node B is link A-B. As shown in FIG. 4a, free spectrum resources of link A-B are 193.04375 to 193.125 THz, and the free center frequency set is $\{f_{-9}, f_{-8}, f_{-7}, f_{-6}, f_{-5}, f_{-4}, f_{-3}, f_{-2}, f_{-1}, f_0, f_1, f_2, f_3, f_4\}$.

Node A obtains the free center frequency set information corresponding to the free center frequency set and spectrum bandwidth information corresponding to the spectrum bandwidth 50 GHz.

Node A sends a request message to downstream (namely, in the direction from source node A to sink node C) neighboring node B, where the request message carries spectrum bandwidth information and free center frequency set information, namely, the spectrum bandwidth 50 GHz and the free center frequency set $\{f_{-9}, f_{-8}, f_{-7}, f_{-6}, f_{-5}, f_{-4}, f_{-3}, f_{-2}, f_{-1}, f_0, f_1, f_2, f_3, f_4\}$ in this embodiment. In addition, the request message may further carry explicit route information (interface 3, interface 4, interface 5, interface 6).

Step S402: Node B receives the request message, and extracts the free center frequency set information and spectrum bandwidth information that are carried in the request message; obtains the free center frequency set of link A-B and the spectrum bandwidth of the wavelength connection; intersects the free center frequency set of link B-C and the free center frequency set of link A-B to obtain an updated free center frequency set; and sends a request message to node C, where the request message carries updated free center frequency set information and spectrum bandwidth information.

Node B receives the request message sent by node A, extracts the free center frequency set information and spectrum bandwidth information that are carried in the request message, and obtains the free center frequency set $\{f_{-9}, f_{-8}, f_{-7}, f_{-6}, f_{-5}, f_{-4}, f_{-3}, f_{-2}, f_{-1}, f_0, f_1, f_2, f_3, f_4\}$ of link A-B and the spectrum bandwidth 50 GHz of the wavelength connection.

A link between node B and downstream (namely, in the direction from source node A to sink node C) neighboring node C is link B-C. As shown in FIG. 4b, free spectrum resources of link B-C are 193.05625 to 193.11875 THz, and the free center frequency set is $\{f_{-7}, f_{-6}, f_{-5}, f_{-4}, f_{-3}, f_{-2}, f_{-1}, f_0, f_1, f_2, f_3\}$.

Node B intersects a free center frequency set $\{f_{-9}, f_{-8}, f_{-7}, f_{-6}, f_{-5}, f_{-4}, f_{-3}, f_{-2}, f_{-1}, f_0, f_1, f_2, f_3, f_4\}$ of link A-B and the free center frequency set $\{f_{-7}, f_{-6}, f_{-5}, f_{-4}, f_{-3}, f_{-2}, f_{-1}, f_0, f_1, f_2, f_3\}$ of link B-C to obtain an updated free center frequency set $\{f_{-7}, f_{-6}, f_{-5}, f_{-4}, f_{-3}, f_{-2}, f_{-1}, f_0, f_1, f_2, f_3\}$, and obtains updated free center frequency set information corresponding to the updated free center frequency set.

Node B sends a request message to downstream (namely, in the direction from source node A to sink node C) neighboring node C, where the request message carries updated free center frequency set information and spectrum bandwidth information, namely, the free center frequency set $\{f_{-7}, f_{-6}, f_{-5}, f_{-4}, f_{-3}, f_{-2}, f_{-1}, f_0, f_1, f_2, f_3\}$ and the spectrum bandwidth 50 GHz in this embodiment. In addition, the request message may further carry explicit route information (interface 5, interface 6).

Step S403: Node C receives the request message, extracts the free center frequency set information and spectrum bandwidth information that are carried in the request message, obtains an intersection of free center frequency sets of all links that the wavelength connection passes through and the spectrum bandwidth of the wavelength connection; obtains an available center frequency from the free center frequency sets of all links as the center frequency of the wavelength connection, and establishes a wavelength cross-connection based on the center frequency and spectrum bandwidth; and sends a response message to node B, where the response message carries center frequency information.

Node C receives the request message sent by node B, extracts the free center frequency set information and spectrum bandwidth information that are carried in the request message, and obtains a free center frequency set $\{f_{-7}, f_{-6}, f_{-5}, f_{-4}, f_{-3}, f_{-2}, f_{-1}, f_0, f_1, f_2, f_3\}$ of all links (including links A-B and B-C) that the wavelength connection passes through and the spectrum bandwidth 50 GHz of the wavelength connection.

Node C obtains an available center frequency from the intersection of free center frequency sets of all links as the center frequency of the wavelength connection.

First, node C searches for available center frequencies in the free center frequency set $\{f_{-7}, f_{-6}, f_{-5}, f_{-4}, f_{-3}, f_{-2}, f_{-1}, f_0, f_1, f_2, f_3\}$. According to the spectrum bandwidth 50 GHz, the frequency range covered by each free center frequency in the free center frequency set is determined:

$$\text{lowest frequency} = \text{center frequency} - \text{spectrum bandwidth}/2;$$

$$\text{highest frequency} = \text{center frequency} + \text{spectrum bandwidth}/2.$$

If center frequencies included in the frequency range covered by a free center frequency are all free center frequencies, it is determined that the center frequency is an available center frequency.

For example, if the frequency range covered by the center frequency $f_{-7}$ = 193.05625 THz is 193.03125 to 193.08125 THz, and includes center frequencies $f_{-11}, f_{-10}, f_{-9}, f_{-8}, f_{-7}, f_{-6}, f_{-5}, f_{-4},$ and $f_{-3}$, where $f_{-11}$ and $f_{-10}$ are not free frequencies, the center frequency $f_{-7}$ is not an available center frequency; if the frequency range covered by the center frequency $f_{-3}$ = 193.08125 THz is 193.05625 to 193.10625 THz, and includes center frequencies $f_{-7}, f_{-6}, f_{-5}, f_{-4}, f_{-3}, f_{-2},$

$f_{-1}$, $f_0$, and $f_1$, which are all free center frequencies, the center frequency $f_{-3}$ is an available center frequency. By analogy, node C obtains the available center frequency set, namely, all available center frequencies: $\{f_{-3}, f_{-2}, f_{-1}\}$.

By using a similar manner in step 303 in Embodiment 2, Node C obtains an available center frequency from all available center frequencies (namely, an available center frequency set) as the center frequency of the wavelength connection. In this embodiment, node C selects $f_{-3}$ from all available center frequencies as a center frequency.

Node C sets the operating frequency of interface 6 to the center frequency $f_{-3} = 193.1 + (-3 \times 6.25/1000) = 193.08125$ THz. According to the center frequency $f_{-3}$ and the spectrum bandwidth 50 GHz, it is determined that the spectrum range occupied by the wavelength connection is 193.05625 to 193.10625 THz, and a wavelength cross-connection is established based on the spectrum range of interface 5 and interface 6.

Node C obtains center frequency information corresponding to the center frequency $f_{-3} = 193.08125$ THz of the wavelength connection.

Node C sends a response message to upstream (namely, in the direction from sink node C to source node A) neighboring node B, where the response message carries center frequency information, namely, the center frequency $f_{-3}$ in this embodiment.

In this embodiment, the implementation method of steps S404 and S405 are similar to that of steps S304 and S305, and is not further described herein.

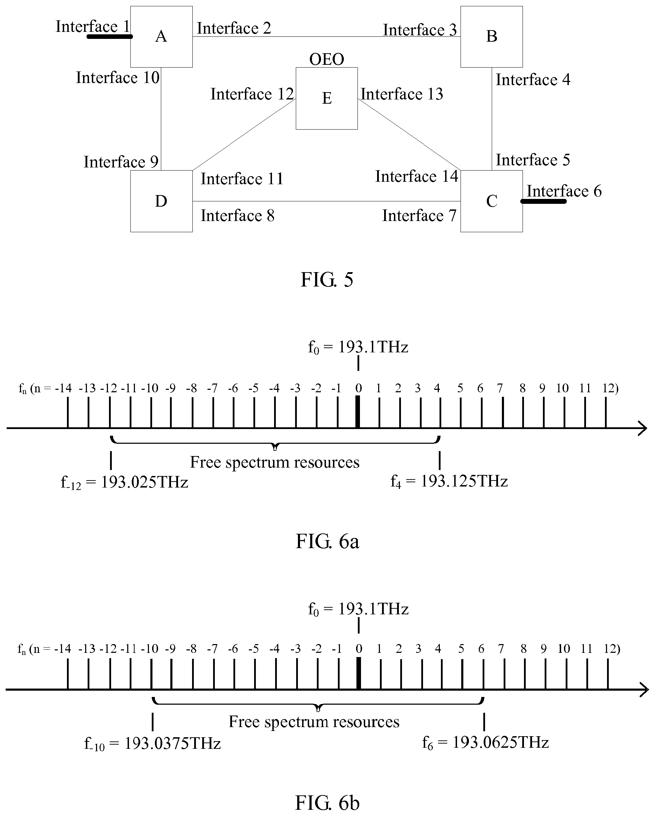

Embodiment 4: The embodiment of the present invention provides a method for establishing a wavelength cross-connection. In the WDM network shown in FIG. 5, connection lines between nodes A, B, C, D, and E indicate optical fiber links, and node E has an OEO (Optical-Electrical-Optical, optical-electrical-optical) conversion function.

A network management system or client notifies node A of establishing a wavelength connection between interface 1 of node A and interface 6 of node C in FIG. 5. The route of the wavelength connection is (A, D, E, C), namely, (interface 1, interface 10, interface 9, interface 11, interface 12, interface 13, interface 14, interface 6). Therefore, node A is a source node, node D is an intermediate node, and node C is a sink node. Node E is an OEO node, and implements the OEO function, that is, node E uses an electrical cross-connection to splice two wavelength segment connections A-E and E-C. Spectrum bandwidth requirements of segment connection A-E are 50 GHz, and spectrum bandwidth requirements of segment connection E-C are 37.5 GHz. Segment connection A-E is a segment connection at a side of source node A of node E, and segment connection E-C is a segment connection at sink node C of node E. The method specifically includes the following steps:

Step S501: Node A determines a spectrum bandwidth of each segment connection on a wavelength connection, obtains an available center frequency set of link A-D according to the spectrum bandwidth of segment connection A-E; and sends a request message to node D, where the request message carries available center frequency set information and spectrum bandwidth information.

Node A determines that the spectrum bandwidth of segment connection A-E on the wavelength connection is 50 GHz, and that the spectrum bandwidth of segment connection E-C is 37.5 GHz.

A link between node A and downstream (namely, in the direction from source node A to sink node C) neighboring node D is link A-D. As shown in FIG. 6a, free spectrum resources of link A-D are 193.025 to 193.125 THz, and the free center frequency set is $\{f_{-12}, f_{-11}, f_{-10}, f_{-9}, f_{-8}, f_{-7}, f_{-6}, f_{-5}, f_{-4}, f_{-3}, f_{-2}, f_{-1}, f_0, f_1, f_2, f_3, f_4\}$.

Node A obtains the available center frequency set $\{f_{-8}, f_{-7}, f_{-6}, f_{-5}, f_{-4}, f_{-3}, f_{-2}, f_{-1}, f_0\}$ of link A-D according to the spectrum bandwidth 50 GHz of segment connection A-E in a manner similar to that in step S301 in Embodiment 2.

Node A obtains available center frequency set information corresponding to the available center frequency set of link A-D and spectrum bandwidth information corresponding to the spectrum bandwidth of each segment connection (including segment connections A-E and E-C) on the wavelength connection.

Node A sends a request message to downstream node D, where the request message carries spectrum bandwidth information of each segment connection on the wavelength connection, namely, the spectrum bandwidth 50 GHz of segment connection A-E and the spectrum bandwidth 37.5 GHz of segment connection E-C in this embodiment. The request message further carries available center frequency set information, namely, the available center frequency set $\{f_{-8}, f_{-7}, f_{-6}, f_{-5}, f_{-4}, f_{-3}, f_{-2}, f_{-1}, f_0\}$ of link A-D in this embodiment. In addition, the request message may further carry explicit route information (interface 9, interface 11, interface 12, interface 13, interface 14, interface 6).

Step S502: Node D receives the request message, and extracts the available center frequency set information and spectrum bandwidth information that are carried in the request message; obtains the available center frequency set of link D-E according to the spectrum bandwidth of segment connection A-E, intersects the available center frequency set of link D-E and the available center frequency set of link A-D to obtain an updated available center frequency set; and sends a request message to node E, where the request message carries spectrum bandwidth information of each segment connection and updated available center frequency set information.

Node D receives the request message sent by node A, extracts the available center frequency set information and spectrum bandwidth information that are carried in the request message, and obtains the spectrum bandwidth 50 GHz of segment connection A-E, the spectrum bandwidth 37.5 GHz of segment connection E-C, and the available center frequency set $\{f_{-8}, f_{-7}, f_{-6}, f_{-5}, f_{-4}, f_{-3}, f_{-2}, f_{-1}, f_0\}$ of segment connection A-E.

A link between node D and downstream (namely, in the direction from source node A to sink node C) neighboring node E is link D-E. As shown in FIG. 6b, free spectrum resources of link D-E are 193.0375 to 193.0625 THz, and the free center frequency set is $\{f_{-10}, f_{-9}, f_{-8}, f_{-7}, f_{-6}, f_{-5}, f_{-4}, f_{-3}, f_{-2}, f_{-1}, f_0, f_1, f_2, f_3, f_4, f_5, f_6\}$.

Node D obtains the available center frequency set $\{f_{-6}, f_{-5}, f_{-4}, f_{-3}, f_{-2}, f_{-1}, f_0, f_1, f_2\}$ of link D-E according to the spectrum bandwidth 50 GHz of segment connection A-E in a manner similar to that in step S301 in Embodiment 2.

Node D intersects the available center frequency set $\{f_{-8}, f_{-7}, f_{-6}, f_{-5}, f_{-4}, f_{-3}, f_{-2}, f_{-1}, f_0\}$ of link A-D and the available center frequency set $\{f_{-6}, f_{-5}, f_{-4}, f_{-3}, f_{-2}, f_{-1}, f_0, f_1, f_2\}$ of link D-E to obtain an available center frequency set $\{f_{-6}, f_{-5}, f_{-4}, f_{-3}, f_{-2}, f_{-1}, f_0\}$ of an updated segment connection A-E.

Node D sends a request message to downstream node E, where the request message carries spectrum bandwidth information of a segment connection of node D and each downstream (namely, between node D and sink node C) segment connection, namely, the spectrum bandwidth 50 GHz of segment connection A-E and the spectrum bandwidth 37.5 GHz of segment connection E-C in this embodiment. The request message further carries available center frequency set information of the updated segment connection A-E, namely, the updated available center frequency set $\{f_{-6}, f_{-5}, f_{-4}, f_{-3}, f_{-2}, f_{-1}, f_0\}$ in this embodiment. In addition, the request message may further carry explicit route information (interface 12, interface 13, interface 14, interface 6).

Step S503: Node E receives the request message, extracts the available center frequency set information and spectrum bandwidth information that are carried in the request message, obtains an intersection of available center frequency sets of all links that segment connection A-E passes through, and obtains spectrum bandwidths of segment connection A-E and segment connection E-C; determines the center frequency of segment connection A-E; obtains the available center frequency set of link E-C according to the spectrum bandwidth of segment connection E-C; and sends a request message to node C, where the request message carries available center frequency set information and spectrum bandwidth information.

Node E receives the request message sent by node D, extracts the spectrum bandwidth information and available center frequency set information that are carried in the request message, and obtains the spectrum bandwidth 50 GHz of segment connection A-E, the spectrum bandwidth 37.5 GHz of segment connection E-C, and the available center frequency set $\{f_{-6}, f_{-5}, f_{-4}, f_{-3}, f_{-2}, f_{-1}, f_0\}$ of segment connection A-E.

Node E obtains an available center frequency from the available center frequency set as the center frequency of segment connection A-E in a manner similar to that in step 303 in Embodiment 2. In this embodiment, node E selects $f_{-3}$ from the available center frequency set $\{f_{-6}, f_{-5}, f_{-4}, f_{-3}, f_{-2}, f_{-1}, f_0\}$ of segment connection A-E as the center frequency of segment connection A-E.

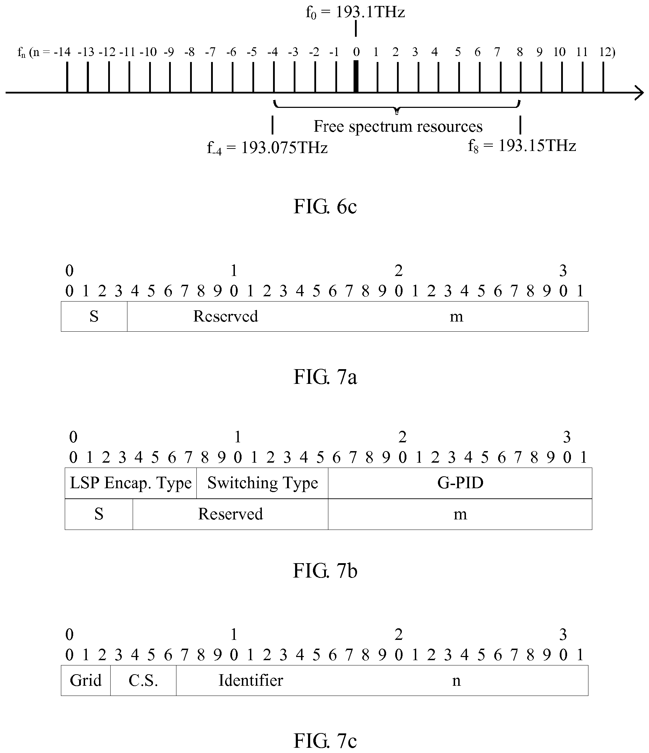

A link between node E and downstream (namely, in the direction from source node A to sink node C) neighboring node C is link E-C. As shown in FIG. 6c, free spectrum resources of link E-C are 193.075 to 193.15 THz, and free center frequencies are $\{f_{-4}, f_{-3}, f_{-1}, f_{-1}, f_0, f_1, f_2, f_3, f_4, f_5, f_6, f_7, f_8\}$.

Node E obtains the available center frequency set $\{f_{-1}, f_0, f_1, f_2, f_3, f_4, f_5\}$ of link E-C according to the spectrum bandwidth 37.5 GHz of segment connection E-C in a manner similar to that in step S301 in Embodiment 2.

Node E sends a request message to downstream node C, where the request message carries spectrum bandwidth information of each downstream segment connection of node E, namely, the spectrum bandwidth 37.5 GHz of segment connection E-C in this embodiment. The request message further carries available center frequency set information of the downstream segment connection of node E, namely, the available center frequency set $\{f_{-1}, f_0, f_1, f_2, f_3, f_4, f_5\}$ of segment connection E-C in this embodiment. In addition, the request message may further carry explicit route information (interface 14, interface 6).

Step S504: Node C receives the request message, extracts the spectrum bandwidth information and available center frequency set information that are carried in the request message, and obtains the spectrum bandwidth of segment connection E-C and an intersection of available center frequency sets of all links that segment connection E-C passes through; determines the center frequency of segment connection E-C; establishes a wavelength cross-connection based on the center frequency and spectrum bandwidth of segment connection E-C; and sends a response message to node E, where the response message carries center frequency information of segment connection E-C.

Node C receives the request message sent by node E, extracts the spectrum bandwidth information and available center frequency set information that are carried in the request message, and obtains the spectrum bandwidth 37.5 GHz of segment connection E-C and an available center frequency set $\{f_{-1}, f_0, f_1, f_2, f_3, f_4, f_5\}$ of segment connection E-C.

Node C obtains an available center frequency from the available center frequency set as the center frequency of segment connection E-C in a manner similar to that in step 303 in Embodiment 2. In this embodiment, node C selects $f_{-2}$ from the available center frequency set as the center frequency of segment connection E-C.

Node C sets the operating frequency of interface 6 to the center frequency $f_{-2} = 193.1 + (-2 \times 6.25/1000) = 193.0875$ THz of segment connection E-C. According to the center frequency $f_{-2}$ and spectrum bandwidth 37.5 GHz of segment connection E-C, it is determined that the spectrum range occupied by the segment connection is 193.06875 to 193.10625 THz, and a wavelength cross-connection is established based on the spectrum range of interface 14 and interface 6.

Node C sends a response message to upstream node E, where the response message carries center frequency information of the segment connection of node C, namely, the center frequency $f_{-2}$ of segment connection E-C in this embodiment.

Step S505: Node E receives the response message, extracts the center frequency information carried in the response message, and obtains the center frequency of segment connection E-C; determines a spectrum range based on the center frequency and spectrum bandwidth of segment connection A-E, determines a spectrum range based on the center frequency and spectrum bandwidth of segment connection E-C, and establishes a wavelength cross-connection of two segment connections; and sends a response message to node D, where the response message carries center frequency information.

Node E receives the response message sent by node C, extracts the center frequency information carried in the response message, and obtains the center frequency $f_{-2}$ of the wavelength connection E-C.

Node E sets the operating frequency of interface 13 to the center frequency $f_{-2}$ = 193.1 + (-2 × 6.25/1000) = 193.0625 THz of segment connection E-C. According to the center frequency $f_{-2}$ and spectrum bandwidth 37.5 GHz of segment connection E-C, it is determined that the spectrum range occupied by segment connection E-C is 193.06875 to 193.10625 THz.

Node E sets the operating frequency of interface 12 to the center frequency $f_{-3}$ = 193.1 + (-3 × 6.25/1000) = 193.08125 THz of segment connection A-E. According to the center frequency $f_{-3}$ and spectrum bandwidth 50 GHz of segment connection A-E, it is determined that the spectrum range occupied by segment connection A-E is 193.05625 to 193.10625 THz.

A wavelength cross-connection is established between the spectrum range 193.05625 to 193.10625 THz occupied by segment connection A-E and the spectrum range 193.06875 to 193.10625 THz occupied by segment connection E-C.

Node E sends a response message to upstream node D, where the response message carries center frequency information of the upstream segment connection of node E, namely, the center frequency information $f_{-3}$ of segment connection A-E in this embodiment.

Step S506: Node D receives the response message, extracts spectrum bandwidth information carried in the response message, obtains the center frequency of segment connection A-E, and establishes a wavelength cross-connection based on the spectrum range determined by the center frequency and spectrum bandwidth of segment connection A-E; and sends a response message to node A, where the response message carries center frequency information of segment connection A-E.

Node D receives the response message sent by node E, extracts the center frequency information carried in the response message, and obtains the center frequency $f_{-3}$ of segment connection A-E. According to the center frequency $f_{-3}$ and spectrum bandwidth 50 GHz of segment connection A-E, it is determined that the spectrum range occupied by segment connection A-E is 193.05625 to 193.10625 THz, and a wavelength cross-connection is established based on the spectrum range of interface 9 and interface 11.

Node D sends a response message to node A, where the response message carries center frequency information, namely, center frequency information $f_{-3}$ of segment connection A-E in this embodiment.

Step S507: Node A receives the response message, extracts center frequency information carried in the response message, obtains a center frequency of segment connection A-E, and establishes a wavelength cross-connection based on the spectrum range determined by the center frequency and spectrum bandwidth of segment connection A-E.

Node A receives the response message sent by node D, extracts the center frequency information carried in the response message, and obtains the center frequency $f_{-3}$ of segment connection A-E.

Node A sets the operating frequency of interface 1 to the center frequency $f_{-3}$ = 193.1 + (-3 × 6.25/1000) = 193.08125 THz of segment connection A-E. According to the center frequency $f_{-3}$ and spectrum bandwidth 50 GHz of the segment connection, it is determined that the spectrum range occupied by segment connection A-E is 193.05625 to 193.10625 THz, and a wavelength cross-connection is established based on the spectrum range of interface 1 and interface 10.

Embodiment 5: The embodiment of the present invention provides a method for establishing a wavelength cross-connection. In the WDM network shown in FIG. 5, connection lines between nodes A, B, C, D, and E indicate optical fiber links, and node E has an OEO (optical-electrical-optical) conversion function.

A network management system or client notifies node A of establishing a wavelength connection between interface 1 of node A and interface 6 of node C in FIG. 5. The route of the wavelength connection is (A, D, E, C), namely, (interface 1, interface 10, interface 9, interface 11, interface 12, interface 13, interface 14, interface 6). Therefore, node A is a source node, node D is an intermediate node, and node C is a sink node. Node E is an OEO node, and implements the OEO function, that is, node E uses an electrical cross-connection to splice two wavelength segment connections A-E and E-C. Spectrum bandwidth requirements of segment connection A-E are 50 GHz, and spectrum bandwidth requirements of segment connection E-C are 37.5 GHz. Segment connection A-E is a segment connection at a side of source node A of node E, and segment connection E-C is a segment connection at sink node C of node E. The method specifically includes the following steps:

Step S601: Node A determines a spectrum bandwidth of each segment connection on a wavelength connection, and sends a request message to node D, where the request message carries spectrum bandwidth information and available center frequency set information.

Node A determines that the spectrum bandwidth of segment connection A-E on the wavelength connection is 50 GHz, and that the spectrum bandwidth of segment connection E-C is 37.5 GHz.

A link between node A and downstream (namely, in the direction from source node A to sink node C) neighboring node D is link A-D. As shown in FIG. 6a, free spectrum resources of link A-D are 193.025 to 193.125 THz, and the free center frequency set is $\{f_{-12}, f_{-11}, f_{-10}, f_{-9}, f_{-8}, f_{-7}, f_{-6}, f_{-5}, f_{-4}, f_{-3}, f_{-2}, f_{-1}, f_0, f_1, f_2, f_3, f_4\}$.

Node A sends a request message to downstream node D, where the request message carries spectrum bandwidth information of each segment connection on the wavelength connection, namely, the spectrum bandwidth 50 GHz of segment connection A-E and the spectrum bandwidth 37.5 GHz of segment connection E-C in this embodiment. The request message further carries free center frequency set information of the segment connection of node A, namely, the free center frequency set $f_{-12}, f_{-11}, f_{-10}, f_{-9}, f_{-8}, f_{-7}, f_{-6}, f_{-5}, f_{-4}, f_{-3}, f_{-2}, f_{-1}, f_0, f_1, f_2, f_3, f_4\}$ of segment connection A-E in this embodiment. In addition, the request message may further carry explicit route information (interface 9, interface 11, interface 12, interface 13, interface 14, interface 6).

Step S602: Node D receives the request message, and extracts spectrum bandwidth information and available center frequency set information that are carried in the request message; intersects the free center frequency set of link D-E and the free center frequency set of link A-D to obtain an updated available center frequency set; and sends a request message to node E, where the request message carries spectrum bandwidth information and updated free center frequency set information.

Node D receives the request message sent by node A, extracts the spectrum bandwidth information and free center frequency set information that are carried in the request message, and obtains the spectrum bandwidth 50 GHz of segment connection A-E, the spectrum bandwidth 37.5 GHz of segment connection E-C, and the free center frequency set $\{f_{-12}, f_{-11}, f_{-10}, f_{-9}, f_{-8}, f_{-7}, f_{-6}, f_{-5}, f_{-4}, f_{-3}, f_{-2}, f_{-1}, f_0, f_1, f_2, f_3, f_4\}$ of segment connection A-E.

A link between node D and downstream (namely, in the direction from source node A to sink node C) neighboring node E is link D-E. As shown in FIG. 6b, free spectrum resources of link D-E are 193.0375 to 193.0625 THz, and the free center frequency set is $\{f_{-10}, f_{-9}, f_{-8}, f_{-7}, f_{-6}, f_{-5}, f_{-4}, f_{-3}, f_{-2}, f_{-1}, f_0, f_1, f_2, f_3, f_4, f_5, f_6\}$.

Node D intersects the free center frequency set $\{f_{-12}, f_{-11}, f_{-10}, f_{-9}, f_{-8}, f_{-7}, f_{-6}, f_{-5}, f_{-4}, f_{-3}, f_{-2}, f_{-1}, f_0, f_1, f_2, f_3, f_4\}$ of link A-D and the free center frequency set $\{f_{-10}, f_{-9}, f_{-8}, f_{-7}, f_{-6}, f_{-5}, f_{-4}, f_{-3}, f_{-2}, f_{-1}, f_0, f_1, f_2, f_3, f_4, f_5, f_6\}$ of link D-E to obtain a free center frequency set $\{f_{-10}, f_{-9}, f_{-8}, f_{-7}, f_{-6}, f_{-5}, f_{-4}, f_{-3}, f_{-2}, f_{-1}, f_0, f_1, f_2, f_3, f_4\}$ of an updated segment connection A-E.

Node D sends a request message to downstream node E, where the request message carries spectrum bandwidth information of a segment connection of node D and each downstream (namely, between node D and sink node C) segment connection, namely, the spectrum bandwidth 50 GHz of segment connection A-E and the spectrum bandwidth 37.5 GHz of segment connection E-C in this embodiment. The request message further carries free center frequency set information of the updated segment connection A-E, namely, the free center frequency set $\{f_{-10}, f_{-9}, f_{-8}, f_{-7}, f_{-6}, f_{-5}, f_{-4}, f_{-3}, f_{-2}, f_{-1}, f_0, f_1, f_2, f_3, f_4\}$ in this embodiment. In addition, the request message may further carry explicit route information (interface 12, interface 13, interface 14, interface 6).

Step S603: Node E receives the request message, extracts the spectrum bandwidth information and available center frequency set information that are carried in the request message, obtains an intersection of free center frequency sets of all links that segment connection A-E passes through, and obtains spectrum bandwidths of segment connection A-E and segment connection E-C; determines the center frequency of a first segment connection; and sends a request message to node C, where the request message carries free center frequency set information and spectrum bandwidth information.

Node E receives the request message sent by node D, extracts the spectrum bandwidth information and available center frequency set information that are carried in the request message, and obtains the spectrum bandwidth 50 GHz of segment connection A-E, the spectrum bandwidth 37.5 GHz of segment connection E-C, and the free center frequency set $\{f_{-10}, f_{-9}, f_{-8}, f_{-7}, f_{-6}, f_{-5}, f_{-4}, f_{-3}, f_{-2}, f_{-1}, f_0, f_1, f_2, f_3, f_4\}$ of segment connection A-E.

Node E obtains an available center frequency from the free center frequency set as the center frequency of segment connection A-E in a manner similar to that in step 403 in Embodiment 3. Node E first searches for available center frequencies in the free center frequency set, and then obtains an available center frequency from all available center frequencies $\{f_{-6}, f_{-5}, f_{-4}, f_{-3}, f_{-2}, f_{-1}, f_0\}$ as the center frequency of segment connection A-E. In this embodiment, node E selects $f_{-3}$ from the free center frequency set of segment connection A-E as the center frequency of segment connection A-E.

A link between node E and downstream (namely, in the direction from source node A to sink node C) neighboring node C is link E-C. As shown in FIG. 6c, free spectrum resources of link E-C are 193.075 to 193.15 THz, and free center frequencies are $\{f_{-4}, f_{-3}, f_{-2}, f_{-1}, f_0, f_1, f_2, f_3, f_4, f_5, f_6, f_7, f_8\}$.

Node E sends a request message to downstream node C, where the request message carries spectrum bandwidth information of each downstream segment connection of node E, namely, the spectrum bandwidth 37.5 GHz of segment connection E-C in this embodiment. The request message further carries free center frequency set information of the downstream segment connection of node E, namely, the free center frequency set $\{f_{-4}, f_{-3}, f_{-2}, f_{-1}, f_0, f_1, f_2, f_3, f_4, f_5, f_6, f_7, f_8\}$ of segment connection E-C in this embodiment. In addition, the request message may further carry explicit route information (interface 14, interface 6).

Step S604: Node C receives the request message, extracts the spectrum bandwidth information and available center frequency set information that are carried in the request message, and obtains the spectrum bandwidth of segment connection E-C and an intersection of available center frequency sets of all links that segment connection E-C passes through; determines the center frequency of segment connection E-C; establishes a wavelength cross-connection based on the center frequency and spectrum bandwidth of segment connection E-C; and sends a response message to node E, where the response message carries center frequency information of segment connection E-C.

Node C receives the request message sent by node E, extracts the spectrum bandwidth information and free center frequency set information that are carried in the request message, and obtains the spectrum bandwidth 37.5 GHz of segment connection E-C and the free center frequency set $\{f_{-4}, f_{-3}, f_{-2}, f_{-1}, f_0, f_1, f_2, f_3, f_4, f_5, f_6, f_7, f_8\}$ of segment connection E-C.

Node C obtains an available center frequency from the free center frequency set as the center frequency of segment connection E-C in a manner similar to that in step S403 in Embodiment 3. Node C first searches for available center frequencies in the free center frequency set, and then obtains an available center frequency from all available center frequencies $\{f_1, f_0, f_1, f_2, f_3, f_4, f_5\}$ as the center frequency of segment connection E-C. In this embodiment, node C selects $f_{-2}$ from the available center frequency set as the center frequency of segment connection E-C.

Node C sets the operating frequency of interface 6 to the center frequency $f_{-2} = 193.1 + (-2 \times 6.25/1000) = 193.0875$ THz of segment connection E-C. According to the center frequency $f_{-2}$ and spectrum bandwidth 37.5 GHz of segment connection E-C, it is determined that the spectrum range occupied by the segment connection is 193.06875 to 193.10625 THz, and a wavelength cross-connection is established based on the spectrum range of interface 14 and interface 6.

Node C sends a response message to upstream node E, where the response message carries center frequency information of the segment connection of node C, namely, the center frequency $f_{-2}$ of segment connection E-C in this embodiment.

In this embodiment, the implementation method of steps S605, S606, and S607 are similar to that of steps S505, S506, and S507 in Embodiment 4, and is not further described herein.

The route of the wavelength connection may include one or more OEO nodes. Embodiment 4 and Embodiment 5 describe a case in which the route of the wavelength connection includes one OEO node. In a case in which multiple OEO nodes exist between the source node and the sink node, processing of each OEO node is similar to processing of the OEO node described in Embodiment 4 and Embodiment 5, and is not further described herein. No intermediate node, or one or more intermediate nodes may be included between the source node and the OEO node, between the OEO node and the sink node, and between the OEO nodes, which is not limited in the embodiment of the present invention.

By using the method for establishing a wavelength cross-connection according to the embodiments of the present invention, a wavelength cross-connection of a variable spectrum bandwidth on a node can be automatically established. The implementation is simple and reliability is high.

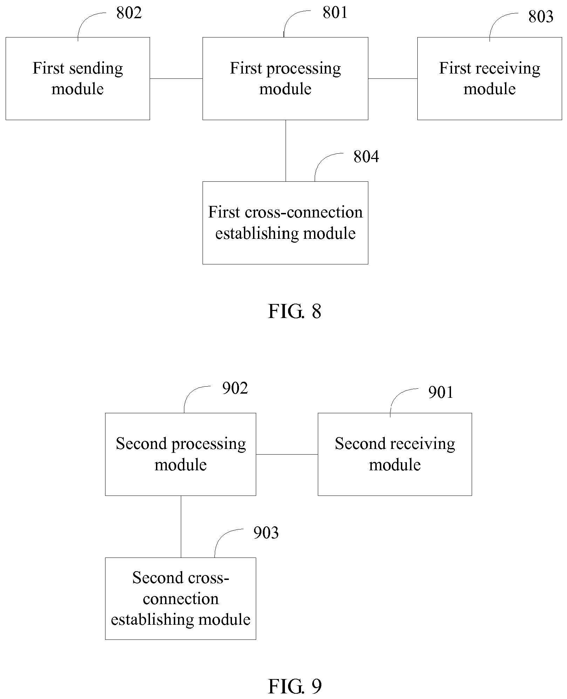

Embodiment 6: The embodiment of the present invention provides a node device, as shown in FIG. 8, including:

a first processing module 801, configured to determine a spectrum bandwidth of a wavelength connection, obtain a first available center frequency set of a first link according to the spectrum bandwidth, where the first link is a link between the local node and a neighboring node in a direction from the local node to a second node; further configured to obtain first available center frequency set information corresponding to the first available center frequency set and spectrum bandwidth information corresponding to the spectrum bandwidth; and further configured to obtain a center frequency of the wavelength connection, where the center frequency is an available center frequency obtained by the second node from a second available center frequency set, and the second available center frequency set is an intersection of available center frequency sets of all links that the wavelength connection passes through;

a first sending module 802, configured to send a request message carrying the first available center frequency set information and the spectrum bandwidth information to the neighboring node in the direction from the local node to the second node;

a first receiving module 803, configured to receive a response message, and extract center frequency information carried in the response message; and

a first cross-connection establishing module 804, configured to establish a wavelength cross-connection based on a spectrum range determined by the center frequency and the spectrum bandwidth.

Embodiment 7: The embodiment of the present invention provides a node device, as shown in FIG. 9, including:

a second receiving module 901, configured to receive a request message, and extract second available center frequency set information and spectrum bandwidth information that are carried in the request message, where the second available center frequency set is an intersection of available center frequency sets of all links that the wavelength connection passes through;
a second processing module 902, configured to obtain the second available center frequency set and a spectrum bandwidth, determined by a first node, of a wavelength connection; and further configured to obtain an available center frequency from the second available center frequency set as a center frequency of the wavelength connection; and
a second cross-connection establishing module 903, configured to establish a wavelength cross-connection based on a spectrum range determined by the center frequency and the spectrum bandwidth.

Embodiment 8: The embodiment of the present invention provides a node device, as shown in FIG. 10, including:

a third receiving module 1001, configured to receive a request message, and extract third available center frequency set information and spectrum bandwidth information that are carried in the request message; and further configured to receive a response message, and extract center frequency information carried in the response message;
a third processing module 1002, configured to obtain a third available center frequency set and a spectrum bandwidth, determined by a first node, of a wavelength connection, where the third available center frequency set is an intersection of available center frequency sets of all links from the first node to the local node that the wavelength connection passes through; further configured to obtain an available center frequency set of a second link according to the spectrum bandwidth, intersect the available center frequency set of the second link and the third available center frequency set to obtain a fourth available center frequency set, and obtain fourth available center frequency set information corresponding to the fourth available center frequency set, where the second link is a link between the local node and a neighboring node in a direction from the first node to a second node; and further configured to obtain a center frequency of the wavelength connection, where the center frequency is an available center frequency obtained by the second node from a second available center frequency set, where the second available center frequency set is an intersection of available center frequency sets of all links that the wavelength connection passes through;
a third sending module 1003, configured to send a request message carrying the fourth available center frequency set information and the spectrum bandwidth information to the neighboring node in the direction from the first node to the second node; and
a third cross-connection establishing module 1004, configured to establish a wavelength cross-connection based on a spectrum range determined by the center frequency and the spectrum bandwidth.

Embodiment 9: The embodiment of the present invention provides a node device, as shown in FIG. 8, including:

a first processing module 801, configured to determine a spectrum bandwidth of a wavelength connection, and obtain first free center frequency set information corresponding to a first free center frequency set of a third link and spectrum bandwidth information corresponding to the spectrum bandwidth, where the third link is a link between the first node and a neighboring node in a direction from the first node to a second node; and further configured to obtain a center frequency of the wavelength connection, where the center frequency is an available center frequency obtained by the second node from a second free center frequency set according to the spectrum bandwidth, and the second free center frequency set is an intersection of free center frequency sets of all links that the wavelength connection passes through;
a first sending module 802, configured to send a request message carrying the first free center frequency set information and the spectrum bandwidth information to the neighboring node in the direction from the first node to the second node;
a first receiving module 803, configured to receive a response message, and extract center frequency information carried in the response message; and
a first cross-connection establishing module 804, configured to establish a wavelength cross-connection based on a spectrum range determined by the center frequency and the spectrum bandwidth.

Embodiment 10: The embodiment of the present invention provides a node device, as shown in FIG. 9, including:

a second receiving module 901, configured to receive a request message, and extract second free center frequency set information and spectrum bandwidth information that are carried in the request message;

a second processing module 902, configured to obtain a second free center frequency set and a spectrum bandwidth, determined by a first node, of a wavelength connection, where the second free center frequency set is an intersection of free center frequency sets of all links that the wavelength connection passes through; and further configured to obtain an available center frequency from the second free center frequency set as a center frequency of the wavelength connection according to the spectrum bandwidth; and

a second cross-connection establishing module 903, configured to establish a wavelength cross-connection based on a spectrum range determined by the center frequency and the spectrum bandwidth.

Embodiment 11: The embodiment of the present invention provides a node device, as shown in FIG. 10, including:

a third receiving module 1001, configured to receive a request message, and extract third free center frequency set information and spectrum bandwidth information that are carried in the request message; and further configured to receive a response message, and extract center frequency information carried in the response message;

a third processing module 1002, configured to obtain a third free center frequency set and a spectrum bandwidth, determined by a first node, of a wavelength connection, where the third free center frequency set is an intersection of free center frequency sets of all links from the first node to the local node that the wavelength connection passes through; further configured to intersect a free center frequency set of a fourth link and the third free center frequency set to obtain a fourth free center frequency set, and obtain fourth free center frequency set information corresponding to the fourth free center frequency set, where the fourth link is a link between the local node and a neighboring node in a direction from the first node to a second node; and further configured to obtain a center frequency of the wavelength connection, where the center frequency is an available center frequency obtained by the second node from a second free center frequency set according to the spectrum bandwidth, and the second free center frequency set is an intersection of free center frequency sets of all links that the wavelength connection passes through;

a third sending module 1003, configured to send a request message carrying the fourth free center frequency set information and the spectrum bandwidth information to the neighboring node in the direction from the first node to the second node; and

a third cross-connection establishing module 1004, configured to establish a wavelength cross-connection based on a spectrum range determined by the center frequency and the spectrum bandwidth.

Embodiment 12: The embodiment of the present invention provides a node device, as shown in FIG. 8, including:

a first processing module 801, configured to determine a spectrum bandwidth of each segment connection on a wavelength connection, and obtain a fifth available center frequency set of a fifth link according to a spectrum bandwidth of a segment connection of the first node, where the fifth link is a link between the first node and a neighboring node in a direction from the local node to a second node; and further configured to obtain fifth available center frequency set information corresponding to the fifth available center frequency set and spectrum bandwidth information corresponding to the spectrum bandwidth of each segment connection on the wavelength connection;

a first sending module 802, configured to send a request message carrying the fifth available center frequency set information and the spectrum bandwidth information to the neighboring node in the direction from the local node to the second node; and further configured to obtain a center frequency of the segment connection of the local node, where the center frequency is an available center frequency obtained by a fourth node between the local node and the second node from a sixth available center frequency set, and the sixth available center frequency set is an intersection of available center frequency sets of all links of the segment connection of the local node;

a first receiving module 803, configured to receive a response message, and extract first center frequency information carried in the response message; and

a first cross-connection establishing module 804, configured to establish a wavelength cross-connection based on a spectrum range determined by the center frequency and spectrum bandwidth of the segment connection of the local node.

Embodiment 13: The embodiment of the present invention provides a node device, as shown in FIG. 9, including:

a second receiving module 901, configured to receive a request message, and extract ninth available center frequency set information and spectrum bandwidth information that are carried in the request message;

a second processing module 902, configured to obtain a ninth available center frequency set and a spectrum bandwidth, determined by a first node, of a segment connection of the local node, where the ninth available center frequency set is an intersection of available center frequency sets of all links that the segment connection of the local node passes through; and further configured to obtain an available center frequency from the ninth available center frequency set as a center frequency of the segment connection of the local node; and

a second cross-connection establishing module 903, configured to establish a wavelength cross-connection based on a spectrum range determined by the center frequency and spectrum bandwidth of the segment connection of the local node.

Embodiment 14: The embodiment of the present invention provides a node device, as shown in FIG. 11, including:

a fourth receiving module 1101, configured to receive a request message, and extract sixth available center frequency set information and first spectrum bandwidth information that are carried in the request message; and further configured to receive a response message, and extract second center frequency information carried in the response message;

a fourth processing module 1102, configured to obtain a sixth available center frequency set, and obtain spectrum bandwidths, determined by a first node, of a first-node-side segment connection of the local node and each segment connection from the local node to a second node, where the sixth available center frequency set is an intersection of available center frequency sets of all links that the first-node-side segment connection of the local node passes through; further configured to obtain an available center frequency from the sixth available center frequency set as a center frequency of the first-node-side segment connection of the local node; further configured to obtain a seventh available center frequency set of a sixth link according to a spectrum bandwidth of the second-node-side segment connection of the local node, where the sixth link is a link between the local node and a neighboring node in a direction from the first node to the second node; obtain seventh available center frequency set information corresponding to the seventh available center frequency set, and obtain second spectrum bandwidth information corresponding to the spectrum bandwidth of each segment connection from the local node to the second node; and further configured to obtain a center frequency of the second-node-side segment connection of the local node, where the center frequency of the second-node-side segment connection of the local node is an available center frequency in an eighth available center frequency set, and the eighth available center frequency set is an intersection of available center frequency sets of all links that the second-node-side segment connection of the fourth node passes through;

a fourth sending module 1103, configured to send a request message carrying the seventh available center frequency set information and the second spectrum bandwidth information to the neighboring node in the direction from the first node to the second node; and

a fourth cross-connection establishing module 1104, configured to determine a first spectrum range based on the center frequency and spectrum bandwidth of the first-node-side segment connection of the local node, determine a second spectrum range based on the center frequency and spectrum bandwidth of the second-node-side segment connection of the local node, and establish a wavelength cross-connection between the first spectrum range and the second spectrum range.

Embodiment 15: The embodiment of the present invention provides a node device, as shown in FIG. 10, including:

a third receiving module 1001, configured to receive a request message, and extract tenth available center frequency set information and spectrum bandwidth information that are carried in the request message; and further configured to receive a response message, and extract third center frequency information carried in the response message;

a third processing module 1002, configured to obtain a ninth available center frequency set, and obtain spectrum bandwidths, determined by a first node, of a segment connection of the third node and each segment connection from the local node to a second node, where the ninth available center frequency set is an intersection of available center frequency sets of all links from the first node or a fourth node to the local node that the segment connection of the local node passes through; further configured to obtain an available center frequency set of a seventh link according to the spectrum bandwidth of the segment connection of the local node, intersect the available center frequency set of the seventh link and the tenth available center frequency set to obtain an eleventh available center frequency set, and obtain eleventh available center frequency set information corresponding to the eleventh available center frequency set, where the seventh link is a link between the third node and a neighboring node in a direction from the first node to the second node; and further configured to obtain a center frequency of the segment connection of the local node, where the center frequency is an available center frequency obtained by the fourth node between the local node and the second node or by the second node from the eleventh available center frequency set, and the eleventh available center frequency set is an intersection of available center frequency sets of all links of the segment connection of the third node;

a third sending module 1003, configured to send a request message carrying the eleventh available center frequency set information and the spectrum bandwidth information to the neighboring node in the direction from the first node to the second node; and

a third cross-connection establishing module 1004, configured to establish a wavelength cross-connection based on a spectrum range determined by the center frequency and spectrum bandwidth of the segment connection of the local node.

Embodiment 16: The embodiment of the present invention provides a node device, as shown in FIG. 8, including:

a first processing module 801, configured to determine a spectrum bandwidth of each segment connection on a wavelength connection, and obtain fifth free center frequency set information corresponding to a fifth free center frequency set of an eighth link and spectrum bandwidth information corresponding to the spectrum bandwidth of each segment connection on the wavelength connection, where the eighth link is a link between the local node and a neighboring node in a direction from the local node to a second node; and further configured to obtain a center frequency of a segment connection of the local node, where the center frequency is an available center frequency obtained by a fourth node between the local node and the second node from a sixth free center frequency set according to a spectrum bandwidth of a segment connection of the first node, where the sixth free center frequency set is an intersection of free center frequency sets of all links that the segment connection of the local node passes through;

a first sending module 802, configured to send a request message carrying the fifth free center frequency set information and the spectrum bandwidth information to the neighboring node in the direction from the local node to the second node;

a first receiving module 803, configured to receive a response message, and extract fifth center frequency information carried in the response message; and

a first cross-connection establishing module 804, configured to establish a wavelength cross-connection based on a spectrum range determined by the center frequency and spectrum bandwidth of the segment connection of the local node.

Embodiment 17: The embodiment of the present invention provides a node device, as shown in FIG. 9, including:

a second receiving module 901, configured to receive a request message, and extract ninth free center frequency set information and spectrum bandwidth information that are carried in the request message;

a second processing module 902, configured to obtain a ninth free center frequency set, and obtain a spectrum bandwidth, determined by a first node, of a segment connection of the local node, where the ninth free center frequency set is an intersection of free center frequency sets of all links that the segment connection of the local node passes through; and further configured to obtain an available center frequency from the ninth free center frequency set as a center frequency of the segment connection of the local node according to the spectrum bandwidth of the segment connection of the local node; and

a second cross-connection establishing module 903, configured to establish a wavelength cross-connection based on a spectrum range determined by the center frequency and spectrum bandwidth of the segment connection of the local node.

Embodiment 18: The embodiment of the present invention provides a node device, as shown in FIG. 11, including:

a fourth receiving module 1101, configured to receive a request message, and extract sixth free center frequency set information and third spectrum bandwidth information that are carried in the request message; and further configured to receive a response message, and extract sixth center frequency information carried in the response message;

a fourth processing module 1102, configured to obtain a sixth free center frequency set, and obtain spectrum bandwidths of a first-node-side segment connection of the local node and each segment connection from the local node to a second node, where the sixth free center frequency set is an intersection of free center frequency sets of all links that the first-node-side segment connection of the local node passes through; further configured to obtain an available center frequency from the sixth free center frequency set as a center frequency of the first-node-side segment connection of the local node according to the spectrum bandwidth of the first-node-side segment connection of the local node; further configured to obtain seventh free center frequency set information corresponding to a seventh free center frequency set of a ninth link, and obtain fourth spectrum bandwidth information corresponding to the spectrum bandwidth of each segment connection from the local node to the second node, where the ninth link is a link between the local node and a neighboring node in a direction from a first node to the second node; and further configured to obtain a center frequency of the second-node-side segment connection of the fourth node, where the center frequency of the second-node-side segment connection of the local node is an available center frequency in the eighth free center frequency set, and the eighth free center frequency set is an intersection of available center frequency sets of all links that the second-node-side segment connection of the local node passes through;

a fourth sending module 1103, configured to send a request message carrying the seventh free center frequency set information and the fourth spectrum bandwidth information to the neighboring node in the direction from the first node to the second node; and

a fourth cross-connection establishing module 1104, configured to determine a third spectrum range based on the center frequency and spectrum bandwidth of the first-node-side segment connection of the local node, determine a fourth spectrum range based on the center frequency and spectrum bandwidth of the second-node-side segment connection of the local node, and establish a wavelength cross-connection between the third spectrum range and the fourth spectrum range.

Embodiment 19: The embodiment of the present invention provides a node device, as shown in FIG. 10, including:

a third receiving module 1001, configured to receive a request message, and extract tenth free center frequency set information and spectrum bandwidth information that are carried in the request message; and further configured to receive a response message, and extract center frequency information carried in the response message;

a third processing module 1002, configured to obtain a tenth free center frequency set, and obtain spectrum bandwidths, determined by a first node, of a segment connection of the local node and each segment connection from the local node to a second node, where the tenth free center frequency set is an intersection of free center frequency sets of all links from the first node or a fourth node to the local node that the segment connection of the local node passes through; further configured to intersect a free center frequency set of a tenth link and the tenth free center frequency set to obtain an eleventh free center frequency set, and obtain eleventh free center frequency set information corresponding to the eleventh free center frequency set, where the tenth link is a link between the local node and a neighboring node in a direction from the first node to the second node; and further configured to obtain a center frequency of the segment connection of the local node, where the center frequency is an available center frequency obtained by the fourth node between the local node and the second node or by the second node from the eleventh free center frequency set according to the spectrum bandwidth of the segment connection of the local node, where the eleventh free center frequency set is an intersection of free center frequency sets of all links that the segment connection of the local node passes through;

a third sending module 1003, configured to send a request message to the neighboring node in the direction from the first node to the second node, where the request message carries the eleventh free center frequency set information and the segment connection of the local node and the spectrum bandwidth information; and

a third cross-connection establishing module 1004, configured to establish a wavelength cross-connection based on a spectrum range determined by the center frequency and spectrum bandwidth of the segment connection of the local node.

The information interaction and execution process between modules of node devices in Embodiment 6 to Embodiment 19 are based on the same conception as the method embodiments of the present invention. For details, reference may be made to the description of the method embodiments of the present invention, which is not further described herein.

By using the node device for establishing a wavelength cross-connection according to the embodiments of the present invention, a wavelength cross-connection of a variable spectrum bandwidth on a node can be automatically established. The implementation is simple and reliability is high.

Embodiment 20: The embodiment of the present invention provides a system for establishing a wavelength cross-connection, as shown in FIG. 12, including at least a first node 1201 and a second node 1202.

The first node 1201 includes a first processing module, a first sending module, a first receiving module, and a first cross-connection establishing module. For details, refer to the first processing module 801, the first sending module 802, the first receiving module 803, and the first cross-connection establishing module 804 in Embodiment 6, which is not further described herein.

The second node 1202 includes a second receiving module, a second processing module, and a second cross-connection establishing module. For details, refer to the second receiving module 901, the second processing module 902, and the second cross-connection establishing module 903 in Embodiment 7, which is not further described herein.

A third node 1203 may further exist between the first node 1201 and the second node 1202, specifically:

the third node 1203 includes a third receiving module, a third processing module, a third sending module, and a third cross-connection establishing module. For details, refer to the third receiving module 1001, the third processing module 1002, the third sending module 1003, and the third cross-connection establishing module 1004 in Embodiment 8, which is not further described herein.

Embodiment 21: The embodiment of the present invention provides a system for establishing a wavelength cross-connection, as shown in FIG. 12, including at least a first node 1201 and a second node 1202.

The first node 1201 includes a first processing module, a first sending module, a first receiving module, and a first cross-connection establishing module. For details, refer to the first processing module 801, the first sending module 802, the first receiving module 803, and the first cross-connection establishing module 804 in Embodiment 9, which is not further described herein.

The second node 1202 includes a second receiving module, a second processing module, and a second cross-connection establishing module. For details, refer to the second receiving module 901, the second processing module 902, and the second cross-connection establishing module 903 in Embodiment 10, which is not further described herein.

A third node 1203 may further exist between the first node 1201 and the second node 1202, specifically: the third node 1203 includes a third receiving module, a third processing module, a third sending module, and a third cross-connection establishing module. For details, refer to the third receiving module 1001, the third processing module 1002, the third sending module 1003, and the third cross-connection establishing module 1004 in Embodiment 11, which is not further described herein.

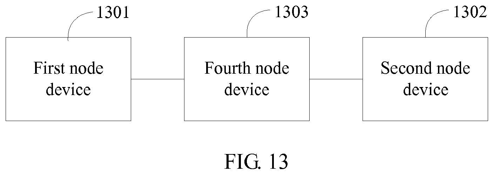

Embodiment 22: The embodiment of the present invention provides a system for establishing a wavelength cross-connection, as shown in FIG. 13, including at least a first node 1301, a second node 1302, and a fourth node 1303.

The first node 1301 includes a first processing module, a first sending module, a first receiving module, and a first cross-connection establishing module. For details, refer to the first processing module 801, the first sending module 802, the first receiving module 803, and the first cross-connection establishing module 804 in Embodiment 12, which is not further described herein.

The fourth node 1303 includes a fourth receiving module, a fourth processing module, a fourth sending module, and a fourth cross-connection establishing module. For details, refer to the fourth receiving module 1101, the fourth processing module 1102, the fourth sending module 1103, and the fourth cross-connection establishing module 1004 in Embodiment 14, which is not further described herein.

The second node 1302 includes a second receiving module, a second processing module, and a second cross-connection establishing module. For details, refer to the second receiving module 901, the second processing module 902, and the second cross-connection establishing module 903 in Embodiment 13, which is not further described herein.

A third node 1304 may further exist between the first node 1301 and the second node 1302, specifically: the third node 1304 includes a third receiving module, a third processing module, a third sending module, and a third cross-connection establishing module. For details, refer to the third receiving module 1001, the third processing module 1002, the third sending module 1003, and the third cross-connection establishing module 1004 in Embodiment 15, which is not further described herein.

Embodiment 23: The embodiment of the present invention provides a system for establishing a wavelength cross-connection, as shown in FIG. 13, including at least a first node 1301, a second node 1302, and a fourth node 1303.

The first node 1301 includes a first processing module, a first sending module, a first receiving module, and a first cross-connection establishing module. For details, refer to the first processing module 801, the first sending module 802, the first receiving module 803, and the first cross-connection establishing module 804 in Embodiment 16, which is not further described herein.

The fourth node 1303 includes a fourth receiving module, a fourth processing module, a fourth sending module, and a fourth cross-connection establishing module. For details, refer to the fourth receiving module 1101, the fourth processing module 1102, the fourth sending module 1103, and the fourth cross-connection establishing module 1004 in Embodiment 18, which is not further described herein.

The second node 1302 includes a second receiving module, a second processing module, and a second cross-connection establishing module. For details, refer to the second receiving module 901, the second processing module 902, and the second cross-connection establishing module 903 in Embodiment 17, which is not further described herein.

A third node 1304 may further exist between the first node 1301 and the second node 1302: the third node 1304 includes a third receiving module, a third processing module, a third sending module, and a third cross-connection establishing module. For details, refer to the third receiving module 1001, the third processing module 1002, the third sending module 1003, and the third cross-connection establishing module 1004 in Embodiment 19, which is not further described herein.

By using the foregoing embodiments, an automatic configuration of a unidirectional wavelength cross-connection or a bidirectional wavelength cross-connection can be implemented. During a configuration of a bidirectional wavelength cross-connection, in the foregoing embodiments, the center frequency is a bidirectional center frequency, and the spectrum bandwidth is a bidirectional spectrum bandwidth; during a configuration of a unidirectional wavelength cross-connection, in the foregoing embodiments, the center frequency is a unidirectional center frequency, and the spectrum bandwidth is a unidirectional spectrum bandwidth.

The response message in the foregoing embodiments may carry or not carry spectrum bandwidth information. If the received response message carries spectrum bandwidth information, it is necessary to check the spectrum bandwidth information with the spectrum bandwidth information carried in the request message, and subsequent steps can be continued only when the pieces of information are consistent.

The route of the wavelength connection may include only a source node and a sink node, and does not include an intermediate node; or may include a source node, a sink node, and one or more intermediate nodes. The foregoing embodiments describe a case in which the route of the wavelength connection includes one intermediate node. In a case in which multiple intermediate nodes exist between the source node and the sink node, processing of each intermediate node is similar to the processing of the intermediate node described in this embodiment, and is not further described herein.

The foregoing embodiments may be implemented by extending a GMPLS (Generalized Multiprotocol Label Switching, Generalized Multiprotocol Label Switching) RSVP-TE (Resource Reservation Protocol with TE, Resource Reservation Protocol with Traffic Engineering) protocol. In the protocol, the Path message is used as a request message; the Resv message is used as a response message; and spectrum bandwidth information, center frequency information, and center frequency set information may be borne by adding or extending the existing GMPLS RSVP-TE signaling.

When the spectrum bandwidth information is carried by the Path message, the spectrum bandwidth information may be borne by an added traffic parameter object or an extended label request object; when the spectrum bandwidth information is carried by the Resv message, the spectrum bandwidth information may be borne by an added traffic parameter object.

The encapsulation format of the payload of the traffic parameter object added in the Path message and Resv message is shown in FIG. 7a, where 32 bits are used to indicate the spectrum bandwidth. Meanings of fields are as follows:

S: bits 0 to 3, used to indicate the bandwidth of a single spectrum unit, with a spectrum interval Slot = 6.25 x S (GHz), for example, indicate Slot = 6.25 GHz if S = 1, and indicate Slot = 12.5 GHz if S = 2;
m: bits 16 to 31, indicating the number of spectrum interval Slots occupied by the spectrum bandwidth, namely, the spectrum bandwidth = Slot x m; and
Reserved: bits 4 to 15, reserved.

According to the foregoing definition, when S = 1 and m = 8, it indicates that the spectrum bandwidth = Slot x m = 6.25 x S x m = 50 GHz.

The encapsulation format of the payload of the label request object extended in the Path message is shown in FIG. 7b. 32 bits are added to the label request object to indicate the spectrum bandwidth, where meanings of S and m are the same as the meanings of the added traffic parameter object.

Meanings of the original fields in the label request object are as follows:

LSP Encap. Type: bits 0 to 7, indicating the coding type of a connection, for example, indicating that the coding type of the connection is wavelength connection when LSP Encap. Type = 8; and
Switching Type: bits 8 to 15, indicating the switching type of a connection.

When the coding type is wavelength, namely, a wavelength connection, a new value is assigned to Switching Type, for example, Switching Type = 151, used to define a wavelength switching type of a variable spectrum bandwidth.

For example, the spectrum bandwidth 50 GHz of the wavelength connection may be indicated by the following parameters in the label request object: LSP Encap. Type = 8, Switching Type = 151, S = 1, and m = 8.

Besides the two packet formats shown in FIG. 7a and FIG. 7b, the spectrum bandwidth value may further be directly borne in the added traffic parameter object or extended label request object, used for the Path message or Resv message to carry spectrum bandwidth information.

In a case in which it is necessary to carry spectrum bandwidth information of a wavelength connection or spectrum bandwidth information of a segment connection, the spectrum bandwidth information is borne by the traffic parameter object or label request object in the Path message or the traffic parameter object in the Resv message.

In a case in which it is necessary to carry spectrum bandwidth information of multiple segment connections, such as steps 501 and 502 in Embodiment 4, the spectrum bandwidth information of one segment connection may be borne by the traffic parameter object or label request object in the Path message or the traffic parameter object in the Resv message, and spectrum bandwidth information of other segment connections may be borne by an explicit route object: defining an explicit route subobject, and inserting one or more explicit route subobjects after the OEO wavelength conversion interface of the explicit route object, where the encapsulation format of the explicit route subobject is the same as the encapsulation format of the traffic parameter object payload shown in FIG. 7a.

When the center frequency information is carried by the Resv message, the center frequency information may be borne by the extended label object. The encapsulation format of the label in the label object in the Resv message is shown in FIG. 7c, and values assigned to parameters of the label are extended. Meanings of fields are as follows:

Grid: bits 0 to 2, indicating a wavelength division type, for example, indicating DWDM when Grid = 1;
C.S.: bits 3 to 6, indicating a spectrum interval, and assigning a new value to C.S., for example, indicating that the spectrum interval is 6.25 GHz when C.S. = 5; and
n: bits 16 to 31, center frequency $f_{n=}$ 193.1 + (n x C.S. x/1000) (THz).

According to the foregoing definition, when the center frequency is 193.05 THz, the center frequency may be indicated by the following parameters of the label in the label object in the Resv message: Grid = 1, C.S. = 5, and n = -8; when the center frequency is 193.1 THz, the center frequency may be indicated by the following parameters of the label set object in the Path message: Grid = 1, C.S. = 5, and n = 0.

When the center frequency set information (an available center frequency set or a free center frequency set) is carried by the Path message, the center frequency set information may be borne by an extended label set object. Each label in the label set object carries a piece of center frequency information. The encapsulation format of each label is shown in FIG. 7c, and meanings of the fields in the label are the same as the meanings of the fields of the label in the foregoing label object.

By using the technical solutions provided by the embodiments of the present invention, a wavelength cross-connection of a variable spectrum bandwidth on a node can be automatically established. The implementation is simple and reliability is high.

A person of ordinary skill in the art may understand that all or a part of the steps of the method embodiments may be implemented by a computer program instructing relevant hardware. The program may be stored in a computer readable storage medium. When the program runs, the processes of the method embodiments are performed. The storage medium may be a magnetic disk, an optical disc, a read-only memory (Read-Only Memory, ROM), or a random access memory (Random Access Memory, RAM) or the like.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for establishing a path, comprising:

    determining (S101a), by a first node (A), a spectrum bandwidth requested for a path, and an available center frequency set of a first link (A-B) according to the spectrum bandwidth, wherein the first link (A-B) is a link between the first node (A) and a neighboring downstream node (B), wherein the path comprises the first node (A), the neighboring downstream node (B) and a second node (C);
    sending (S102a), by the first node (A), a request message carrying first available center frequency set information corresponding to the first available center frequency set, and spectrum bandwidth information corresponding to the spectrum bandwidth to the neighboring downstream node (B); and
    receiving (SI03a), by the first node (A), a response message from the neighboring downstream node (B), obtaining selected center frequency of the path from the response message and establishing a connection on the first node based on a spectrum range determined by the selected center frequency and the spectrum bandwidth;
    wherein the selected center frequency is an available center frequency selected by the second node (C) from an intersected result, the intersected result is acquired by the neighboring downstream node (B) by intersecting the first available center frequency set and an available center frequency set of a link (B-C) between the neighboring downstream node (B) and the second node (C).

2. The method according to claim 1, wherein the spectrum range is determined by the following formula:

$$\text{lowest frequency} = \text{the selected center frequency} - \text{spectrum bandwidth} /2;$$

$$\text{highest frequency} = \text{the selected center frequency} + \text{spectrum bandwidth} /2.$$

3. The method according to claim 1 or 2, the determining an available center frequency set of a first link according to the spectrum bandwidth, comprising:

determining, by the first node (A), according to the spectrum bandwidth, a frequency range for a free center frequency of the first link;
if center frequencies comprised in the frequency range covered by the free center frequency are all free, determining the free frequency is an available center frequency constituting the available center frequency set of the first link.

4. A method for establishing a path, comprising:

receiving (S101b), by a second node (C), a request message from a neighboring upstream node (B); obtaining a second available center frequency set and a spectrum bandwidth requested for a path from the message; wherein the path comprises a first node (A), the neighboring upstream node (B) and the second node (C), and wherein the second available center frequency set is an intersected result that is acquired by the neighboring upstream node (B) by intersecting a first available center frequency set of a link (B-A) between the neighboring upstream node (B) and the first node (A) and a third available center frequency set of a link (B-C) between the neighboring upstream node (B) and the second node (C);
selecting (S 102b), by the second node (C), an available center frequency from the second available center frequency set, and establishing a connection on the second node (C) based on a spectrum range determined by the selected center frequency and the spectrum bandwidth.

5. The method according to claim 4, wherein the spectrum range is determined by the following formula:

$$\text{lowest frequency} = \text{the selected center frequency} - \text{spectrum bandwidth} /2;$$

$$\text{highest frequency} = \text{the selected center frequency} + \text{spectrum bandwidth} /2.$$

6. The method according to claim 4 or 5, wherein the method further comprises:
sending, by the second node (C), a response message to the neighboring upstream node (B), wherein the response message carries selected center frequency information corresponding to the selected center frequency.

7. A method for establishing a path, comprising:

receiving (101c), by a third node (B), a request message from a neighboring upstream node (A); obtaining a first available center frequency set and a spectrum bandwidth of a path from the request message, wherein the path comprises the neighboring upstream node (A), the third node (B) and a neighboring downstream node (C);
acquiring (102c), by the third node (B), a third available center frequency set of a third link, wherein the third link (B-C) is a link between the third node (B) and the neighboring downstream node (C) according to the spectrum bandwidth; intersecting, by the third node (B), the third available center frequency set and the first available center frequency set to obtain a second available center frequency set;
sending (103c), by the third node (B), a request message carrying second available center frequency set information corresponding to the second available center frequency set, and spectrum bandwidth information corresponding to the spectrum bandwidth to the neighboring downstream node (C); and
receiving, by the third node (B), a response message from the neighboring downstream node (C), obtaining selected center frequency of the path from the response message and establishing a connection on the third node (B) based on a spectrum range determined by the selected center frequency and the spectrum bandwidth;
wherein the selected center frequency is an available center frequency selected by the second node (C) from the second available center frequency set.

8. The method according to claim 7, wherein the spectrum range is determined by the following formula:

$$\text{lowest frequency} = \text{the selected center frequency} - \text{spectrum bandwidth} /2;$$

$$\text{highest frequency} = \text{the selected center frequency} + \text{spectrum bandwidth} / 2.$$

**9.** The method according to claim 7 or 8, wherein the method further comprises:
sending, by the third node (B), the response message to the neighboring upstream node (A).

**10.** A first node (A), comprising a processing module, a sending module, a receiving module, and a connection establishing module, wherein:

the processing module (801) is configured to determine a spectrum bandwidth requested for a path, and an available center frequency set of a first link (A-B) according to the spectrum bandwidth, wherein the first link (A-B) is a link between the first node (A) and a neighboring downstream node (B), wherein the path comprises the first device (A), the neighboring downstream node (B) and a second node (C);;
the sending module (802) is configured to send a request message carrying first available center frequency set information corresponding to the first available center frequency set, and spectrum bandwidth information corresponding to the spectrum bandwidth to the neighboring downstream node (B); and
the receiving module (803) is configured to receive a response message from the neighboring downstream node (B), and obtain selected center frequency of the path from the response message;
the connection establishing module (804) is configured to establish a connection on the first node (A) based on a spectrum range determined by the selected center frequency and the spectrum bandwidth;
wherein the selected center frequency is an available center frequency selected by the second node (C) from an intersected result , the intersected result is acquired by the neighboring downstream node (B) by intersecting the first available center frequency set and an available center frequency set of a link (B-C) between the neighboring downstream node (B) and the second node (C).

**11.** The first node according to claim 10, wherein the spectrum range is determined by the following formula:

$$\text{lowest frequency} = \text{the selected center frequency} - \text{spectrum bandwidth} / 2;$$

$$\text{highest frequency} = \text{the selected center frequency} + \text{spectrum bandwidth} / 2.$$

**12.** The first node according to claim 10 or 11, the processing module is configured to:

determine, according to the spectrum bandwidth, a frequency range for a free center frequency of the first link;
if center frequencies comprised in the frequency range covered by the free center frequency are all free, determine the free frequency is an available center frequency constituting the available center frequency set of the first link.

**13.** A second node, comprising a receiving module, a processing module, and a connection establishing module, wherein:

the receiving module (901) is configured to receive a request message from a neighboring upstream node (B), and obtain a second available center frequency set and a spectrum bandwidth requested for a path from the request message; wherein the path comprises a first node (A), the neighboring upstream node (B) and the second node (C), and wherein the second available center frequency set is an intersected result that is acquired by the neighboring upstream node (B) by intersecting a first available center frequency set of a link (B-A) between the neighboring upstream node (B) and the first node (A) and a third available center frequency set of a link (B-C) between the neighboring upstream node (B) and the second node (C);
the processing module (902) is configured to select an available center frequency from the second available center frequency set, and the connection establishing module (903) is configured to establish a connection on the second node (C) based on a spectrum range determined by the selected center frequency and the spectrum bandwidth.

**14.** The second node according to claim 13, wherein the spectrum bandwidth is determined by the following formula:

$$\text{lowest frequency} = \text{the selected center frequency} - \text{spectrum bandwidth} / 2;$$

$$\text{highest frequency} = \text{the selected center frequency} + \text{spectrum bandwidth}/2.$$

**15.** The second node according to claim 13 or 14, wherein the device further comprises a sending module:

the sending module is configured to send a response message to the neighboring upstream node (B), wherein the response message carries selected center frequency information corresponding to the selected center frequency.

**16.** A third node, comprising a receiving module, a processing module, a sending module, and a connection establishing module, wherein:

the receiving module (1001) is configured to receive a request message from a neighboring upstream node (A), and obtain a first available center frequency set and a spectrum bandwidth of a path from the request message, wherein the path comprises the neighboring upstream node (A), the third node (B) and a neighboring downstream node (C);

the processing module (1002) is configured to acquire a third available center frequency set of a third link, wherein the third link (B-C) is a link between the third node (B) and a neighboring downstream node (C) according to the spectrum bandwidth, and intersect the third available center frequency set and the first available center frequency set to obtain a second available center frequency set;

the sending module (1003) is configured to send a request message carrying second available center frequency set information corresponding to the second available center frequency set, and spectrum bandwidth information corresponding to the spectrum bandwidth to the neighboring downstream node (C); and

the receiving module (1001) is configured to receive a response message from the neighboring downstream node (C), and obtain selected center frequency of the path from the response message;

the connection establishing module (1004) is configured to establish a connection on the third node (B) based on a spectrum range determined by the selected center frequency and the spectrum bandwidth;

wherein the selected center frequency is an available center frequency selected by the second node (C) from the second available center frequency set.

**17.** The third node according to claim 16, wherein the spectrum range is determined by the following formula:

$$\text{lowest frequency} = \text{the selected center frequency} - \text{spectrum bandwidth}/2;$$

$$\text{highest frequency} = \text{the selected center frequency} + \text{spectrum bandwidth}/2.$$

**18.** The third node according to claim 16 or 17, wherein the sending module is configured to send the response message to the neighboring upstream node (B).

**Patentansprüche**

**1.** Verfahren zum Einrichten eines Pfads, das Folgendes umfasst:

Bestimmen (S101a), durch einen ersten Knoten (A), einer für einen Pfad angeforderten Spektrumsbandbreite und eines verfügbaren Mittenfrequenzsatzes einer ersten Verbindungsstrecke (A-B) gemäß der Spektrumsbandbreite, wobei die erste Verbindungsstrecke (A-B) eine Verbindungsstrecke zwischen dem ersten Knoten (A) und einem benachbarten "Downstream"-Knoten (B) ist, wobei der Pfad den ersten Knoten (A), den benachbarten "Downstream"-Knoten (B) und einen zweiten Knoten (C) umfasst;

Senden (S102a), durch den ersten Knoten (A), einer Anforderungsnachricht, die dem ersten verfügbaren Mittenfrequenzsatz entsprechende Informationen des ersten verfügbaren Mittenfrequenzsatzes und der Spektrumsbandbreite entsprechende Spektrumsbandbreiteninformationen führt, an den benachbarten "Downstream"-Knoten (B); und

Empfangen (S103a), durch den ersten Knoten (A), einer Antwortnachricht von dem benachbarten "Downstream"-Knoten (B), Erhalten einer ausgewählten Mittenfrequenz des Pfads aus der Antwortnachricht und Herstellen einer Verbindung auf dem ersten Knoten basierend auf einem anhand der ausgewählten Mittenfrequenz und der Spektrumsbandbreite bestimmten Spektrumsbereich;

wobei die ausgewählte Mittenfrequenz eine durch den zweiten Knoten (C) aus einem überschnittenen Ergebnis ausgewählte verfügbare Mittenfrequenz ist, wobei das überschnittene Ergebnis durch den benachbarten "Downstream"-Knoten (B) durch Überschneiden des ersten verfügbaren Mittenfrequenzsatzes und eines verfügbaren Mittenfrequenzsatzes einer Verbindungsstrecke (B-C) zwischen dem benachbarten "Downstream"-Knoten (B) und dem zweiten Knoten (C) erfasst wird.

2. Verfahren nach Anspruch 1, wobei der Spektrumsbereich durch die folgende Formel bestimmt wird:

$$\text{niedrigste Frequenz} = \text{die ausgewählte Mittenfrequenz} - \text{Spektrumsbandbreite}/2;$$

$$\text{höchste Frequenz} = \text{die ausgewählte Mittenfrequenz} + \text{Spektrumsbandbreite}/2.$$

3. Verfahren nach Anspruch 1 oder 2, wobei das Bestimmen eines verfügbaren Mittenfrequenzsatzes einer ersten Verbindungsstrecke gemäß der Spektrumsbandbreite Folgendes umfasst:

Bestimmen, durch den ersten Knoten (A), gemäß der Spektrumsbandbreite, eines Frequenzbereichs für eine freie Mittenfrequenz der ersten Verbindungsstrecke;
wenn alle in dem durch die freie Mittenfrequenz abgedeckten Frequenzbereich enthaltenen Mittenfrequenzen frei sind, Bestimmen, dass die freie Frequenz eine verfügbare Mittenfrequenz ist, die den verfügbaren Mittenfrequenzsatz der ersten Verbindungsstrecke bildet.

4. Verfahren zum Einrichten eines Pfads, das Folgendes umfasst:

Empfangen (S101b), durch einen zweiten Knoten (C), einer Anforderungsnachricht von einem benachbarten "Upstream"-Knoten (B); Erhalten eines zweiten verfügbaren Mittenfrequenzsatzes und einer für einen Pfad angeforderten Spektrumsbandbreite aus der Nachricht; wobei der Pfad einen ersten Knoten (A), den benachbarten "Upstream"-Knoten (B) und den zweiten Knoten (C) umfasst und wobei der zweite verfügbare Mittenfrequenzsatz ein überschnittenes Ergebnis ist, das durch den benachbarten "Upstream"-Knoten (B) durch Überschneiden eines ersten verfügbaren Mittenfrequenzsatzes einer Verbindungsstrecke (B-A) zwischen dem benachbarten "Upstream"-Knoten (B) und dem ersten Knoten (A) und eines dritten verfügbaren Mittenfrequenzsatzes einer Verbindungsstrecke (B-C) zwischen dem benachbarten "Upstream"-Knoten (B) und dem zweiten Knoten (C) erfasst wird;
Auswählen (S102b), durch den zweiten Knoten (C), einer verfügbaren Mittenfrequenz aus dem zweiten verfügbaren Mittenfrequenzsatz und Herstellen einer Verbindung auf dem zweiten Knoten (C) basierend auf einem anhand der ausgewählten Mittenfrequenz und der Spektrumsbandbreite bestimmten Spektrumsbereich.

5. Verfahren nach Anspruch 4, wobei der Spektrumsbereich durch die folgende Formel bestimmt wird:

$$\text{niedrigste Frequenz} = \text{die ausgewählte Mittenfrequenz} - \text{Spektrumsbandbreite}/2;$$

$$\text{höchste Frequenz} = \text{die ausgewählte Mittenfrequenz} + \text{Spektrumsbandbreite}/2.$$

6. Verfahren nach Anspruch 4 oder 5, wobei das Verfahren ferner Folgendes umfasst:
Senden, durch den zweiten Knoten (C), einer Antwortnachricht an den benachbarten "Upstream"-Knoten (B), wobei die Antwortnachricht der ausgewählten Mittenfrequenz entsprechende Informationen der ausgewählten Mittenfrequenz führt.

7. Verfahren zum Einrichten eines Pfads, das Folgendes umfasst:

Empfangen (101c), durch einen dritten Knoten (B), einer Anforderungsnachricht von einem benachbarten "Upstream"-Knoten (A); Erhalten eines ersten verfügbaren Mittenfrequenzsatzes und einer Spektrumsbandbreite eines Pfads aus der Anforderungsnachricht, wobei der Pfad den benachbarten "Upstream"-Knoten (A), den dritten Knoten (B) und einen benachbarten "Downstream"-Knoten (C) umfasst;
Erfassen (102c), durch den dritten Knoten (B), eines dritten verfügbaren Mittenfrequenzsatzes einer dritten Verbindungsstrecke, wobei die dritte Verbindungsstrecke (B-C) eine Verbindungsstrecke zwischen dem dritten Knoten (B) und dem benachbarten "Downstream"-Knoten (C) gemäß der Spektrumsbandbreite ist; Überschneiden, durch den dritten Knoten (B), des dritten verfügbaren Mittenfrequenzsatzes und des ersten verfügbaren Mittenfrequenzsatzes, um einen zweiten verfügbaren Mittenfrequenzsatz zu erhalten;

Senden (103c), durch den dritten Knoten (B), einer Anforderungsnachricht, die dem zweiten verfügbaren Mittenfrequenzsatz entsprechende Informationen des zweiten verfügbaren Mittenfrequenzsatzes und der Spektrumsbandbreite entsprechende Spektrumsbandbreiteninformationen führt, an den benachbarten "Downstream"-Knoten (C); und

Empfangen, durch den dritten Knoten (B), einer Antwortnachricht von dem benachbarten "Downstream"-Knoten (C), Erhalten einer ausgewählten Mittenfrequenz des Pfads aus der Antwortnachricht und Herstellen einer Verbindung auf dem dritten Knoten (B) basierend auf einem anhand der ausgewählten Mittenfrequenz und der Spektrumsbandbreite bestimmten Spektrumsbereich;

wobei die ausgewählte Mittenfrequenz eine durch den zweiten Knoten (C) aus dem zweiten verfügbaren Mittenfrequenzsatz ausgewählte verfügbare Mittenfrequenz ist.

8. Verfahren nach Anspruch 7, wobei der Spektrumsbereich durch die folgende Formel bestimmt wird:

$$\text{niedrigste Frequenz} = \text{die ausgewählte Mittenfrequenz} - \text{Spektrumsbandbreite}/2;$$

$$\text{höchste Frequenz} = \text{die ausgewählte Mittenfrequenz} + \text{Spektrumsbandbreite}/2.$$

9. Verfahren nach Anspruch 7 oder 8, wobei das Verfahren ferner Folgendes umfasst:
Senden, durch den dritten Knoten (B), der Antwortnachricht an den benachbarten "Upstream"-Knoten (A).

10. Erster Knoten (A), der ein Verarbeitungsmodul, ein Sendemodul, ein Empfangsmodul und ein Verbindungsherstellungsmodul umfasst, wobei:

das Verarbeitungsmodul (801) ausgelegt ist zum Bestimmen einer für einen Pfad angeforderten Spektrumsbandbreite und eines verfügbaren Mittenfrequenzsatzes einer ersten Verbindungsstrecke (A-B) gemäß der Spektrumsbandbreite, wobei die erste Verbindungsstrecke (A-B) eine Verbindungsstrecke zwischen dem ersten Knoten (A) und einem benachbarten "Downstream"-Knoten (B) ist, wobei der Pfad die erste Vorrichtung (A), den benachbarten "Downstream"-Knoten (B) und einen zweiten Knoten (C) umfasst;

das Sendemodul (802) ausgelegt ist zum Senden einer Anforderungsnachricht, die dem ersten verfügbaren Mittenfrequenzsatz entsprechende Informationen des ersten verfügbaren Mittenfrequenzsatzes und der Spektrumsbandbreite entsprechende Spektrumsbandbreiteninformationen führt, an den benachbarten "Downstream"-Knoten (B); und

das Empfangsmodul (803) ausgelegt ist zum Empfangen einer Antwortnachricht von dem benachbarten "Downstream"-Knoten (B) und Erhalten einer ausgewählten Mittenfrequenz des Pfads aus der Antwortnachricht;

das Verbindungsherstellungsmodul (804) ausgelegt ist zum Herstellen einer Verbindung auf dem ersten Knoten (A) basierend auf einem anhand der ausgewählten Mittenfrequenz und der Spektrumsbandbreite bestimmten Spektrumsbereich;

wobei die ausgewählte Mittenfrequenz eine durch den zweiten Knoten (C) aus einem überschnittenen Ergebnis ausgewählte verfügbare Mittenfrequenz ist, wobei das überschnittene Ergebnis durch den benachbarten "Downstream"-Knoten (B) durch Überschneiden des ersten verfügbaren Mittenfrequenzsatzes und eines verfügbaren Mittenfrequenzsatzes einer Verbindungsstrecke (B-C) zwischen dem benachbarten "Downstream"-Knoten (B) und dem zweiten Knoten (C) erfasst wird.

11. Erster Knoten nach Anspruch 10, wobei der Spektrumsbereich durch die folgende Formel bestimmt wird:

$$\text{niedrigste Frequenz} = \text{die ausgewählte Mittenfrequenz} - \text{Spektrumsbandbreite}/2;$$

$$\text{höchste Frequenz} = \text{die ausgewählte Mittenfrequenz} + \text{Spektrumsbandbreite}/2.$$

12. Erster Knoten nach Anspruch 10 oder 11, wobei das Verarbeitungsmodul zu Folgendem ausgelegt ist:

Bestimmen, gemäß der Spektrumsbandbreite, eines Frequenzbereichs für eine freie Mittenfrequenz der ersten Verbindungsstrecke;

wenn alle in dem durch die freie Mittenfrequenz abgedeckten Frequenzbereich enthaltenen Mittenfrequenzen frei sind, Bestimmen, dass die freie Frequenz eine verfügbare Mittenfrequenz ist, die den verfügbaren Mittenfrequenzsatz der ersten Verbindungsstrecke bildet.

13. Zweiter Knoten, der ein Empfangsmodul, ein Verarbeitungsmodul und ein Verbindungsherstellungsmodul umfasst, wobei:

das Empfangsmodul (901) ausgelegt ist zum Empfangen einer Anforderungsnachricht von einem benachbarten "Upstream"-Knoten (B) und Erhalten eines zweiten verfügbaren Mittenfrequenzsatzes und einer für einen Pfad angeforderten Spektrumsbandbreite aus der Anforderungsnachricht; wobei der Pfad einen ersten Knoten (A), den benachbarten "Upstream"-Knoten (B) und den zweiten Knoten (C) umfasst und wobei der zweite verfügbare Mittenfrequenzsatz ein überschnittenes Ergebnis ist, das durch den benachbarten "Upstream"-Knoten (B) durch Überschneiden eines ersten verfügbaren Mittenfrequenzsatzes einer Verbindungsstrecke (B-A) zwischen dem benachbarten "Upstream"-Knoten (B) und dem ersten Knoten (A) und eines dritten verfügbaren Mittenfrequenzsatzes einer Verbindungsstrecke (B-C) zwischen dem benachbarten "Upstream"-Knoten (B) und dem zweiten Knoten (C) erfasst wird;

das Verarbeitungsmodul (902) ausgelegt ist zum Auswählen einer verfügbaren Mittenfrequenz aus dem zweiten verfügbaren Mittenfrequenzsatz, und das Verbindungsherstellungsmodul (903) ausgelegt ist zum Herstellen einer Verbindung auf dem zweiten Knoten (C) basierend auf einem anhand der ausgewählten Mittenfrequenz und der Spektrumsbandbreite bestimmten Spektrumsbereich.

14. Zweiter Knoten nach Anspruch 13, wobei die Spektrumsbandbreite durch die folgende Formel bestimmt wird:

$$\text{niedrigste Frequenz} = \text{die ausgewählte Mittenfrequenz} - \text{Spektrumsbandbreite}/2;$$

$$\text{höchste Frequenz} = \text{die ausgewählte Mittenfrequenz} + \text{Spektrumsbandbreite}/2.$$

15. Zweiter Knoten nach Anspruch 13 oder 14, wobei die Vorrichtung ferner ein Sendemodul umfasst:
wobei das Sendemodul ausgelegt ist zum Senden einer Antwortnachricht an den benachbarten "Upstream"-Knoten (B), wobei die Antwortnachricht der ausgewählten Mittenfrequenz entsprechende Informationen der ausgewählten Mittenfrequenz führt.

16. Dritter Knoten, der ein Empfangsmodul, ein Verarbeitungsmodul, ein Sendemodul und ein Verbindungsherstellungsmodul umfasst, wobei:

das Empfangsmodul (1001) ausgelegt ist zum Empfangen einer Anforderungsnachricht von einem benachbarten "Upstream"-Knoten (A) und Erhalten eines ersten verfügbaren Mittenfrequenzsatzes und einer Spektrumsbandbreite eines Pfads aus der Anforderungsnachricht, wobei der Pfad den benachbarten "Upstream"-Knoten (A), den dritten Knoten (B) und einen benachbarten "Downstream"-Knoten (C) umfasst;

das Verarbeitungsmodul (1002) ausgelegt ist zum Erfassen eines dritten verfügbaren Mittenfrequenzsatzes einer dritten Verbindungsstrecke, wobei die dritte Verbindungsstrecke (B-C) eine Verbindungsstrecke zwischen dem dritten Knoten (B) und einem benachbarten "Downstream"-Knoten (C) gemäß der Spektrumsbandbreite ist, und Überschneiden des dritten verfügbaren Mittenfrequenzsatzes und des ersten verfügbaren Mittenfrequenzsatzes, um einen zweiten verfügbaren Mittenfrequenzsatz zu erhalten;

das Sendemodul (1003) ausgelegt ist zum Senden einer Anforderungsnachricht, die dem zweiten verfügbaren Mittenfrequenzsatz entsprechende Informationen des zweiten verfügbaren Mittenfrequenzsatzes und der Spektrumsbandbreite entsprechende Spektrumsbandbreiteninformationen führt, an den benachbarten "Downstream"-Knoten (C); und

das Empfangsmodul (1001) ausgelegt ist zum Empfangen einer Antwortnachricht von dem benachbarten "Downstream"-Knoten (C) und Erhalten einer ausgewählten Mittenfrequenz des Pfads aus der Antwortnachricht;

das Verbindungsherstellungsmodul (1004) ausgelegt ist zum Herstellen einer Verbindung auf dem dritten Knoten (B) basierend auf einem anhand der ausgewählten Mittenfrequenz und der Spektrumsbandbreite bestimmten Spektrumsbereich;

wobei die ausgewählte Mittenfrequenz eine durch den zweiten Knoten (C) aus dem zweiten verfügbaren Mittenfrequenzsatz ausgewählte verfügbare Mittenfrequenz ist.

17. Dritter Knoten nach Anspruch 16, wobei der Spektrumsbereich durch die folgende Formel bestimmt wird:

$$\text{niedrigste Frequenz} = \text{die ausgewählte Mittenfrequenz} - \text{Spektrumsbandbreite/2};$$

$$\text{höchste Frequenz} = \text{die ausgewählte Mittenfrequenz} + \text{Spektrumsbandbreite/2}.$$

18. Dritter Knoten nach Anspruch 16 oder Anspruch 17, wobei das Sendemodul ausgelegt ist zum Senden der Antwortnachricht an den benachbarten "Upstream"-Knoten (B).

**Revendications**

1. Procédé pour établir un chemin, comprenant :

la détermination (S101a), par un premier nœud (A), d'une largeur de bande spectrale demandée pour un chemin, et d'un ensemble de fréquences centrales disponibles d'une première liaison (A-B) en fonction de la largeur de bande spectrale, la première liaison (A-B) étant une liaison entre le premier nœud (A) et un nœud en aval voisin (B), le chemin comprenant le premier nœud (A), le nœud en aval voisin (B) et un deuxième nœud (C) ;
l'envoi (S102a), par le premier nœud (A), d'un message de demande transportant des informations sur le premier ensemble de fréquences centrales disponibles correspondant au premier ensemble de fréquences centrales disponibles, et des informations sur la largeur de bande spectrale correspondant à la largeur de bande spectrale au nœud en aval voisin (B) ; et
la réception (S103a), par le premier nœud (A), d'un message de réponse provenant du nœud en aval voisin (B), l'obtention d'une fréquence centrale sélectionnée du chemin à partir du message de réponse et l'établissement d'une connexion sur le premier nœud sur la base d'une plage spectrale déterminée par la fréquence centrale sélectionnée et la largeur de bande spectrale ;
la fréquence centrale sélectionnée étant une fréquence centrale disponible sélectionnée par le deuxième nœud (C) à partir d'un résultat d'intersection, le résultat d'intersection étant acquis par le nœud en aval voisin (B) par l'intersection du premier ensemble de fréquences centrales disponibles et d'un ensemble de fréquences centrales disponibles d'une liaison (B-C) entre le nœud en aval voisin (B) et le deuxième nœud (C).

2. Procédé selon la revendication 1, la plage spectrale étant déterminée par la formule suivante :

$$\text{fréquence la plus basse} = \text{la fréquence centrale sélectionnée} - \text{largeur de bande spectrale } /2 ;$$

$$\text{fréquence la plus élevée} = \text{la fréquence centrale sélectionnée} + \text{largeur de bande spectrale } /2.$$

3. Procédé selon la revendication 1 ou 2, la détermination d'un ensemble de fréquences centrales disponibles d'une première liaison en fonction de la largeur de bande spectrale comprenant :

la détermination, par le premier nœud (A), en fonction de la largeur de bande spectrale, d'une plage de fréquences pour une fréquence centrale libre de la première liaison ;
si les fréquences centrales comprises dans la plage de fréquences couverte par la fréquence centrale libre sont toutes libres, la détermination de la fréquence libre étant une fréquence centrale disponible constituant l'ensemble de fréquences centrales disponibles de la première liaison.

4. Procédé pour établir un chemin, comprenant :

la réception (S101b), par un deuxième nœud (C), d'un message de demande provenant d'un nœud en amont voisin (B) ; l'obtention d'un deuxième ensemble de fréquences centrales disponibles et d'une largeur de bande spectrale demandée pour un chemin à partir du message ; le chemin comprenant un premier nœud (A), le nœud en amont voisin (B) et le deuxième nœud (C), et le deuxième ensemble de fréquences centrales disponibles étant un résultat d'intersection qui est acquis par le nœud en amont voisin (B) par l'intersection d'un premier ensemble de fréquences centrales disponibles d'une liaison (B-A) entre le nœud en amont voisin (B) et le premier nœud (A) et d'un troisième ensemble de fréquences centrales disponibles d'une liaison (B-C) entre le nœud en amont voisin (B) et le deuxième nœud (C) ;

la sélection (S 102b), par le deuxième nœud (C), d'une fréquence centrale disponible à partir du deuxième ensemble de fréquences centrales disponibles, et l'établissement d'une connexion sur le deuxième nœud (C) sur la base d'une plage spectrale déterminée par la fréquence centrale sélectionnée et la largeur de bande spectrale.

5. Procédé selon la revendication 4, la plage spectrale étant déterminée par la formule suivante :

fréquence la plus basse = la fréquence centrale sélectionnée − largeur de bande spectrale /2 ;

fréquence la plus élevée = la fréquence centrale sélectionnée + largeur de bande spectrale /2.

6. Procédé selon la revendication 4 ou 5, le procédé comprenant en outre :

l'envoi, par le deuxième nœud (C), d'un message de réponse au nœud en amont voisin (B), le message de réponse transportant des informations de fréquence centrale sélectionnée correspondant à la fréquence centrale sélectionnée.

7. Procédé pour établir un chemin, comprenant :

la réception (101c), par un troisième nœud (B), d'un message de demande provenant d'un nœud en amont voisin (A) ; l'obtention d'un premier ensemble de fréquences centrales disponibles et d'une largeur de bande spectrale d'un chemin à partir du message de demande, le chemin comprenant le nœud en amont voisin (A), le troisième nœud (B) et un nœud en aval voisin (C),

l'acquisition (102c), par le troisième nœud (B), d'un troisième ensemble de fréquences centrales disponibles d'une troisième liaison, la troisième liaison (B-C) étant une liaison entre le troisième nœud (B) et le nœud en aval voisin (C) en fonction de la largeur de bande spectrale ; l'intersection, par le troisième nœud (B), du troisième ensemble de fréquences centrales disponibles et du premier ensemble de fréquences centrales disponibles pour obtenir un deuxième ensemble de fréquences centrales disponibles ;

l'envoi (103c), par le troisième nœud (B), d'un message de demande transportant des informations sur le deuxième ensemble de fréquences centrales disponibles correspondant au deuxième ensemble de fréquences centrales disponibles, et des informations sur la largeur de bande spectrale correspondant à la largeur de bande spectrale au nœud en aval voisin (C), et

la réception, par le troisième nœud (B), d'un message de réponse provenant du nœud en aval voisin (C), l'obtention d'une fréquence centrale sélectionnée du chemin à partir du message de réponse et l'établissement d'une connexion sur le troisième nœud (B) sur la base d'une plage spectrale déterminée par la fréquence centrale sélectionnée et la largeur de bande spectrale ;

la fréquence centrale sélectionnée étant une fréquence centrale disponible sélectionnée par le deuxième nœud (C) à partir du deuxième ensemble de fréquences centrales disponibles.

8. Procédé selon la revendication 7, la plage spectrale étant déterminée par la formule suivante :

fréquence la plus basse = la fréquence centrale sélectionnée − largeur de bande spectrale /2 ;

fréquence la plus élevée = la fréquence centrale sélectionnée + largeur de bande spectrale /2.

**9.** Procédé selon la revendication 7 ou 8, le procédé comprenant en outre :
l'envoi, par le troisième nœud (B), du message de réponse au nœud en amont voisin (A).

**10.** Premier nœud (A), comprenant un module de traitement, un module d'envoi, un module de réception et un module d'établissement de connexion,
le module de traitement (801) étant configuré pour déterminer une largeur de bande spectrale demandée pour un chemin, et un ensemble de fréquences centrales disponibles d'une première liaison (A-B) en fonction de la largeur de bande spectrale, la première liaison (A-B) étant une liaison entre le premier nœud (A) et un nœud en aval voisin (B), le chemin comprenant le premier dispositif (A), le nœud en aval voisin (B) et un deuxième nœud (C) ;
le module d'envoi (802) étant configuré pour envoyer un message de demande transportant des informations sur le premier ensemble de fréquences centrales disponibles correspondant au premier ensemble de fréquences centrales disponibles, et des informations sur la largeur de bande spectrale correspondant à la largeur de bande spectrale au nœud en aval voisin (B) ; et
le module de réception (803) étant configuré pour recevoir un message de réponse provenant du nœud en aval voisin (B), et obtenir une fréquence centrale sélectionnée du chemin à partir du message de réponse ;
le module d'établissement de connexion (804) étant configuré pour établir une connexion sur le premier nœud (A) sur la base d'une plage spectrale déterminée par la fréquence centrale sélectionnée et la largeur de bande spectrale ;
la fréquence centrale sélectionnée étant une fréquence centrale disponible sélectionnée par le deuxième nœud (C) à partir d'un résultat d'intersection, le résultat d'intersection étant acquis par le nœud en aval voisin (B) par l'intersection du premier ensemble de fréquences centrales disponibles et d'un ensemble de fréquences centrales disponibles d'une liaison (B-C) entre le nœud en aval voisin (B) et le deuxième nœud (C).

**11.** Premier nœud selon la revendication 10, la plage spectrale étant déterminée par la formule suivante :

$$\text{fréquence la plus basse} = \text{la fréquence centrale sélectionnée} - \text{largeur de bande spectrale} / 2 \, ;$$

$$\text{fréquence la plus élevée} = \text{la fréquence centrale sélectionnée} + \text{largeur de bande spectrale} / 2 .$$

**12.** Premier nœud selon la revendication 10 ou 11, le module de traitement étant configuré pour :

déterminer, en fonction de la largeur de bande spectrale, une plage de fréquences pour une fréquence centrale libre de la première liaison ;
si les fréquences centrales comprises dans la plage de fréquences couverte par la fréquence centrale libre sont toutes libres, déterminer que la fréquence libre est une fréquence centrale disponible constituant l'ensemble des fréquences centrales disponibles de la première liaison.

**13.** Deuxième nœud, comprenant un module de réception, un module de traitement et un module d'établissement de connexion,
le module de réception (901) étant configuré pour recevoir un message de demande provenant d'un nœud en amont voisin (B), et obtenir un deuxième ensemble de fréquences centrales disponibles et une largeur de bande spectrale demandée pour un chemin à partir du message de demande ; le chemin comprenant un premier nœud (A), le nœud en amont voisin (B) et le deuxième nœud (C), et le deuxième ensemble de fréquences centrales disponibles étant un résultat d'intersection qui est acquis par le nœud en amont voisin (B) par l'intersection d'un premier ensemble de fréquences centrales disponibles d'une liaison (B-A) entre le nœud en amont voisin (B) et le premier nœud (A) et d'un troisième ensemble de fréquences centrales disponibles d'une liaison (B-C) entre le nœud en amont voisin (B) et le deuxième nœud (C) ;
le module de traitement (902) étant configuré pour sélectionner une fréquence centrale disponible à partir du deuxième ensemble de fréquences centrales disponibles, et le module d'établissement de connexion (903) étant configuré pour établir une connexion sur le deuxième nœud (C) sur la base d'une plage spectrale déterminée par la fréquence centrale sélectionnée et la largeur de bande spectrale.

**14.** Deuxième nœud selon la revendication 13, la largeur de bande spectrale étant déterminée par la formule suivante :

fréquence la plus basse = la fréquence centrale sélectionnée − largeur de bande spectrale /2 ;

fréquence la plus élevée = la fréquence centrale sélectionnée + largeur de bande spectrale /2.

**15.** Deuxième nœud selon la revendication 13 ou 14, le dispositif comprenant en outre un module d'envoi :
le module d'envoi étant configuré pour envoyer un message de réponse au nœud en amont voisin (B), le message de réponse transportant des informations de fréquence centrale sélectionnée correspondant à la fréquence centrale sélectionnée.

**16.** Troisième nœud, comprenant un module de réception, un module de traitement, un module d'envoi et un module d'établissement de connexion,
le module de réception (1001) étant configuré pour recevoir un message de demande provenant d'un nœud en amont voisin (A), et obtenir un premier ensemble de fréquences centrales disponibles et une largeur de bande spectrale d'un chemin à partir du message de demande, le chemin comprenant le nœud en amont voisin (A), le troisième nœud (B) et un nœud en aval voisin (C) ;
le module de traitement (1002) étant configuré pour acquérir un troisième ensemble de fréquences centrales disponibles d'une troisième liaison, la troisième liaison (B-C) étant une liaison entre le troisième nœud (B) et un nœud en aval voisin (C) en fonction de la largeur de bande spectrale, et réaliser l'intersection du troisième ensemble de fréquences centrales disponibles et du premier ensemble de fréquences centrales disponibles pour obtenir un deuxième ensemble de fréquences centrales disponibles ;
le module d'envoi (1003) étant configuré pour envoyer un message de demande transportant des informations sur le deuxième ensemble de fréquences centrales disponibles correspondant au deuxième ensemble de fréquences centrales disponibles et des informations sur la largeur de bande spectrale correspondant à la largeur de bande spectrale au nœud en aval voisin (C) ; et
le module de réception (1001) étant configuré pour recevoir un message de réponse provenant du nœud en aval voisin (C), et obtenir une fréquence centrale sélectionnée du chemin à partir du message de réponse ;
le module d'établissement de connexion (1004) étant configuré pour établir une connexion sur le troisième nœud (B) sur la base d'une plage spectrale déterminée par la fréquence centrale sélectionnée et la largeur de bande spectrale ;
la fréquence centrale sélectionnée étant une fréquence centrale disponible sélectionnée par le deuxième nœud (C) à partir du deuxième ensemble de fréquences centrales disponibles.

**17.** Troisième nœud selon la revendication 16, la plage spectrale étant déterminée par la formule suivante :

fréquence la plus basse = la fréquence centrale sélectionnée − largeur de bande spectrale /2 ;

fréquence la plus élevée = la fréquence centrale sélectionnée + largeur de bande spectrale /2.

**18.** Troisième nœud selon la revendication 16 ou 17, le module d'envoi étant configuré pour envoyer le message de réponse au nœud en amont voisin (B).

A first node determines a spectrum bandwidth of a wavelength connection, and obtains a first available center frequency set of a first link according to the spectrum bandwidth ⟋ S101a

The first node obtains first available center frequency set information corresponding to the first available center frequency set and spectrum bandwidth information corresponding to the spectrum bandwidth, and sends a request message carrying the first available center frequency set information and the spectrum bandwidth information to the neighboring node in the direction from the first node to the second node ⟋ S102a

The first node receives a response message, extracts center frequency information carried in the response message, obtains a center frequency of the wavelength connection, and establishes a wavelength cross-connection based on a spectrum range determined by the center frequency and the spectrum bandwidth ⟋ S103a

FIG. 1a

A second node receives a request message, extracts second available center frequency set information and spectrum bandwidth information that are carried in the request message, and obtains a second available center frequency set and a spectrum bandwidth, determined by a first node, of a wavelength connection ⟋ S101b

The second node obtains an available center frequency from the second available center frequency set as a center frequency of the wavelength connection, and establishes a wavelength cross-connection based on a spectrum range determined by the center frequency and the spectrum bandwidth ⟋ S102b

FIG. 1b

A third node receives a request message, extracts third available center frequency set information and spectrum bandwidth information that are carried in the request message, and obtains a third available center frequency set and a spectrum bandwidth, determined by a first node, of a wavelength connection ⟋ S101c

The third node obtains an available center frequency set of a second link according to the spectrum bandwidth, intersects the available center frequency set of the second link and the third available center frequency set to obtain a fourth available center frequency set, and obtains fourth available center frequency set information corresponding to the fourth available center frequency set; and the third node sends a request message carrying the fourth available center frequency set information and the spectrum bandwidth information to a neighboring node in a direction from the first node to a second node ⟋ S102c

The third node receives a response message, extracts center frequency information carried in the response message, obtains a center frequency of the wavelength connection, and establishes a wavelength cross-connection based on a spectrum range determined by the center frequency and the spectrum bandwidth ⟋ S103c

FIG. 1c

A first node determines a spectrum bandwidth of a wavelength connection, obtains first free center frequency set information corresponding to a first free center frequency set of a third link and spectrum bandwidth information corresponding to the spectrum bandwidth, and sends a request message carrying the first free center frequency set information and the spectrum bandwidth information to a neighboring node in a direction from the first node to a second node ⟋ S101d

The first node receives a response message, extracts center frequency information carried in the response message, obtains a center frequency of the wavelength connection, and establishes a wavelength cross-connection based on a spectrum range determined by the center frequency and the spectrum bandwidth ⟋ S102d

FIG. 1d

A second node receives a request message, extracts second free center frequency set information and spectrum bandwidth information that are carried in the request message, and obtains a second free center frequency set and a spectrum bandwidth, determined by a first node, of a wavelength connection — S101e

The second node obtains an available center frequency from the second free center frequency set as a center frequency of the wavelength connection according to the spectrum bandwidth, and establishes a wavelength cross-connection based on a spectrum range determined by the center frequency and the spectrum bandwidth — S102e

FIG. 1e

A third node receives a request message, extracts third free center frequency set information and spectrum bandwidth information that are carried in the request message, and obtains a third free center frequency set and a spectrum bandwidth, determined by a first node, of a wavelength connection — S101f

The third node intersects a free center frequency set of a fourth link and the third free center frequency set to obtain a fourth free center frequency set, and obtains fourth free center frequency set information corresponding to the fourth free center frequency set; and the third node sends a request message carrying the fourth free center frequency set information and the spectrum bandwidth information to a neighboring node in a direction from the first node to a second node — S102f

The third node receives a response message, extracts center frequency information carried in the response message, obtains a center frequency of the wavelength connection, and establishes a wavelength cross-connection based on a spectrum range determined by the center frequency and the spectrum bandwidth — S103f

FIG. 1f

A first node determines a spectrum bandwidth of each segment connection on a wavelength connection, and obtains a fifth available center frequency set of a fifth link according to a spectrum bandwidth of a segment connection of the first node — S101g

The first node obtains fifth available center frequency set information corresponding to the fifth available center frequency set and spectrum bandwidth information corresponding to the spectrum bandwidth of each segment connection on the wavelength connection, and sends a request message carrying the fifth available center frequency set information and the spectrum bandwidth information to the neighboring node in the direction from the first node to the second node — S102g

The first node receives a response message, extracts first center frequency information carried in the response message, obtains a center frequency of the segment connection of the first node, and establishes a wavelength cross-connection based on a spectrum range determined by the center frequency and spectrum bandwidth of the segment connection of the first node — S103g

**FIG. 1g**

A second node receives a request message, extracts ninth available center frequency set information and spectrum bandwidth information that are carried in the request message, and obtains a ninth available center frequency set and a spectrum bandwidth, determined by the first node, of a segment connection of the second node — S101h

The second node obtains an available center frequency from the ninth available center frequency set as a center frequency of the segment connection of the second node, and establishes a wavelength cross-connection based on a spectrum range determined by the center frequency and spectrum bandwidth of the segment connection of the second node — S102h

**FIG. 1h**

A fourth node receives a request message, extracts sixth available center frequency set information and first spectrum bandwidth information that are carried in the request message, obtains a sixth available center frequency set, and obtains spectrum bandwidths, determined by a first node, of a first-node-side segment connection of the fourth node and each segment connection from the fourth node to a second node    S101i

The fourth node obtains an available center frequency from the sixth available center frequency set as a center frequency of the first-node-side segment connection of the fourth node    S102i

The fourth node obtains a seventh available center frequency set of a sixth link according to a spectrum bandwidth of a second-node-side segment connection of the fourth node; obtains seventh available center frequency set information corresponding to the seventh available center frequency set, obtains second spectrum bandwidth information corresponding to the spectrum bandwidth of each segment connection from the fourth node to the second node, and sends a request message carrying the seventh available center frequency set information and the second spectrum bandwidth information to a neighboring node in a direction from the first node to the second node    S103i

The fourth node receives a response message, extracts second center frequency information carried in the response message, obtains a center frequency of the second-node-side segment connection of the fourth node, determines a first spectrum range based on the center frequency and spectrum bandwidth of the first-node-side segment connection of the fourth node, determines a second spectrum range based on the center frequency and spectrum bandwidth of the second-node-side segment connection of the fourth node, and establishes a wavelength cross-connection between the first spectrum range and the second spectrum range    S104i

FIG. 1i

A third node receives a request message, extracts tenth available center frequency set information and spectrum bandwidth information that are carried in the request message, and obtains a ninth available center frequency set, obtains spectrum bandwidths, determined by a first node, of a segment connection of the third node and each segment connection from the third node to a second node

S101j

The third node obtains an available center frequency set of a seventh link according to the spectrum bandwidth of the segment connection of the third node, intersects the available center frequency set of the seventh link and a tenth available center frequency set to obtain an eleventh available center frequency set, and obtains eleventh available center frequency set information corresponding to the eleventh available center frequency set; and the third node sends a request message carrying the eleventh available center frequency set information and the spectrum bandwidth information to a neighboring node in a direction from the first node to the second node

S102j

The third node receives a response message, extracts third center frequency information carried in the response message, obtains a center frequency of the segment connection of the third node, and establishes a wavelength cross-connection based on a spectrum range determined by the center frequency and spectrum bandwidth of the segment connection of the third node

S103j

FIG. 1j

A first node determines a spectrum bandwidth of each segment connection on a wavelength connection, obtains fifth free center frequency set information corresponding to a fifth free center frequency set of an eighth link and spectrum bandwidth information corresponding to the spectrum bandwidth of each segment connection on the wavelength connection, and sends a request message carrying the fifth free center frequency set information and the spectrum bandwidth information to a neighboring node in a direction from the first node to a second node

S101k

The first node receives a response message, extracts fifth center frequency information carried in the response message, obtains a center frequency of a segment connection of the first node, and establishes a wavelength cross-connection based on a spectrum range determined by the center frequency and spectrum bandwidth of the segment connection of the first node

S102k

FIG. 1k

A second node receives a request message, extracts ninth free center frequency set information and spectrum bandwidth information that are carried in the request message, obtains a ninth free center frequency set, and obtains a spectrum bandwidth, determined by a first node, of a segment connection of the second node

S1011

The second node obtains an available center frequency from the ninth free center frequency set as a center frequency of the segment connection of the second node according to the spectrum bandwidth of the segment connection of the second node, and establishes a wavelength cross-connection based on a spectrum range determined by the center frequency and spectrum bandwidth of the segment connection of the second node

S1021

FIG. 11

A fourth node receives a request message, extracts sixth free center frequency set information and third spectrum bandwidth information that are carried in the request message, obtains a sixth free center frequency set, and obtains spectrum bandwidths of a first-node-side segment connection of the fourth node and each segment connection from the fourth node to a second node ⌐S101m

The fourth node obtains an available center frequency from the sixth free center frequency set as a center frequency of the first-node-side segment connection of the fourth node according to the spectrum bandwidth of the first-node-side segment connection of the fourth node ⌐S102m

The fourth node obtains seventh free center frequency set information corresponding to a seventh free center frequency set of a ninth link, obtains fourth spectrum bandwidth information corresponding to the spectrum bandwidth of each segment connection from the fourth node to the second node, and sends a request message carrying the seventh free center frequency set information and the fourth spectrum bandwidth information to a neighboring node in a direction from the first node to the second node ⌐S103m

The fourth node receives a response message, extracts sixth center frequency information carried in the response message, obtains a center frequency of a second-node-side segment connection of the fourth node, determines a third spectrum range based on the center frequency and spectrum bandwidth of a first-node-side segment connection of the fourth node, determines a fourth spectrum range based on the center frequency and spectrum bandwidth of the second-node-side segment connection of the fourth node, and establishes a wavelength cross-connection between the third spectrum range and the fourth spectrum range ⌐S104m

FIG. 1m

A third node receives a request message, extracts tenth free center frequency set information and spectrum bandwidth information that are carried in the request message, obtains a tenth free center frequency set, and obtains spectrum bandwidths, determined by a first node, of a segment connection of the third node and each segment connection from the third node to a second node — S101n

The third node intersects a free center frequency set of a tenth link and the tenth free center frequency set to obtain an eleventh free center frequency set, and obtains eleventh free center frequency set information corresponding to the eleventh free center frequency set; and the third node sends a request message to a neighboring node in a direction from the first node to a second node, where the request message carries the eleventh free center frequency set information and the spectrum bandwidth information of the segment connection of the third node and each segment connection from the third node to the second node — S102n

The third node receives a response message, extracts center frequency information carried in the response message, obtains a center frequency of the segment connection of the third node, and establishes a wavelength cross-connection based on a spectrum range determined by the center frequency and spectrum bandwidth of the segment connection of the third node — S103n

FIG. 1n

$f_{-8} = 193.05THz$      $f_0 = 193.1THz$    $f_7 = 193.14375THz$
$n = -8$           $n = 0$        $n = 7$

FIG. 2

Interface 1 │A│ Interface 2      Interface 3 │B│

Interface 10        Interface 4

Interface 9        Interface 5

│D│    Interface 8     Interface 7 │C│ Interface 6

FIG. 3

$f_0 = 193.1THz$

$f_n$ (n = -14 -13 -12 -11 -10 -9 -8 -7 -6 -5 -4 -3 -2 -1 0 1 2 3 4 5 6 7 8 9 10 11 12)

Free spectrum resources

$f_{-9} = 193.04375THz$          $f_4 = 193.125THz$

FIG. 4a

$f_0 = 193.1THz$

$f_n$ (n = -14 -13 -12 -11 -10 -9 -8 -7 -6 -5 -4 -3 -2 -1 0 1 2 3 4 5 6 7 8 9 10 11 12)

Free spectrum resources

$f_{-7} = 193.05625THz$          $f_3 = 193.11875THz$

FIG. 4b

FIG. 5

FIG. 6a

FIG. 6b

$f_0 = 193.1\,THz$

$f_n$ (n = -14 -13 -12 -11 -10 -9 -8 -7 -6 -5 -4 -3 -2 -1 0 1 2 3 4 5 6 7 8 9 10 11 12)

Free spectrum resources

$f_{-4} = 193.075\,THz$

$f_8 = 193.15\,THz$

FIG. 6c

| 0 | | 1 | | 2 | | 3 |
|---|---|---|---|---|---|---|
| 0 1 2 3 | 4 5 6 7 8 9 0 1 2 3 4 5 6 7 8 9 0 1 2 3 4 5 6 7 8 9 0 1 |||||||
| S | Reserved | | | | m | |

FIG. 7a

| 0 | | 1 | | 2 | | 3 |
|---|---|---|---|---|---|---|
| 0 1 2 3 4 5 6 7 | 8 9 0 1 2 3 4 5 | 6 7 8 9 0 1 2 3 4 5 6 7 8 9 0 1 |||||
| LSP Encap. Type | Switching Type | G-PID ||||| 
| S | Reserved | m |||||

FIG. 7b

| 0 | | 1 | | 2 | | 3 |
|---|---|---|---|---|---|---|
| 0 1 2 | 3 4 5 6 7 8 9 0 | 1 2 3 4 5 6 7 8 9 0 1 2 3 4 5 6 7 8 9 0 1 |||||
| Grid | C.S. | Identifier | | n | | |

FIG. 7c

```
     ┌─ 802              ┌─ 801                  ┌─ 803
┌──────────────┐   ┌──────────────┐      ┌──────────────┐
│ First sending│───│First processing│────│First receiving│
│   module     │   │   module     │      │   module     │
└──────────────┘   └──────┬───────┘      └──────────────┘
                          │    ┌─ 804
                   ┌──────────────────┐
                   │First cross-connection│
                   │establishing module  │
                   └──────────────────┘
```

FIG. 8

```
     ┌─ 902                  ┌─ 901
┌──────────────┐      ┌──────────────┐
│Second processing│───│Second receiving│
│   module     │      │   module     │
└──────┬───────┘      └──────────────┘
       │    ┌─ 903
┌──────────────┐
│  Second cross-   │
│   connection     │
│establishing module│
└──────────────┘
```

FIG. 9

FIG. 10

FIG. 11

FIG. 12

1301              1303              1302

| First node device | Fourth node device | Second node device |
|---|---|---|

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009060512 A1

- WO 0076105 A1

**Non-patent literature cited in the description**

- A Contention Detection Scheme for Lightpath Restoration in GMPLS Networks. **SAMBO N et al.** IEEE COMMUNICATIONS LETTERS. IEEE SERVICE CENTER, 01 October 2007, vol. 11, 820-822